Europäisches Patentamt

European Patent Office

Office européen des brevets

(19)

(11) EP 1 382 906 A2

## (12) EUROPEAN PATENT APPLICATION

(43) Date of publication:
21.01.2004 Bulletin 2004/04

(51) Int Cl.⁷: F23G 5/50

(21) Application number: 03078136.3

(22) Date of filing: 02.10.1997

(84) Designated Contracting States:
BE DE DK FR GB

(30) Priority: 26.03.1997 JP 7356197

(62) Document number(s) of the earlier application(s) in accordance with Art. 76 EPC:
97942222.7 / 0 971 169

(71) Applicant: NKK CORPORATION
Tokyo 100 (JP)

(72) Inventors:
• Kuroda, Manabu, NKK Corporation
Tokyo 100 (JP)
• Fujii, Satochi, NKK Corporation
Tokyo 100 (JP)

• Nagano, Hideki, NKK Corporation
Tokyo 100 (JP)
• Miyazawa, Kunio, NKK corporation
Tokyo 100 (JP)
• Yokoyama, Takashi, NKK Corporation
Tokyo 100 (JP)

(74) Representative:
Miller, James Lionel Woolverton et al
Kilburn & Strode,
20 Red Lion Street
London WC1R 4PJ (GB)

Remarks:
This application was filed on 03 - 10 - 2003 as a divisional application to the application mentioned under INID code 62.

## (54) Combustion control method and apparatus for waste incinerators

(57) The present invention presents a combustion control method of a refuse incinerator for the purpose of decreasing CO, NOx concentration and dioxins in exhaust gas. Accordingly, on the basis of the measured values of principal flue thermometer, O2 densitometer, CO densitpmeter and NOx densitometer, the quantity of secondary combustion air is controlled so as to suppress the generation of NOx, and said quantity of secondary combustion air is adjusted in accordance with the O2 concentration for minimising the concetration of percursors of dioxins, whereby the concentration of precursors of dioxins is estimated from the mutual relation of the concentration of said precursors of dioxins and O2 concentration in said exhaust gas, so as to suppress the generation of dioxins in said exhaust gas.
A combustion control apparatus of a refuse incinerator to varry out the control method according to the invention is also presented.

FIG. 1

Printed by Jouve, 75001 PARIS (FR)

**Description**

TECHNICAL FIELD

The present invention relates to a combustion control method of fire grate type refuse incinerator and an apparatus used therein.

BACKGROUND ART

The municipal refuse incinerator has an important role of treating a variety of wastes discharged in the social life. In addition, it has been attempted to utilize the energy of refuse effectively by generating electric power from the steam by making use of the heat generated from combustion of refuse.

In a refuse incinerator, the refuse is intermittently charged in a hopper by a crane at intervals of scores of minutes to be stored temporarily. Beneath the hopper, a precombustion grate serving also as feeder is provided, and the refuse is supplied into the furnace at a specific feed rate. The supplied refuse is burned by primary air blown in from beneath each fire grate on several stages of fire grates, and is discharged as ash behind the furnace. The final stage of these fire grates is the post-incinerator grate.

On the other hand, secondary air is blown in above the combustion zone, and unburnt component is oxidized and overheating of furnace is prevented at the same time. A partition wall is installed above the blow inlet so that the secondary air may be mixed well with the combustion gas without directly flowing toward the furnace outlet. The combustion gas detours around this partition wall and flows upward in the furnace, and the detour route at the front side of the furnace of the partition wall is called the subsidiary flue, and the detour route at the rear side is understood as the main flue. Flows of combustion gas passing through both flues are merged in a mixing chamber above the partition wall. The purpose of the mixing chamber is to further remove the unburnt component in the combustion gas ahead thereof, and it is also known as secondary combustion chamber. The combustion gas occurring behind the furnace, that is, in the post-incineration grate mostly passes through the main flue to enter the mixing chamber. The gas leaving the mixing chamber passes through the heat exchanger installed at the furnace outlet, and is exhausted after the reserved energy is recovered.

In such refuse incinerator, generally, the refuse feed speed or air feed rate into the furnace, exhaust gas temperature, and exhaust gas composition had been controlled by determining each standard value every time refuse is charged into the hopper.

Recently, moreover, as the combustion quantity increases, it is more and more important to suppress generation of exhaust gas components, in particular, harmful components, such as dioxins and CO, and their strict control is demanded.

For this purpose, every effort is made to realize complete combustion by long-time retention of combustion gas in high temperature state (over 800°C), and sufficient mixing of air and gas generated by combustion in the flues and mixing chamber.

In order to satisfy these conditions, in addition to setting of references when charging refuse, by reference to the CO concentration representing the unburnt component in the exhaust gas, it is controlled to suppress its concentration.

Hitherto, as its control method, it has been proposed to measure the CO concentration or $O_2$ concentration in the exhaust gas in the furnace, control the flow rate of the secondary air to be blown into the secondary combustion chamber mainly on the basis of the measurement to burn the unburnt component completely, and adjust the flow rate of the primary air auxiliarily. For example, as disclosed in Japanese Patent Application Laid-open No. 5-248618, the secondary air quantity is controlled so as to maintain the combustion gas temperature at the post-incineration zone side at reference temperature, and if lower than the reference temperature, the $O_2$ concentration in the combustion gas at the post-incineration zone side is measured, and the primary air is decreased if $O_2$ is excessive, thereby controlling the CO concentration.

However, properties and components of refuse are not constant, and it may be already burnt to ashes when reaching the post-incineration grate, or much unburnt combustible may be contained to the contrary. Still more, such refuse state is not always changed gradually, and, not rarely, it may be changed suddenly.

For example, when hardly combustible waste is sent into the furnace right after freely combustible waste, the deposit on the post-incineration grate changes from ash to unburnt waste. When the unburnt waste is high in content, the combustion gas temperature at the post-incineration zone side is higher, but the air necessary for combustion is insufficient, and CO and other unburnt components are generated. In this case, unless combustion of unburnt waste is promoted by increasing the flow rate of the primary air to be supplied into the post-incineration grate, that is, the post-incineration air quantity, the unburnt waste on the post-incineration grate cannot be completely burned down to ashes. In this case, it is not a radical solution if the complete combustion of unburnt combustible depends only on secondary air.

It was thus not possible to control the combustion condition depending on the state of the deposit on the post-incineration grate and suppress the unburnt combustible such as CO in the exhaust gas.

It is hence a primary object of the present invention to burn completely by primary combustion to suppress CO and other unburnt combustible in the exhaust gas by controlling the combustion condition adaptively to the state of the deposit on the post-incineration grate.

Recently, moreover, it is an important subject to reduce the NOx concentration in the exhaust gas generated by incineration of waste and the CO concentration which is said to be closely related with dioxins. Accordingly, to reduce the NOx concentration, non-catalytic denitrification method by using ammonia, catalytic denitrification method, and method of spraying water into furnace are proposed. On the other hand, to reduce the CO concentration, operating methods for controlling the following elements are employed.

1) To maintain exhaust gas temperature above $800°C$.
2) To keep a long retention time of exhaust gas in high temperature state.
3) To stir exhaust gas sufficiently in the flue.

Water spraying in the furnace is initially intended to lower the combustion temperature, when the combustion temperature becomes high in the furnace due to variation of refuse components, in order to prevent the ash from melting and adhering to the furnace wall as clinker.

As operating methods for reducing NOx and CO, methods of manipulating water spray are employed. For example, as proposed in Japanese Patent Application Laid-open No. 60-162116, by spraying water in the furnace, the refuse is fired without raising the combustion temperature so that the NOx is reduced, and by spraying water in a jet form, mixing performance of exhaust gas is increased, and the CO concentration in the gas is reduced.

Properties and components of refuse charged into the hopper of the incinerator are not constant. Therefore, when the refuse in the hopper is supplied into the furnace, the heat value supplied by the refuse is not constant, and hence the temperature of the exhaust gas generated by incineration of refuse fluctuates, which may lead to generation of CO or other unburnt gas or NOx. What is more, it has been regarded as a difficult problem to reduce CO or other unburnt component and NOx in the exhaust gas at the same time. If the furnace temperature is maintained high in order to burn completely the unburnt combustible such as CO in the exhaust gas, the NOx concentration increases, and still worse the ash is melted and adhered to the wall as clinker. On the other hand, when the refuse combustion temperature is lowered by spraying water in the furnace in order to lower the NOx concentration, the temperature in the furnace is lowered, and CO and unburnt combustible in the exhaust gas are more likely to be generated.

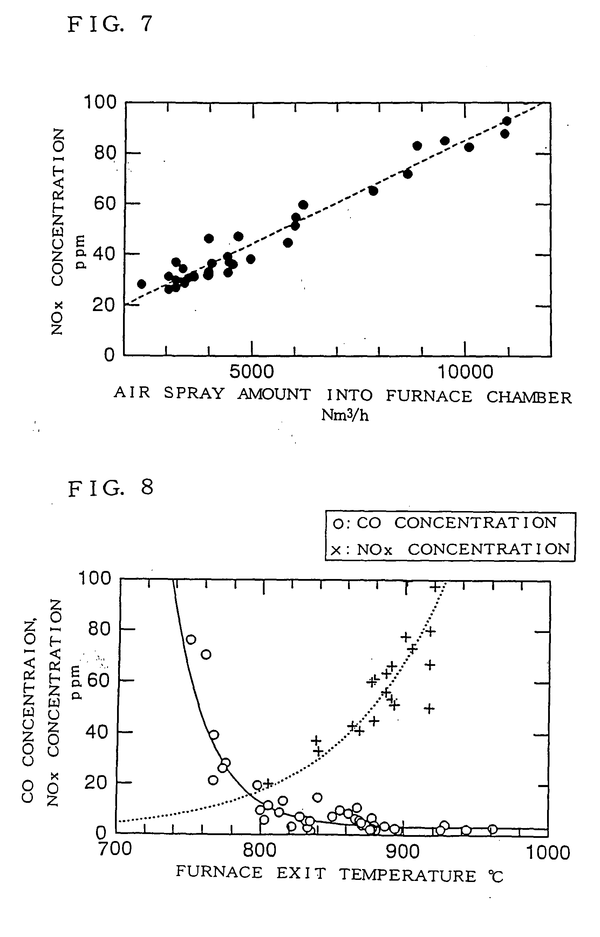

Therefore, in the conventional control method, the unburnt component is decreased by improving the mixing performance by increasing the jet flow by water and compressed air. However, as shown in Fig. 7, which is a characteristic diagram representing the relation between the NOx concentration and the air injection amount into the furnace chamber when the air injection amount into the furnace chamber increases, the NOx concentration climbs up. In the conventional control method, yet, since the water volume is controlled when the furnace exit temperature reaches a preset upper limit, it is impossible to control at a sufficient precision depending on slight combustion changes of refuse quality or the like.

Accordingly, it is also an object of the present invention to present a method of suppressing NOx and unburnt components in the exhaust gas in the refuse incinerator capable of stabilizing the furnace temperature and decreasing NOx and CO in the exhaust gas.

As other operating method for decreasing the CO concentration, a method of manipulating the secondary combustion air quantity is understood. For example, as disclosed in Japanese Patent Application Laid-open No. 7-332642, by measuring the furnace exit temperature and oxygen concentration in the exhaust gas, and manipulating the secondary combustion air quantity so as to maintain the measurements at target values, complete combustion of refuse is further promoted to decrease the CO concentration in the exhaust gas.

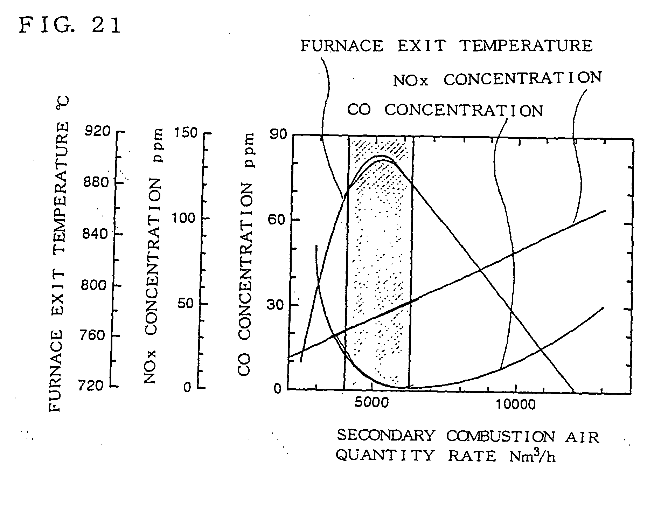

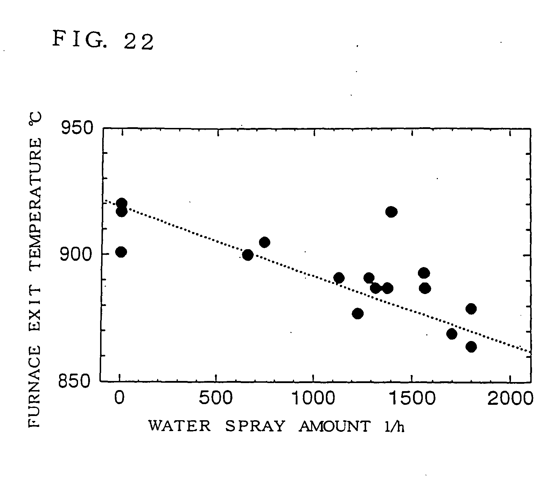

As shown in the characteristic diagram representing the relation of the furnace exit temperature, CO concentration and NOx concentration in Fig. 8, when the furnace exit temperature is maintained high for the purpose of complete combustion of CO and other unburnt combustible in the exhaust gas, although the CO concentration is lowered, the NOx concentration is raised to the contrary. On the other hand, as shown in the characteristic diagram representing the relation of secondary combustion air quantity, CO concentration, NOx concentration, and furnace exit temperature in Fig. 21, when the secondary combustion air quantity is increased, the NOx concentration increases, and therefore, depending on the state of combustion, if an excessive secondary combustion air is supplied for the purpose of complete combustion, the NOx concentration is increased. On the other hand, when the water spray into the furnace is increased to lower the combustion temperature in order to decrease the NOx concentration, as shown in the characteristic diagram of water spray amount and furnace exit temperature in Fig. 22, the furnace exit temperature declines, and CO and other unburnt components in the exhaust gas are likely to be generated.

That is, in the conventional control method intended to decrease only the CO and other unburnt components in the exhaust gas by manipulating the secondary combustion air quantity, there is a limit to decrease the NOx concentration at the same time. Incidentally, the result of measurement of dioxins in the exhaust gas is obtained by analyzing the exhaust gas inspired for 4 hours. Therefore, if the combustion state in the furnace changes frequently, the inspiration of exhaust gas for 4 hours is a long time, and it is not known what point of combustion state change during inspiration of exhaust gas contributes most to generation of dioxins.

Therefore, it is a further object of the present invention to present a method of suppressing NOx and unburnt components in the exhaust gas in the refuse incinerator capable of decreasing NOx, CO, dioxins and other unburnt components in the exhaust gas at the same time.

In the fire grate type refuse incinerator, municipal refuse is burned by primary combustion air blown in from the fire grate, and secondary combustion air blown in near the furnace exit. The automatic combustion control device in such refuse incinerator is intended to control the secondary combustion air quantity, on the basis of reduction of CO concentration, one of harmful substances in the exhaust gas. More specifically, for complete combustion of unburnt components in the secondary combustion zone, by measuring the furnace exit temperature, and $O_2$ and CO concentrations in the exhaust gas by gas analyzers, the data are entered in the control device for used in feedback control, and the feed rate of the secondary combustion air is adjusted, and the temperature in the secondary combustion zone is kept high, so that an appropriate $O_2$ concentration is maintained.

Decrease of CO concentration by such adjustment of secondary combustion air quantity has been believed to be effective also for decrease of concentration of dioxins of which environmental pollution is recently posing problems. That is, measurement of dioxins requires expensive analyzing instruments and advanced technology, and they cannot be monitored directly. Therefore, as a substitute measure, it has been considered effective to monitor the CO concentration which is a representative index of unburnt gas and is correlated with dioxins.

Fig. 43 shows an incinerator disclosed in Japanese Patent Application Laid-open No. 4-324015. In the diagram, an incinerator 330 is composed of a combustion chamber 331 and a secondary combustion chamber 332, in which primary combustion air is directly supplied into the combustion chamber 331 from beneath a fire grate 336 through a blower 335, and secondary combustion air is supplied into the secondary combustion chamber 332 through a nozzle 338 from a blower 337. In the secondary combustion chamber 332 at the entrance of a flue 334, CO detecting means (CO densitometer) 333 is provided, and an output from the CO detecting means 333 is entered in a control device 340, and according to the result of measurement, excessive or insufficient amount of secondary combustion air quantity is calculated in order to obtain $O_2$ amount necessary for complete combustion in the secondary combustion chamber 332, and the secondary combustion air quantity rate and blowing temperature are controlled accordingly.

Accordingly, by supplying a proper amount of $O_2$ in the secondary combustion chamber, generation of CO is suppressed, the reaction heat value by combustion increases, the ambient temperature in the furnace elevates, and a high combustion gas temperature is maintained, so that generation of dioxins can be suppressed. More recently, by the advancement of measuring technology, semicontinuous analyzers capable of detecting chlorobenzenes and chlorophenols which are precursors of dioxins are developed. For example, semicontinuous analyzers of chlorobenzenes and chlorophenols are disclosed in Japanese Patent Application Laid-open No. 5-312796.

In such conventional incinerators, however, the combustion state can be estimated only from one aspect. For example, when judged from the CO densitometer or heat image, it is hard to judge whether CO generation is caused by lack of oxygen, or temperature drop due to excessive oxygen.

Meanwhile, the correlation between CO concentration and dioxins is not favorable where the CO concentration is in a low concentration region of 50 ppm or less, and therefore the concentration of dioxins cannot be decreased strictly. Therefore, for the purpose of suppressing generation of dioxins, it is not recommended to use the CO concentration as a substitute index.

It is hence a further different object of the present invention to present a combustion control method of refuse incinerator capable of suppressing generation of dioxins by detecting precursors of dioxins in exhaust gas, and its apparatus.

Moreover, by entering the measurements of boiler steam generation amount, furnace exit temperature, and CO concentration, $O_2$ concentration and NOx concentration in exhaust gas, generation of NOx and CO can be suppressed while detecting multiple aspects of combustion state, and further by controlling the combustion so as to decrease the concentration of precursors of dioxins in exhaust gas, it is an object to present a combustion control method of refuse incinerator capable of suppressing generation of dioxins and its apparatus.

SUMMARY OF THE INVENTION

To achieve the above objects, the present invention employs the following constitutions.

(1) In a first aspect of the present invention, the main flue temperature of the incinerator, or the main flue temperature and at least one of $O_2$ concentration in exhaust gas, CO concentration in exhaust gas, and pressure difference above and beneath the post-incineration grate are measured, each measurement is periodically compared with each reference, and on the basis of the result of this comparison, the post-incineration air quantity which is the air quantity into the post-incineration grate, or the post-incineration air quantity and the moving speed of the post-incineration grate which determines the transfer amount of refuse are controlled.

As the refuse is burned on the post-incineration grate, the generated combustion gas is mixed with part of secondary air, and is guided into a mixing chamber through a principal flue. Therefore, the main flue temperature varies with the combustion state above the post-incineration grate. Accordingly, by measuring the main flue temperature and comparing with the reference value, the combustion state of refuse on the post-incineration grate can be known. By controlling the post-incineration air quantity on the basis of the known combustion state, the refuse can be completely turned to ashes on the post-incineration grate, and generation of unburnt component is suppressed.

Other elements to be measured aside from the main flue temperature include $O_2$ concentration and CO concentration in exhaust gas, and pressure difference above and beneath the post-incineration grate. The $O_2$ concentration and CO concentration in exhaust gas vary with the combustion state of refuse on the post-incineration grate, and the pressure difference above and beneath the post-incineration grate varies with the refuse amount on the post-incineration grate. Therefore, in addition to the measurement of main flue temperature, when the $O_2$ concentration or CO concentration in exhaust gas is measured, direct information about excess or shortage of air quantity, or unburnt component can be known in addition to the measured information of the main flue temperature, and therefore the combustion state of refuse on the post-incineration grate can be known at higher precision, so that the post-incineration air quantity can be controlled more adequately. That is, in addition to excessive or insufficient value of main flue temperature, it is possible to control by using a difference from the appropriate value of components in the exhaust gas.

Other elements to be controlled aside from the post-incineration air quantity include the moving speed of the post-incineration grate which determines the transfer amount of refuse. The combustion state of refuse also varies with the amount of charged refuse, aside from the air quantity. Accordingly, when the refuse amount is adjusted by controlling the moving speed of the post-incineration grate, as well as controlling the post-incineration air quantity, the combustion state of refuse can be adjusted more promptly and appropriately.

By measuring periodically, the combustion state of refuse on the post-incineration grate can be always monitored, and a slightest change having possibility of leading to abnormal state can be detected, and the speed of the post-incineration grate can be adjusted in advance. In particular, it is possible to cope with sudden changes when a very combustible refuse or, to the contrary, hardly combustible refuse comes over the grate. The shorter the period of measurement, the higher is the control frequency, so that a sensible control is realized.

(2) In a second aspect of the present invention, the main flue temperature of the incinerator is measured, and the post-incineration air quantity is decreased when the main flue temperature does not reach the reference temperature, and the post-incineration air quantity is increased when the main flue temperature exceeds the reference temperature, thereby suppressing generation of unburnt component in the exhaust gas in the refuse incinerator.

Deposits on the post-incineration grate are mostly ashes, but, in particular, when the unburnt refuse suddenly decreases to transfer to an excessive ash-abundant state, the post-incineration air quantity becomes excessive for the amount of refuse. In an extreme case, on the post-incineration grate, deposits are cooled and the temperature is insufficient, and ignition of unburnt refuse is not promoted steadily to fall in an incomplete combustion state. In this state, the main flue temperature is lower than usual.

Thus, by fall of main flue temperature, the low temperature state on the post-incineration grate is detected. On the post-incineration grate, it is estimated that the unburnt refuse is in incomplete combustion state and that unburnt components are generated.

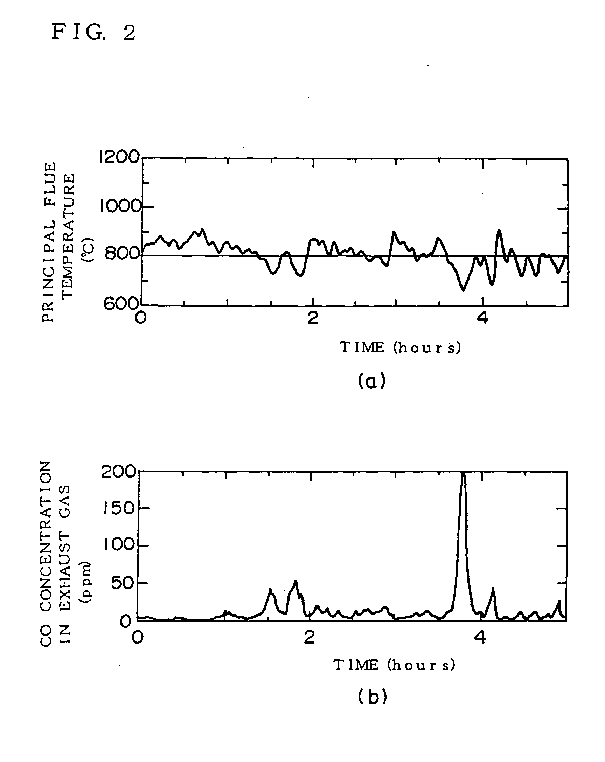

Results of investigation of the relation between the main flue temperature and the CO concentration in exhaust gas are shown in Fig. 2. Herein, in the operating state with the post-incineration air quantity at reference amount, the main flue temperature and CO concentration in exhaust gas were measured simultaneously. Time course changes of main flue temperature are shown in (a), and time-course changes of CO concentration in exhaust gas are shown in (b).

The main flue temperature was temporarily lowered in less than two hours after start of measurement, and immediately before and after the fourth hour, and corresponding to these changes, the CO concentration in exhaust gas was temporarily raised. That is, when the main flue temperature is lower than usual, unburnt components are generated. It means an incomplete combustion state occurs when temperature is insufficient, out of three elements necessary for combustion, while unburnt refuse is present on the post-incineration grate and post-incineration air is blown in at reference level.

On the post-incineration grate, since the preceding deposits are mostly ashes, the temperature lowered, and when unburnt refuse arrives suddenly, it is not ignited. The post-incineration air blown in at low temperature further lowers the temperature, and in this state, if the post-incineration air is a reference amount, it is excessive in the cooling effect.

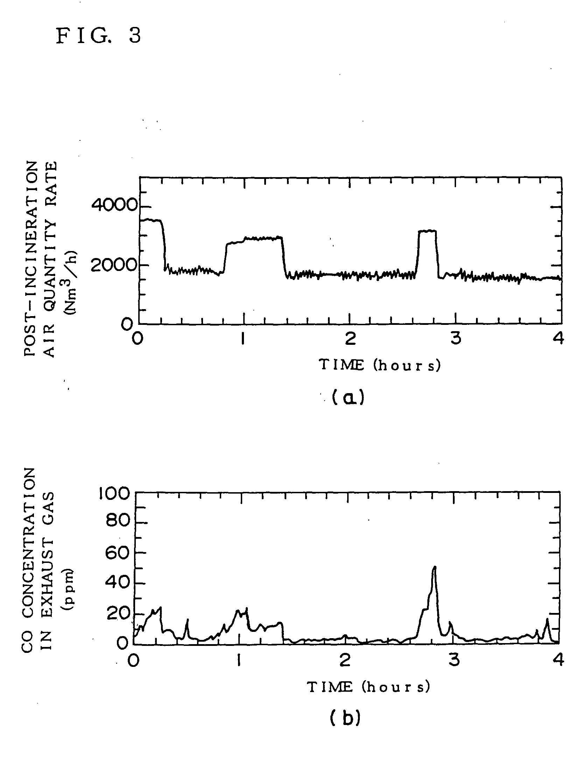

The incomplete combustion state caused by excessive post-incineration air is shown in Fig. 3. In Fig. 3, time-course changes of post-incineration air are shown in (a), and CO concentration in exhaust gas measurement at the same time are shown in (b). The post-incineration air quantity increased upon start of measurement, and about 0.8 hour and 2.7 hours after start of measurement, and the CO concentration in exhaust gas elevated corresponding to these changes. That is, when the post-incineration air quantity is increased excessively, the CO concentration in exhaust gas is heightened, and this state is eliminated when the excessive state of post-incineration air quantity is swept away.

Thus, the main flue temperature is lowered when the post-incineration air quantity is excessive for the amount of unburnt refuse on the post-incineration grate, and at this time, the temperature is insufficient on the post-incineration grate, and unburnt components are generated. That is, when the main flue temperature is lower than the reference temperature, the post-incineration air quantity is excessive for the amount of unburnt refuse on the post-incineration grate, and hence the temperature is insufficient on the post-incineration grate, and unburnt components are generated. Therefore, when the main flue temperature is lower than the reference temperature, by decreasing the post-incineration air quantity, temperature drop is prevented to return to normal combustion, so that generation of unburnt components can be decreased.

On the post-incineration grate, as mentioned above, in order to achieve complete combustion of refuse, air is usually supplied slightly more than the theoretical amount. However, if the hardly combustible refuse is particularly large in quantity, unburnt refuse may be excessively left over the reference amount on the post-incineration grate. In this state, the unburnt refuse corresponding to the amount of supplied air is burned, and the main flue temperature is higher than usual. But the majority of the unburnt refuse of the excessive portion is in an oxygen-shortage state, and unburnt components are generated. That is, when the main flue temperature is higher than the reference temperature, the post-incineration air quantity is insufficient for the amount of refuse on the post-incineration grate, and hence, on the post-incineration grate, oxygen is insufficient out of the three elements necessary for combustion, and unburnt components are generated.

Therefore, when the main flue temperature is higher than the reference temperature, by increasing the post-incineration air quantity, an air-shortage state is eliminated, so that generation of unburnt components can be decreased.

(3) In a third aspect of the present invention, the main flue temperature of the incinerator and $O_2$ concentration in the exhaust gas are measured, and the post-incineration air quantity is decreased when the main flue temperature does not reach the reference temperature and the $O_2$ concentration in the exhaust gas exceeds the reference, and the post-incineration air quantity is increased when the main flue temperature exceeds the reference temperature and the $O_2$ concentration does not reach the reference, thereby suppressing the unburnt components in the exhaust gas in the refuse incinerator.

When the main flue temperature is lower than the reference temperature, post-incineration air quantity is excessive for the amount of unburnt refuse on the post-incineration grate, and hence temperature is insufficient on the post-incineration grate, and unburnt components are generated. Accordingly, by high $O_2$ concentration in exhaust gas, it is confirmed that the post-incineration air quantity is excessive for the amount of unburned refuse on the post-incineration grate. This is because if the post-incineration air quantity is excessive, unreacted $O_2$ is much contained in the combustion gas, and the $O_2$ concentration in exhaust gas is higher. Therefore, if the main flue temperature is lower than the reference temperature and the $O_2$ concentration exceeds the reference value, by decreasing the post-incineration air quantity, temperature drop on the post-incineration grate is prevented to return to normal combustion, so that generation of unburnt components is decreased.

To the contrary, when the main flue temperature exceeds the reference value, the post-incineration air quantity is insufficient for the amount of refuse on the post-incineration grate, and hence oxygen is insufficient on the post-incineration grate, and unburnt components are generated.

As the $O_2$ concentration in exhaust gas is low, it is confirmed that the post-incineration air quantity is insufficient for the amount of unburnt refuse on the post-incineration grate. It is because, when the post-incineration air quantity is insufficient, unreacted $O_2$ is not present, and the $O_2$ concentration in exhaust gas declines.

Therefore, when the main flue temperature exceeds the reference temperature and the $O_2$ concentration does not reach the reference value, by increasing the post-incineration air quantity, the lacking state of air quantity is eliminated, and generation of unburnt components is decreased.

(4) In a fourth aspect of the present invention, the main flue temperature of the incinerator and CO concentration in the exhaust gas are measured, and the post-incineration air quantity is decreased when the main flue temperature does not reach the reference temperature and the CO concentration exceeds the reference, and the post-incineration air quantity is increased when the main flue temperature exceeds the reference temperature and the CO concentration exceeds the reference, thereby suppressing unburnt components in the exhaust gas in the refuse incinerator.

When the main flue temperature is lower than the reference temperature, post-incineration air quantity is excessive for the amount of unburnt refuse on the post-incineration grate, and hence temperature is insufficient on the post-incineration grate, and unburnt components are generated.

Accordingly, since CO represents the unburnt components, by high CO concentration in exhaust gas, it is confirmed that deposits on the post-incineration grate are in unburnt state. This CO is an unburnt CO, not oxidized to $CO_2$ when the post-incineration air quantity is excessive for the amount of unburnt refuse on the post-incineration grate and the temperature is insufficient.

Therefore, if the main flue temperature does not reach the reference temperature and the CO concentration exceeds the reference value, by decreasing the post-incineration air quantity, temperature drop on the post-incineration grate is prevented to return to normal combustion, so that generation of unburnt components is decreased.

To the contrary, when the main flue temperature exceeds the reference temperature, the post-incineration air quantity is insufficient for the amount of unburnt refuse on the post-incineration grate, and hence oxygen is insufficient on the post-incineration grate, and unburnt components are generated.

The reason why the CO concentration in exhaust gas is high is that the post-incineration air quantity is insufficient for the amount of unburnt refuse on the post-incineration grate, and deposits on the post-incineration grate are in unburnt state.

Therefore, when the main flue temperature exceeds the reference temperature and the CO concentration exceeds the reference value, by increasing the post-incineration air quantity, the lacking state of air quantity is eliminated, and generation of unburnt components is decreased.

(5) In a fifth aspect of the present invention, by measuring the difference between the pressure beneath the post-incineration grate and the furnace internal pressure, while controlling the post-incineration air quantity, these measured values are compared, and the speed of the post-incineration grate is controlled on the basis of the result of comparison, and thereby unburnt components in the exhaust gas in the refuse incinerator are suppressed.

While the main flue temperature, and $O_2$ concentration and CO concentration in exhaust gas represent the combustion state of the post-incineration grate, the difference between the pressure beneath the post-incineration grate and the furnace internal pressure is the pressure difference above and beneath the post-incineration grate, and it varies with the amount of deposits on the post-incineration grate.

To prevent leak of gas from the furnace during combustion, the pressure in the furnace is measured by a pressure gauge installed above the grate, and is always controlled at negative pressure. Comparing this furnace internal pressure and the pressure beneath the post-incineration grate, it is understood that post-incineration air is blown in beneath the post-incineration grate, and the pressure beneath the post-incineration grate is higher than the furnace internal pressure, and the difference between the pressure beneath the post-incineration grate and the furnace internal pressure (hereinafter called the pressure difference for short) is larger when the air stream resistance of deposits is larger. That is, when the pressure difference is small, the majority of deposits on the post-incineration grate is ash and the volume is small, or when the pressure difference is large, the majority of deposits is unburnt refuse, and the volume is large.

Together with the combustion state of the reuse on the post-incineration grate, by periodically measuring the amount of unburnt refuse in deposits, the speed of the post-incineration grate can be controlled appropriately in addition to the control of the post-incineration air quantity. For example, when the refuse amount is excessive, by decreasing the speed of the post-incineration grate, while increasing the post-incineration air quantity, the amount of unburnt refuse decreases gradually, and it is burned down completely while taking time.

(6) In a sixth aspect of the present invention, the main flue temperature of the incinerator, and the difference between the pressure beneath the post-incineration grate and the furnace internal pressure are measured, and the post-incineration air quantity is decreased and the speed of the post-incineration grate is increased when the main flue temperature does not reach the reference temperature and the difference between the pressure beneath the post-incineration grate and the furnace internal pressure does not reach the reference difference, while the post-incineration air quantity is increased and the speed of the post-incineration grate is decreased when the main flue temperature exceeds the reference temperature and the difference between the pressure beneath the post-incineration grate and the furnace internal pressure exceeds the reference difference, thereby suppressing unburnt components in the exhaust gas in the refuse incinerator.

When the main flue temperature is low, the post-incineration air quantity is excessive for the amount of unburnt refuse on the post-incineration grate, and the temperature on the post-incineration grate is insufficient, and unburnt components are generated. By the small pressure difference, it is understood that the majority of deposits on the post-incineration grate is ashes, and that the amount of unburnt refuse is small.

Therefore, if the main flue temperature does not reach the reference temperature and the pressure difference does not reach the reference difference, by decreasing the post-incineration air quantity and increasing the speed of the post-incineration grate, temperature drop is prevented and the refuse as fuel is replenished to return to normal combustion, so that generation of unburnt components is decreased.

To the contrary, when the main flue temperature is high, the post-incineration air quantity is insufficient for the amount of unburnt refuse on the post-incineration grate, and hence oxygen is insufficient on the post-incineration grate, and unburnt components are generated. When the pressure difference is large, much unburnt refuse is contained in the deposits on the post-incineration grate.

Therefore, when the main flue temperature exceeds the reference temperature and the pressure difference exceeds the reference difference, by increasing the post-incineration air quantity and slowing down the speed of the post-incineration grate, the oxygen insufficient state and fuel excessive state are eliminated, and generation of unburnt components is decreased.

(7) In a seventh aspect of the present invention, the main flue temperature of the incinerator, the $O_2$ concentration in the exhaust gas, and the difference between the pressure beneath the post-incineration grate and the furnace internal pressure are measured, and the post-incineration air quantity is decreased and the speed of the post-incineration grate is increased when the main flue temperature does not reach the reference temperature, the $O_2$ concentration exceeds the reference, and the difference between the pressure beneath the post-incineration grate and the furnace internal pressure does not reach the reference difference, while the post-incineration air quantity is increased and the speed of the post-incineration grate is decreased when the main flue temperature exceeds the reference temperature, the $O_2$ concentration does not reach the reference, and the difference between the pressure beneath the post-incineration grate and the furnace internal pressure exceeds the upper limit of the reference difference, thereby suppressing the unburnt components in the exhaust gas in the refuse incinerator.

When the main flue temperature is low and $O_2$ concentration in exhaust gas is high, due to excessive post-incineration air quantity, the temperature is insufficient on the post-incineration grate, unburnt components are generated. As the pressure difference does not reach the reference difference, deposits on the post-incineration grate are mostly burned to ashes, and it is understood that unburnt refuse is not left over.

Therefore, if the main flue temperature does not reach the reference temperature, the $O_2$ concentration in exhaust gas exceeds the reference value and the pressure difference does not reach the reference difference, by decreasing the post-incineration air quantity and increasing the speed of the post-incineration grate, temperature drop is prevented and the fuel is replenished to return to normal combustion, so that generation of unburnt components is decreased.

To the contrary, when the main flue temperature is high and the $O_2$ concentration in exhaust gas is low, the post-incineration air quantity is insufficient for the amount of unburnt refuse on the post-incineration grate, and hence oxygen is insufficient on the post-incineration grate, and unburnt components are generated. As the pressure difference is large, it is understood that much unburnt refuse is contained in the deposits on the post-incineration grate.

Therefore, when the main flue temperature exceeds the reference temperature, the $O_2$ concentration in exhaust gas does not reach the reference value and the pressure difference exceeds the reference difference, by increasing the post-incineration air quantity and slowing down the speed of the post-incineration grate, the fuel excessive state and oxygen insufficient state are eliminated, and generation of unburnt components is decreased.

(8) In an eighth aspect of the present invention, the main flue temperature of the incinerator, the CO concentration in the exhaust gas, and the difference between the pressure beneath the post-incineration grate and the furnace internal pressure are measured, and the post-incineration air quantity is decreased and the speed of the post-incineration grate is increased when the main flue temperature does not reach the reference temperature, the CO concentration exceeds the reference, and the difference between the pressure beneath the post-incineration grate and the furnace internal pressure does not reach the reference difference, while the post-incineration air quantity is increased and the speed of the post-incineration grate is decreased when the main flue temperature exceeds the reference temperature, the CO concentration exceeds the reference, and the difference between the pressure beneath the post-incineration grate and the furnace internal pressure exceeds the reference difference, thereby suppressing the unburnt components in the exhaust gas in the refuse incinerator.

When the main flue temperature is low and CO concentration in exhaust gas is high, due to excessive post-incineration air quantity, the temperature is insufficient on the post-incineration grate, unburnt components are generated. By large pressure difference, it is understood that the majority of deposits on the post-incineration grate is ash.

Therefore, if the main flue temperature does not reach the reference temperature, the CO concentration in exhaust gas exceeds the reference value and the pressure difference does not reach the reference difference, by decreasing the post-incineration air quantity and increasing the speed of the post-incineration grate, temperature drop on the post-incineration grate is prevented and the fuel is replenished to return to normal combustion, so that generation of unburnt components is decreased.

To the contrary, when the main flue temperature is high and the CO concentration in exhaust gas is high, the post-incineration air quantity is insufficient for the amount of unburnt refuse on the post-incineration grate, and unburnt components are generated. As the pressure difference is large, it is understood that much unburnt refuse is contained in the deposits on the post-incineration grate.

Therefore, when the main flue temperature exceeds the reference temperature, the CO concentration in exhaust gas exceeds the reference value and the pressure difference exceeds the reference difference, by increasing the post-incineration air quantity and slowing down the speed of the post-incineration grate, the oxygen insufficient state and unburnt fuel excessive state are eliminated, and generation of unburnt components is decreased.

Incidentally, the speed of the post-incineration grate can be controlled also by, without determining the pressure difference, measuring the main flue temperature or main flue temperature and $O_2$ concentration or CO concentration in exhaust gas, and controlling the post-incineration air quantity, and controlling the speed of the post-incineration grate.

According to the present invention in (1) to (8), incomplete combustion state in the primary combustion stage is immediately improved, and generation of unburnt components such as dioxins and carbon monoxides is suppressed. At the same time, unnecessary blowing of secondary air is prevented. Therefore, achievement of complete combustion and efficient utilization of refuse energy are realized.

(9) In a ninth aspect of the present invention, relating to a refuse incinerator of two-exhaust-pass type having a barrier for branching off the combustion gas in the combustion chamber, the furnace exit temperature is measured periodically by a thermometer installed at the furnace exit, the NOx concentration and CO concentration in the exhaust gas is measured periodically by an exhaust gas analyzer installed in the flue, each measurement is compared with the reference, the on the basis of the result of comparison, the flow rate is controlled to spray water toward the combustion chamber burning the refuse on the grate in the furnace.

The exhaust gas generated by burning refuse on the grate is branched off by the barrier installed in the furnace. Branched flows of exhaust gas are converged at the furnace exit, and are mixed by collision and agitation at this time, so that the unburnt components in the exhaust gas are burned again. Since the exhaust gas is agitated and mixed by the barrier, it is not necessary to mix the exhaust gas by spraying water, so that lowering of the furnace exit temperature can be prevented. Since the furnace exit temperature, NOx concentration and CO concentration represent the combustion state, by comparing the measured values of the furnace exit temperature, NOx concentration and CO concentration with the preset reference values, the water spray amount can be controlled depending on the changes in the combustion state. By measuring periodically, the combustion state is always monitored, and hence it is possible to cope with changes in the combustion state adequately. The shorter the interval of measurements, the higher is the frequency of control, so that very fine control is realized.

(10) In a tenth aspect of the present invention, relating to the ninth aspect, the flow rate is controlled by decreasing the water spray amount when the measurement of the furnace exit temperature is lower than the reference or the measurement of CO concentration is higher than the reference, or increasing the water spray amount when the measurement of the furnace exit temperature is higher than the reference, or when the measurement of the furnace exit temperature is higher than the reference and the measurement of the NOx concentration is higher than the reference.

As shown in Fig. 8, the higher the furnace exit temperature, the lower is the CO concentration because the unburnt components in exhaust gas are refired. On the other hand, the higher the furnace exit temperature, the higher is the refuse combustion temperature, so that the NOx concentration is higher. Therefore, the temperature region for decreasing both CO and NOx simultaneously is understood to be present around 800°C. On the other hand, as shown in Fig. 22, the more the water spray amount, the lower is the furnace exit temperature because the furnace is cooled. Therefore, if the furnace exit temperature is over the reference value, or the furnace exit temperature is over the reference value and the NOx concentration exceeds the reference value, by increasing the water spray amount, the furnace exit temperature is lowered and the NOx concentration can be decreased. When the furnace exit temperature is lower than the reference value, or when the CO concentration is higher the reference value, by decreasing the water spray amount, the furnace exit temperature is higher, and secondary combustion of unburnt components in exhaust gas is promoted, and it is understood that the CO concentration can be lowered.

(11) In an eleventh aspect of the present invention, relating to the ninth aspect, the flow rate is controlled, according to a fuzzy theory, by decreasing the water spray amount when the measurement of the furnace exit temperature is low, or when the measurement of the CO concentration is high, or increasing the water spray amount when the measurement of the furnace exit temperature is high, or when the measurement of the furnace exit temperature is high and the measurement of the NOx concentration is high.

The fuzzy control is most suited as the control method for determining the operation output from the plural measurement inputs for calculating the increment or decrement of water spray by comprehensively judging the measured values of the furnace exit temperature, NOx concentration and CO concentration varying with the combustion state of refuse in the furnace, and the combustion state is appropriately controlled, and NOx in the exhaust gas is suppressed.

(12) In a twelfth aspect of the present invention, relating to a refuse incinerator of two-exhaust-pass type having a barrier for branching off the combustion gas in the combustion chamber, the furnace exit temperature is measured periodically by the thermometer installed at the furnace exit, and the NOx concentration in exhaust gas is measured periodically by an exhaust gas analyzer installed in the flue, and each measurement is compared with the reference, and on the basis of the result of comparison, the flow rate is controlled for spraying water toward the combustion chamber burning the refuse on the fire grate in the furnace.

The exhaust gas generated by burning refuse on the grate is branched off by the barrier installed in the furnace, and converged at the furnace exit to be mixed by collision and agitation, so that the unburnt components in the exhaust gas are burned again. Since the exhaust gas is agitated and mixed by the barrier, it is not necessary to mix the gas by spraying water, so that lowering of the furnace exit temperature can be prevented. Since the furnace exit temperature and NOx concentration represent the combustion state, by comparing the periodically measured values of the furnace exit temperature, NOx concentration with the preset reference values, the water spray amount can be controlled depending on the changes in the combustion state. By measuring periodically, the combustion state is always monitored, and hence it is possible to cope with changes in the combustion state adequately. The shorter the interval of measurements, the higher is the frequency of control, so that very fine control is realized.

(13) In a thirteenth aspect of the present invention, relating to the twelfth aspect, the flow rate is controlled by decreasing the water spray amount when the measurement of the furnace exit temperature is lower than the reference, or increasing the water spray amount when the measurement of the furnace exit temperature is higher than the reference, or when the measurement of the furnace exit temperature is higher than the reference and the measurement of the NOx concentration is higher than the reference.

In this case, too, as shown in Fig. 8, concerning the relation of the furnace exit temperature with the CO concentration and NOx concentration in exhaust gas, the higher the furnace exit temperature, the lower is the CO concentration because the unburnt components in exhaust gas are refired. On the other hand, the higher the furnace exit temperature, the higher is the refuse combustion temperature, so that the NOx concentration is higher. Therefore, the temperature region for decreasing both CO and NOx simultaneously is present around $800°C$. On the other hand, as shown in Fig. 22, the more the water spray amount, the lower is the furnace exit temperature because the furnace is cooled. Therefore, if the furnace exit temperature is over the reference value and the NOx concentration exceeds the reference value, by increasing the water spray amount, the furnace exit temperature is lowered and the NOx concentration can be decreased.

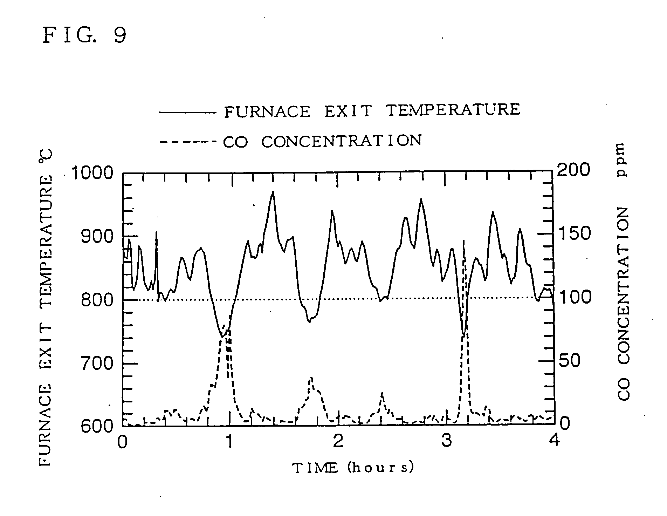

Fig. 9 is a characteristic diagram showing time-course changes of furnace exit temperature and CO concentration. As shown in Fig.9, when the furnace exit temperature is lower than $800°C$, high CO concentration of about scores of to 100 ppm is generated. However, by adjusting the water spray amount to operate so that the furnace exit temperature is maintained at $800°C$ or higher to promote secondary combustion of unburnt components in exhaust gas, the CO concentration can be lowered. At this time by controlling by measuring changes of the furnace exit temperature, the CO concentration can be lowered without measuring the CO concentration.

(14) In a fourteenth aspect of the present invention, relating to the twelfth aspect, the flow rate is controlled, according to a fuzzy theory, by decreasing the water spray amount when the measurement of the furnace exit temperature is low, or increasing the water spray amount when the measurement of the furnace exit temperature is high, or when the measurement of the furnace exit temperature is high and the measurement of the NOx concentration is high.

The fuzzy control is most suited as the control method for determining the operation output from the plural measurement inputs for calculating the increment or decrement of water spray by comprehensively judging the measured values of the furnace exit temperature and NOx concentration varying with the combustion state of refuse in the furnace, and the combustion state is appropriately controlled, and NOx in the exhaust gas is suppressed.

(15) In a fifteenth aspect of the present invention, relating to a refuse incinerator of two-exhaust-pass type having a barrier for branching off the combustion gas in the combustion chamber, $O_2$ concentration, NOx concentration and CO concentration in exhaust gas are periodically measured by exhaust gas analyzers installed in the flue, each measurement and reference are compared, and on the basis of the result of comparison, the flow rate is controlled for spraying water toward the combustion chamber burning refuse on the grate in the furnace.

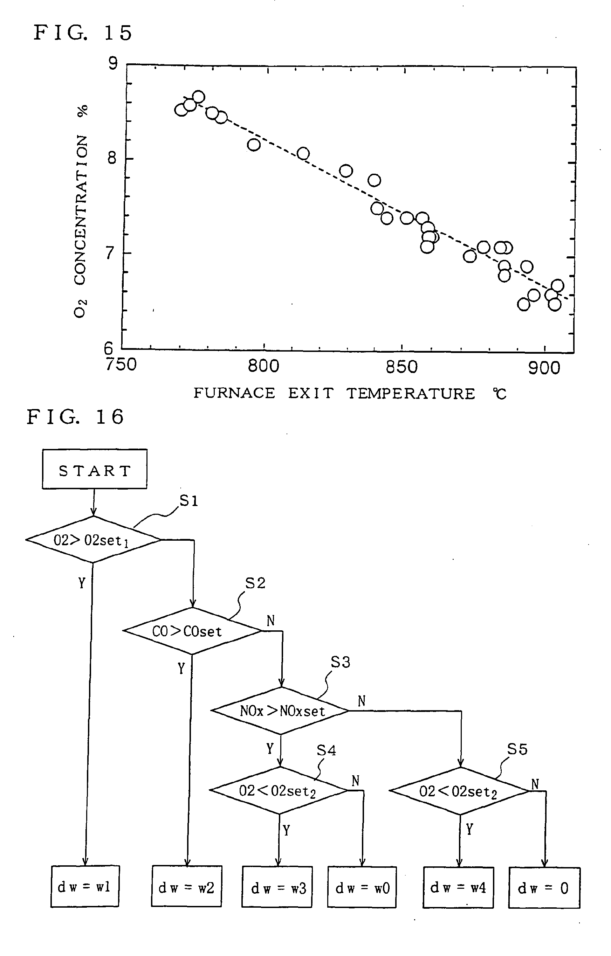

The exhaust gas generated by burning refuse on the grate is branched off by the partition wall installed in the furnace. Branched flows of exhaust gas are converged at the furnace exit, and are mixed by collision and agitation at this time, so that the unburnt components in the exhaust gas are burned again. Since the exhaust gas is agitated and mixed by the partition wall, it is not necessary to mix the exhaust gas by spraying water, so that lowering of the furnace exit temperature can be prevented. In the foregoing (9) to (11) aspects, since the furnace exit temperature, NOx concentration and CO concentration represent the combustion state, the flow rate of water spray is controlled by using the measured values of the furnace exit temperature, NOx concentration and CO concentration. In the relation of the furnace exit temperature and $O_2$ concentration in exhaust gas as shown in Fig. 15, the higher the furnace exit temperature, the lower is the $O_2$ concentration, and a strong negative correlation is understood. When there is no extra air in the exhaust gas and the $O_2$ concentration is low, the combustion is active, and hence the furnace exit temperature is high. Therefore, using $O_2$ concentration instead of furnace exit temperature, by comparing the measured values of the $O_2$ concentration, NOx concentration and CO concentration with the preset reference values, the water spray amount can be controlled depending on the changes in the combustion state. By measuring periodically, the combustion state is always monitored, and hence it is possible to cope with changes in the combustion state adequately. The shorter the interval of measurements, the higher is the frequency of control, so that very fine control is realized.

(16) In a sixteenth aspect of the present invention, relating to the fifteenth aspect, the flow rate is controlled by decreasing the water spray amount when the measurement of the $O_2$ concentration is higher than the reference or the measurement of CO concentration is higher than the reference, or increasing the water spray amount when the measurement of the $O_2$ concentration is lower than the reference, or when the measurement of the $O_2$ concentration is lower than the reference and the measurement of the NOx concentration is higher than the reference.

As shown in Fig. 8, the higher the furnace exit temperature, the lower is the CO concentration because the unburnt components in exhaust gas are refired. On the other hand, the higher the furnace exit temperature, the higher is the refuse combustion temperature, so that the NOx concentration is higher. Further, as shown in Fig. 15, there is a negative correlation between furnace exit temperature and $O_2$ concentration, and the lower the $O_2$ concentration, the higher is the furnace exit temperature, and therefore the lower the $O_2$ concentration, the lower is the CO concentration and the higher is the NOx concentration. As shown in Fig. 22, the larger the water spray amount, the more is suppressed combustion and the furnace is cooled, so that the furnace exit temperature is lower, and therefore, as shown in Fig. 15, the $O_2$ concentration becomes higher. Therefore, if the $O_2$ concentration is higher the reference value, or the CO concentration is higher than the reference value, by decreasing the water spray amount, the secondary combustion of unburnt components in exhaust gas is promoted, and the $O_2$ concentration is lowered, and the furnace exit temperature is raised, so that the CO concentration can be lowered. If the $O_2$ concentration is lower than the reference, or the $O_2$ concentration is lower than the reference and the NOx concentration is higher tan the reference, by increasing the water spray amount, combustion is suppressed, and the furnace exit temperature is lowered, so that NOx concentration can be decreased.

(17) In a seventeenth aspect of the present invention, relating to the fifteenth aspect, the flow rate is controlled according to a fuzzy theory by decreasing the water spray amount when the measurement of $O_2$ concentration is high or measurement of CO concentration is high, or increasing the water spray amount when the measurement of $O_2$ concentration is low or when the measurement of $O_2$ concentration is low and measurement of NOx concentration is high.

The fuzzy control is most suited as the control method for determining the operation output from the plural measurement inputs for calculating the increment or decrement of water spray by comprehensively judging the measured values of the $O_2$ concentration, NOx concentration and CO concentration varying with the combustion state of refuse in the furnace, and the combustion state is appropriately controlled, and NOx in the exhaust gas is suppressed.

(18) In an eighteenth aspect of the present invention, relating to a refuse incinerator of two-exhaust-pass type having a barrier for branching off the combustion gas in the combustion chamber, the $O_2$ concentration and NOx concentration in the exhaust gas are periodically measured individually by exhaust gas analyzers installed in the flue, the measurement is compared with each reference, and on the basis of the result of comparison, the flow rate of the water spray toward the combustion chamber burning refuse on the grate in the furnace is controlled.

The exhaust gas generated by burning refuse on the grate is branched off by the barrier installed in the furnace. Branched flows of exhaust gas are converged at the furnace exit, and are mixed by collision and agitation at this time, so that the unburnt components in the exhaust gas are burned again. Since the exhaust gas is agitated and mixed by the barrier, it is not necessary to mix the exhaust gas by spraying water, so that lowering of the furnace exit temperature can be prevented. In the foregoing (12) to (14) aspects, since the furnace exit temperature and NOx concentration represent the combustion state, the flow rate of water spray is controlled by using the measured values of the furnace exit temperature and NOx concentration. In the relation of the furnace exit temperature and $O_2$ concentration in exhaust gas as shown in Fig. 15, the higher the furnace exit temperature, the lower is the $O_2$ concentration, and a strong negative correlation is understood. Therefore, using $O_2$ concentration instead of furnace exit temperature, by comparing the measured values of the $O_2$ concentration and NOx concentration with the preset reference values, the water spray amount can be controlled depending on the changes in the combustion state. By measuring periodically, the combustion state is always monitored, and hence it is possible to cope with changes in the combustion state adequately. The shorter the interval of measurements, the higher is the frequency of control, so that very fine control is realized.

(19) In a nineteenth aspect of the present invention, relating to the eighteenth aspect, the flow rate is controlled by decreasing the water spray amount when the measurement of the $O_2$ concentration is higher than the reference, or increasing the water spray amount when the measurement of the $O_2$ concentration is lower than the reference, or when the measurement of the $O_2$ concentration is lower than the reference and the measurement of the NOx concentration is higher than the reference.

As shown in Fig. 8, the higher the furnace exit temperature, the lower is the CO concentration because the unburnt components in exhaust gas are refired. On the other hand, the higher the furnace exit temperature, the higher is the refuse combustion temperature, so that the NOx concentration is higher. Further, as shown in Fig. 15, there is a negative correlation between furnace exit temperature and $O_2$ concentration, and the lower the $O_2$ concentration, the higher is the furnace exit temperature, and therefore the lower the $O_2$ concentration, the lower is the CO concentration and the higher is the NOx concentration. As shown in Fig. 22, the larger the water spray amount, the more is suppressed combustion and the furnace is cooled, so that the furnace exit temperature is lower, and therefore, as shown in Fig. 15, the $O_2$ concentration becomes higher. Therefore, if the $O_2$ concentration is higher the reference value, by decreasing the water spray amount, the $O_2$ concentration is lowered and the furnace exit temperature rises, so that the secondary combustion of unbumt components in exhaust gas is promoted, and the CO concentration can be lowered. If the $O_2$ concentration is lower than the reference, or the $O_2$ concentration is lower than the reference and the NOx concentration is higher than the reference, by increasing the water spray amount, combustion is suppressed, and the furnace exit temperature is lowered, so that NOx concentration can be decreased.

(20) In a twentieth aspect of the present invention, relating to the eighteenth aspect, the flow rate is controlled according to a fuzzy theory by decreasing the water spray amount when the measurement of $O_2$ concentration is high, or increasing the water spray amount when the measurement of $O_2$ concentration is low or when the measurement of $O_2$ concentration is low and measurement of NOx concentration is high. The fuzzy control is most suited as the control method for determining the operation output from the plural measurement inputs for calculating the increment or decrement of water spray by comprehensively judging the measured values of the $O_2$ concentration and NOx concentration varying with the combustion state of refuse in the furnace, and the combustion state is appropriately controlled, and NOx in the exhaust gas is suppressed.

According to the present invention in (9) to (20), the furnace exit temperature or $O_2$ concentration is stabilized, and the CO concentration and NOx concentration in combustion exhaust gas are suppressed. Hence, generation of dioxins and other harmful components in combustion exhaust gas is suppressed, and refuse energy can be utilized efficiently by complete combustion.

(21) In a twenty-first aspect of the present invention, the furnace exit temperature is measured periodically by a thermometer installed in the furnace exit, NOx concentration, CO concentration and $O_2$ concentration in exhaust gas are measured periodically by exhaust gas analyzers installed in the flue, measurements of furnace exit temperature and NOx concentration are compared with each reference, and on the basis of the result of the comparison, the water spray amount to be sprayed toward the refuse burning on the grate is adjusted, and moreover the measurements of furnace exit temperature, NOx concentration, CO concentration and $O_2$ concentration are compared with each reference, and on the basis of the result of the comparison, the secondary combustion air quantity to be injected toward the combustion chamber is adjusted.

As described above, by increasing the amount of water sprayed toward the refuse burning on the grate to lower the combustion temperature of the refuse on the grate and lower the furnace exit temperature, the NOx generation in exhaust gas can be suppressed. However, if the water spray amount is increased too much for suppressing the generation of NOx, the furnace exit temperature declines, and the CO concentration elevates. Therefore, by comparing the periodically measured values of furnace exit temperature and NOx concentration with the reference values of furnace exit temperature and NOx concentration, and adjusting the water spray amount so that the furnace exit temperature may maintain the reference, the generation of NOx and CO is suppressed.

As shown in Fig. 21, as known from the relation of the secondary combustion air quantity with the furnace exit temperature, NOx concentration and CO concentration, the furnace exit temperature is highest in the shaded area, in which the secondary combustion is very active and hence the CO concentration is low. At the left side of the shaded area, the secondary combustion air quantity is small, and oxygen necessary for secondary combustion is insufficient, and, in oxygen deficiency state, secondary combustion is not executed, the CO concentration hikes, and the furnace exit temperature declines. At the right side of the shaded area, when the secondary combustion air quantity is enough, the furnace is cooled, the furnace exit temperature drops, and combustion is incomplete in spite of enough oxygen for secondary combustion, and thereby the CO concentration hikes. The NOx concentration becomes high in proportion to the secondary combustion air. Accordingly, by maintaining the operation of the secondary combustion air within the shaded area, both NOx concentration and CO concentration can be kept in low state.

From the relation of the secondary combustion air quantity with the furnace exit temperature, NOx concentration and CO concentration, by periodically measuring the furnace exit temperature, NOx concentration, CO concentration and $O_2$ concentration, the measurements are compared with each reference, and on the basis of the result of the comparison, the secondary combustion air quantity is adjusted so as to maintain the shaded area in Fig. 21. By measuring periodically the furnace exit temperature, NOx concentration and others, the combustion state is always monitored, and hence it is possible to cope with changes in the combustion state rapidly. The shorter the interval of measurements, the higher is the frequency of control, so that very fine control is realized.

(22) In a twenty-second aspect of the present invention, relating to the twenty-first aspect, the rate of the measurement of CO concentration exceeding the target CO concentration per unit time is limited under the target CO generation rate.

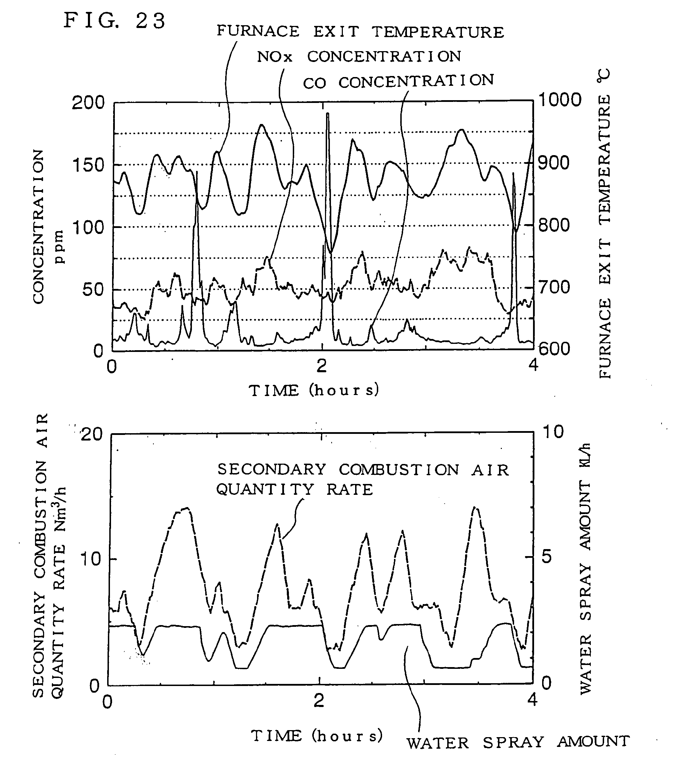

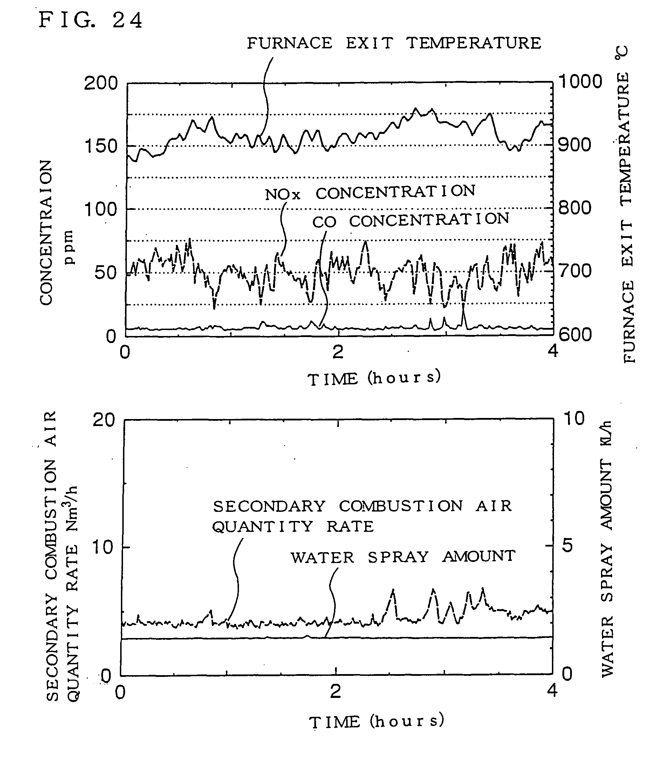

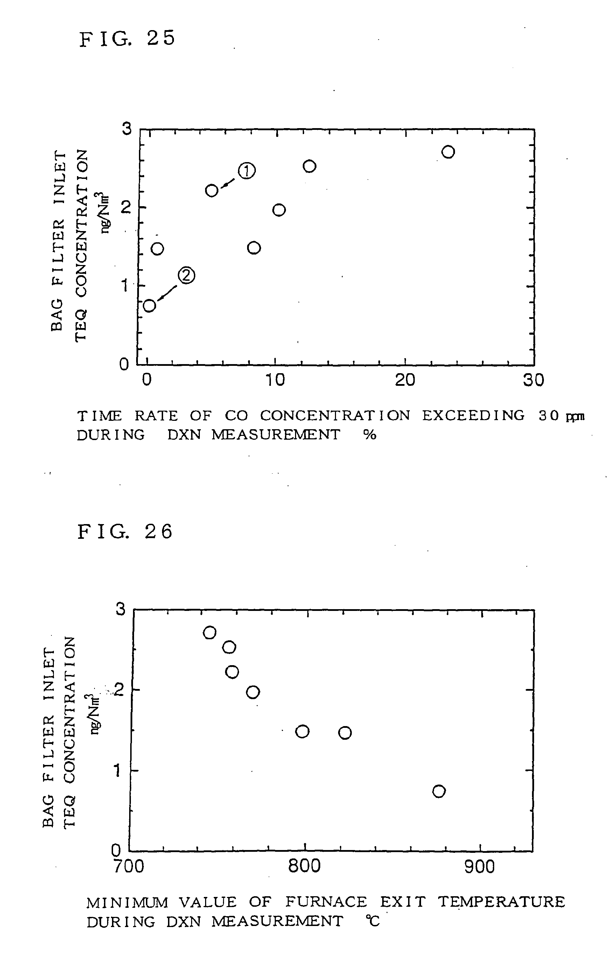

The behavior of CO concentration when the combustion state in the furnace is impaired is generally as shown in fig. 23, which is a characteristic diagram showing time-course changes of furnace exit temperature and others, and high concentrations of spike profile appear for several minutes to scores of minutes. When the spike profile portion of this CO concentration is calculated as the rate of generation per unit time during measurement of dioxin concentration (4 hours), and the relation with the bag filter inlet dioxin concentration is investigated, it is understood to correspond to characteristic diagram (1) of bag filter inlet dioxin concentration in Fig. 25. The combustion state shown in the characteristic diagram in Fig. 24 corresponds to characteristic diagram (2) in Fig. 25. The higher the rate of generation of spikes of CO concentration, the higher is the dioxin concentration. While spike CO is generated, the combustion is incomplete, and dioxin is discharged without being decomposed. Hence, by controlling the water spray amount and secondary combustion air quantity according to the twenty-first aspect so as not to exceed the target CO concentration, spike CO is not generated during operation.

(23) In a twenty-third aspect of the present invention, relating to the twenty-first aspect, it is operated to keep the measurement of furnace exit temperature over a target lower limit temperature.

By investigating the relation between the behavior of furnace exit temperature by combustion changes in the furnace and the bag filter inlet dioxin concentration, it is understood as shown in the characteristic diagram of bag filter inlet dioxin concentration in Fig. 26 that the bag filter inlet dioxin concentration is kept low when the lowest value of furnace exit temperature during measurement of dioxin concentration (4 hours) is higher. If the furnace exit temperature is not lowered during measurement of dioxin concentration, it means that complete combustion is maintained, and the dioxin in the exhaust gas is decomposed. Hence, by controlling the water spray amount and secondary combustion air quantity according to the twenty-first aspect so as to operate the measurement of the furnace exit temperature over the target lower limit temperature, it is operated to maintain the furnace exit temperature above the target lower limit temperature.

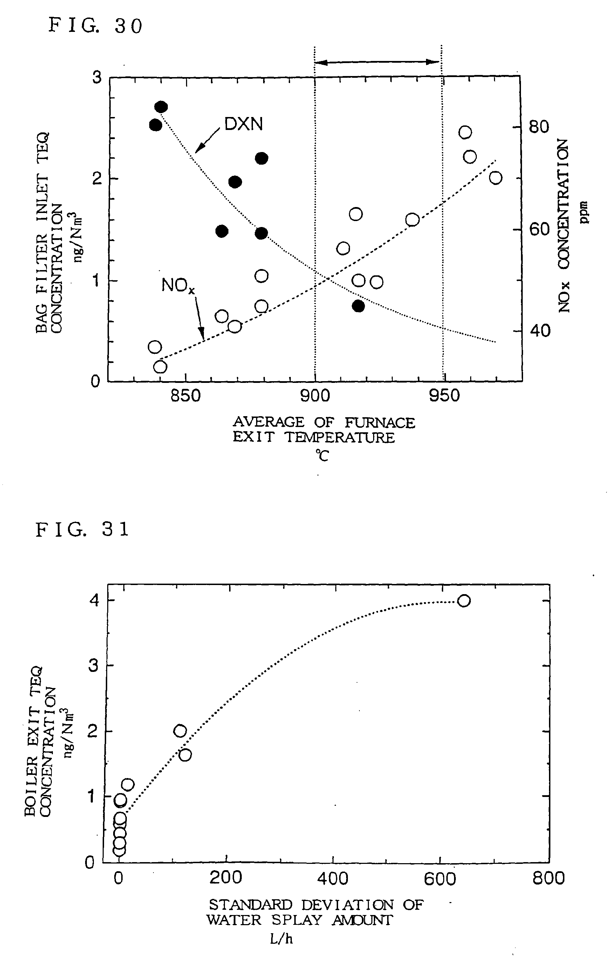

(24) In a twenty-fourth aspect of the present invention, relating to the twenty-first aspect, it is operated to keep the average of the measurements of the furnace exit temperature within a range of target lower limit average and target upper limit average. By investigating the relation between the behavior of average of furnace exit temperature by combustion changes in the furnace and the bag filter inlet dioxin concentration and NOx concentration, it is understood as shown in the characteristic diagram in Fig. 30 that as the average of the furnace exit temperature is higher, unburnt components are decomposed and the dioxin concentration is lowered, but since the combustion temperature of the exhaust gas is higher, the NOx concentration becomes higher. To the contrary, when the average of the furnace exit temperature is lower, the dioxin concentration is higher, and the NOx concentration is lower.

Accordingly, by controlling the water spray amount and secondary combustion air quantity by the twenty-first aspect so as to operate to maintain the average of the furnace exit temperature within the target lower limit average and target upper limit average, it is operate to maintain the average of the furnace exit temperature above the target lower limit average and below the target upper limit average.

(25) In a twenty-fifth aspect of the present invention, relating to the twenty-first aspect, it is operated to keep the rate of the measurement of CO concentration exceeding the target CO concentration per unit time under the target CO generation rate, and the measurement of the furnace exit temperature above the target lower limit temperature.

By controlling the water spray amount and secondary combustion air quantity according to the twenty-first aspect, so as to maintain the furnace exit temperature above the target lower limit temperature without generating CO of spike profile, dioxin in the exhaust gas is decomposed securely.

(26) In a twenty-sixth aspect of the present invention, relating to the twenty-first aspect, it is operated to keep the rate of the measurement of CO concentration exceeding the target CO concentration per unit time under the target CO generation rate, the measurement of the furnace exit temperature above the target lower limit temperature, and the average of the measurements of the furnace exit temperature within a range of target lower limit average and target upper limit average. By controlling the water spray amount and secondary combustion air quantity according to the twenty-first aspect, so as to maintain the furnace exit temperature above the target lower limit temperature, and at the same time, to operate the average of the furnace exit temperature in a range between the target lower limit average and target upper limit average, without generating CO of spike profile, dioxin and NOx in the exhaust gas can be suppressed securely.

(27) In a twenty-seventh aspect of the present invention, relating to the twenty-second or twenty-fifth aspect, the target CO concentration is 30 ppm, and the target CO generation rate is 2%. As shown in the characteristic diagram in Fig. 25, by setting the target CO concentration at 30 ppm and the target CO generation rate at 2%, the dioxin concentration can be effectively decreased.

(28) In a twenty-eighth aspect of the present invention, relating to the twenty-third or twenty-fifth aspect, the target lower limit temperature is about 850°C. As shown in the characteristic diagram in Fig. 26, by setting the target lower limit temperature at about 850°C, the dioxin concentration can be effectively decreased.

(29) In a twenty-ninth aspect of the present invention, relating to the twenty-fourth or twenty-sixth aspect, the target lower limit average is about 900°C, and the target upper limit average is about 950°C. As shown in the characteristic diagram in Fig. 30, by setting the target lower limit average at about 900°C and target upper limit average at about 950°C, the dioxin concentration and NOx concentration in exhaust gas can be effectively decreased.

(30) In a thirtieth aspect of the present invention, relating to the twenty-first aspect, the water spray amount and secondary combustion air quantity are controlled according to a fuzzy theory. At this time, the parameter for setting the antecedent condition for estimating the water spray amount and the shape of the antecedent membership function, and the parameter for setting the antecedent condition for estimating the secondary combustion air quantity and the shape of the antecedent membership function are different from each other. For example, usually, NOx and unburnt components are suppressed by adjusting the secondary combustion air quantity. If the furnace exit temperature is a large value exceeding the specified reference, the water spray amount is also adjusted in addition to the secondary combustion air quantity, so that elevation of NOx and furnace exit temperature is suppressed.

By thus limiting the adjustment (increase) of water spray amount, troubles occurring when water is sprayed can be avoided as far as possible. As known from the relation between the standard deviation of water spray amount and the boiler exit dioxin concentration shown in Fig. 31, the larger the fluctuation of the water spray amount, the higher becomes the dioxin concentration. Therefore, if a large amount of water is blown in so as to cool in the furnace and the spray amount is varied, all is not transformed to steam to cool in the furnace, and part of water deposits on the refuse. When the refuse containing water is fired, the combustion state is impaired, and dioxin, CO and other unburnt components are generated, but such troubles can be avoided by limiting the adjustment (increase) of water spray amount.

According to the present invention in (21) to (30), the furnace exit temperature is stabilized and the NOx concentration is controlled at a specified value, or the furnace exit temperature and $O_2$ concentration are stabilized and CO concentration and NOx concentration are controlled at specified values respectively. Accordingly, generation of NOx and unburnt components is suppressed, and generation of dioxins and other harmful components can be suppressed.

(31) In a thirty-first aspect of the present invention, chlorobenzenes and chlorophenols in exhaust gas, if their concentration is in low concentration region (50 ppm or less), have a correlative relation with concentration of dioxins, and are hence handled as precursors of dioxins, and they are hardly lost by removal of moisture in the pretreatment of exhaust gas and are hence used as useful substitute index substances, and therefore the secondary combustion air quantity is controlled by using control parameters in combustion control of refuse incinerator.

That is, it is a combustion control method of controlling the primary combustion air quantity so as to stabilize the steam generation amount generated from a boiler installed in the refuse incinerator, and controlling the secondary combustion air quantity for refiring, in which generation of NOx in exhaust gas is suppressed by controlling the secondary combustion air quantity by control parameters, that is, the steam generation amount, the secondary combustion air quantity, furnace exit temperature, and CO concentration, $O_2$ concentration and NOx concentration in exhaust gas, and the $O_2$ concentration for minimizing the concentration of precursors of dioxins is estimated from the mutual relation of the concentration of precursors of dioxins and $O_2$ concentration in the exhaust gas, and thereby the secondary combustion air quantity is adjusted, and generation of dioxins in exhaust gas is suppressed. Herein, the CO concentration and NOx concentration in exhaust gas in the incinerator are decreased, the concentration of precursors of dioxins in exhaust gas generated from the incinerator is detected, and the control parameters are corrected according to the $O_2$ concentration for minimizing the precursors of dioxins, and the secondary combustion air quantity is controlled.

(32) In a thirty-second aspect of the present invention, relating to the thirty-first aspect, the precursors of dioxins are chlorobenzenes and chlorophenols in exhaust gas, and from the mutual relation of the sum of these concentration values and $O_2$ concentration in exhaust gas, the $O_2$ concentration for minimizing the sum of the concentration of the chlorobenzenes and chlorophenols is estimated. Herein, by detecting the concentration of chlorobenzenes and chlorophenols which are precursors of dioxins in the exhaust gas generated from the incinerator, the secondary combustion air quantity is controlled while correcting the control parameters by the $O_2$ concentration for minimizing the concentration of the precursors of dioxins obtained from the mutual relation of the sum of their concentrations and $O_2$ concentration.

(33) In a thirty-third aspect of the present invention, relating to the thirty-first aspect, generation of NOx in exhaust gas is suppressed by calculating the secondary combustion air quantity by nonlinear control, the concentration of precursors of dioxins, that is, chlorobenzenes and chlorophenols is measured by exhaust gas analyzers of continuous or semicontinuous analyzers, the mutual relation of the sum of these concentrations and the $O_2$ concentration is calculated periodically by a function approximating method, the $O_2$ concentration for minimizing the concentration of chlorobenzenes and chlorophenols is calculated, the control parameter of $O_2$ concentration is sequentially corrected, and the secondary combustion air quantity is adjusted by executing the nonlinear control. Herein, by the nonlinear control using the control parameters on the basis of measurements from the measured values of concentrations of components in exhaust gas, evaporation, etc., the combustion state in the furnace is judged, and by calculating and adjusting the secondary combustion air quantity, generation of CO and NOx in exhaust gas is suppressed. In this nonlinear control, the concentration of chlorobenzenes and chlorophenols in exhaust gas is detected, and the $O_2$ concentration for minimizing the sum of these values is estimated and the control parameters of $O_2$ concentration are corrected sequentially to execute the nonlinear control, and therefore generation of dioxins is suppressed while coping with changes on concentrations of chlorobenzenes, chlorophenols and $O_2$.

(34) In a thirty-fourth aspect of the present invention, relating to the thirty-third aspect, the nonlinear control is fuzzy control. Herein, in combustion control of refuse incinerator in a multiple-variable interference system handling nonlinear characteristics, the control rules can be verbally described, adjustment of parameters is easy, and by applying the fuzzy control, the secondary combustion can be controlled finely.

(35) In a thirty-fifth aspect of the present invention, the combustion control apparatus of refuse incinerator comprises primary combustion control means for feeding primary combustion air into the refuse incinerator to burn the combustible in the furnace, and controlling to stabilize the boiler steam generation amount, secondary combustion air control means for feeding secondary combustion air into the refuse incinerator for refiring the unburnt component, $O_2$ concentration measuring means for detecting the $O_2$ concentration in exhaust gas, exhaust gas analyzing means for measuring the concentration of precursors of dioxins in exhaust gas, correlative curve estimating means for calculating the mutual relation between the concentration of precursors of dioxins detected by the exhaust gas analyzing means and the $O_2$ concentration detected by the $O_2$ concentration measuring means, and operating means for calculating the $O_2$ concentration for minimizing the sum of the concentration of precursors of dioxins from the mutual relation determined by the correlative curve estimating means, in which the secondary combustion air quantity is calculated by the secondary combustion control means by making use of control parameters on the basis of the $O_2$ concentration calculated by the operating means, and the secondary combustion air quantity is supplied into the furnace to suppress generation of dioxins in exhaust gas.

Herein, in the correlative curve estimating means, generation of dioxins is suppressed by calculating the $O_2$ concentration for minimizing the concentration of dioxins from the mutual relation of the concentration of precursors of dioxins and $O_2$ concentration, and correcting the control parameters for operating and processing the secondary combustion air control means on the basis of this value. Besides, by applying the method of successive least squares, expansion into continued fraction, spline approximation, Taylor series approximation, Lagrange interpolation or other methods in the operating means, the multiple-variable control can be automated.

(36) In a thirty-sixth aspect of the present invention, relating to a thirty-fifth aspect, the precursors of dioxins are chlorobenzenes and chlorophenols. Herein, if chlorobenzenes and chlorophenols are very low in concentration, they have a correlation with $O_2$ concentration, and hence by measuring the concentration of chlorobenzenes and chlorophenols, generation of dioxins can be suppressed by estimating the $O_2$ concentration for minimizing the concentration of dioxins.

(37) In a thirty-seventh aspect of the present invention, the combustion control apparatus of refuse incinerator comprises primary combustion air control means for feeding primary combustion air into the refuse incinerator to burn the combustible in the furnace, and controlling to stabilize the boiler steam generation amount, secondary combustion air control means for measuring periodically the boiler steam generation amount, secondary combustion air quantity, furnace exit temperature, and CO concentration, $O_2$ concentration and NOx concentration in exhaust gas analyzer, and controlling the secondary combustion air quantity on the basis of each measurement, a continuous or semicontinuous analyzer for measuring chlorobenzenes and chlorophenols in exhaust gas, correlative curve estimating means for determining the mutual relation on the basis of the sum of the measured chlorobenzenes and chlorophenols by the continuous or semicontinuous analyzer and the measurement of $O_2$ concentration, and operating means for calculating the $O_2$ concentration for minimizing the sum of the concentrations of chlorobenzenes and chlorophenols in exhaust gas from the mutual relation determined by the correlative curve estimating means, in which by sequentially correcting the control parameters for calculating the secondary combustion air on the basis of the $O_2$ concentration calculated by the operating means, the secondary combustion air quantity is calculated by the secondary combustion air control means, and the secondary combustion air quantity is supplied into the funace, thereby suppressing generation of dioxins in exhaust gas. Herein, by limiting the primary combustion air quantity, stable combustion is maintained, and by the secondary combustion control means, NOx concentration and generation of dioxins are suppressed. Moreover, by applying the method of successive least squares, expansion into continued fraction, spline approximation, Taylor series approximation, Lagrange interpolation or other methods in the operating means, the multiple-variable control can be automated.

(38) In a thirty-eighth aspect of the present invention, relating to the thirty-fifth, thirty-sixth or thirty-seventh aspect, the secondary combustion control means is fuzzy control means. Herein, in combustion control of refuse incinerator in a multiple-variable interference system accompanied by nonlinear characteristics, the control rules can be verbally described, adjustment of parameters is easy, and by applying the fuzzy control means, the secondary combustion control amount can be controlled finely.

According to the present invention in (31) to (38), generation of harmful substances in exhaust gas, CO, NOx and dioxins, can be suppressed at the same time.

BRIEF DESCRIPTION OF THE DRAWINGS

Fig. 1 is a conceptual diagram of a refuse incinerator and its control system in embodiment 1 of the present invention.

Fig. 2 is a graph showing changes of both for explaining the relation between main flue temperature and CO concentration in exhaust gas.

Fig. 3 is a graph of changes of both for explaining the relation between post-incineration air quantity and CO concentration in exhaust gas.

Fig. 4 is a graph showing changes of main flue temperature and CO concentration in exhaust gas according to the present invention.

Fig. 5 is a graph showing changes of main flue temperature and CO concentration in exhaust gas according to a conventional control method.

Fig. 6 is a conceptual diagram of a refuse incinerator and its control system in embodiment 2 of the present invention.

Fig. 7 is a characteristic diagram showing the relation of NOx concentration and air spray amount into furnace chamber.

Fig. 8 is a characteristic diagram showing the relation of NOx concentration, CO concentration, and furnace exit temperature.

Fig. 9 is a characteristic diagram showing time-course changes of furnace exit temperature and CO concentration.

Fig. 10 is a flowchart showing a first method of water spray amount control.

Fig. 11 is a diagram showing an antecedent membership function used in a second method of water spray amount control.

Fig. 12 is a flowchart showing a third method of water spray amount control.

Fig. 13 is a diagram showing an antecedent membership function used in the third method of water spray amount control.

Fig. 14 is a characteristic diagram showing changes of CO concentration and NOx concentration in embodiment 2 of the present invention and in a conventional control method.

Fig. 15 is a characteristic diagram showing the relation of furnace exit temperature and $O_2$ concentration.

Fig. 16 is a flowchart showing a fifth method of water spray amount control.

Fig. 17 is a diagram showing an antecedent membership function used in a sixth method of water spray amount control.

Fig. 18 is a flowchart showing a seventh method of water spray amount control.

Fig. 19 is a diagram showing an antecedent membership function used in an eighth method of water spray amount control.

Fig. 20 is a conceptual diagram of a refuse incinerator and its control system in embodiment 3 of the present invention.

Fig. 21 is a characteristic diagram showing the relation of secondary combustion air quantity, CO concentration, NOx concentration, and furnace exit temperature.

Fig. 22 is a characteristic diagram showing the relation of water spray amount and furnace exit temperature.

Fig. 23 is a characteristic diagram showing time-course changes of furnace exit temperature, CO concentration, and NOx concentration, and time-course changes of the control amount of water spray amount and secondary combustion air quantity at this time.

Fig. 24 is a characteristic diagram showing time-course changes of furnace exit temperature, CO concentration, and NOx concentration, and time-course changes of the control amount of water spray amount and secondary combustion air quantity at this time in embodiment 3 of the present invention.

Fig. 25 is a characteristic diagram showing the relation of time rate of occurrence of CO concentration exceeding 30 ppm during DXN measurement and DXN concentration at bag filter inlet.

Fig. 26 is a characteristic diagram showing the relation of minimum of furnace exit temperature during DXN measurement and DXN concentration at bag filter inlet.

Fig. 27 is a diagram showing an antecedent membership function of water spray amount in embodiment 3 of the present invention.

Fig. 28 is a diagram showing an antecedent membership function of secondary combustion air quantity in embodiment 3 of the present invention.

Fig. 29 is a characteristic diagram showing changes of CO concentration and NOx concentration in embodiment 3 of the present invention and in a conventional control method.

Fig. 30 is a characteristic diagram showing the relation of furnace exit temperature, bag filter inlet DXN concentration and NOx concentration.

Fig. 31 is a characteristic diagram showing the relation of standard deviation of water spray amount and boiler exit DXN concentration.

Fig. 32 is a conceptual diagram of a refuse incinerator and its combustion control device in embodiment 4 of the present invention.

Fig. 33 is a conceptual diagram of a refuse incinerator and its combustion control device by partially modifying the combustion control device in Fig. 32.

Fig. 34 is a diagram showing a correlative relation of secondary combustion air quantity, CO concentration and NOx concentration in exhaust gas, and furnace exit temperature.

Fig. 35 is a diagram showing a correlative relation of sum of concentrations of chlorobenzenes and chlorophenols and CO concentration in terms of $O_2$ concentration.

Fig. 36 is a flowchart for controlling secondary combustion air quantity by a nonlinear control method.

Fig. 37 is a flowchart for controlling secondary combustion air quantity by a nonlinear control method.

Fig. 38 is a flowchart for controlling secondary combustion air quantity by a nonlinear control method.

Fig. 39 is a flowchart for controlling secondary combustion air quantity by a nonlinear control method.

Fig. 40 is a diagram showing an antecedent membership function in a fuzzy control method of secondary combustion air quantity.

Fig. 41 is a diagram showing an antecedent membership function in a fuzzy control method of secondary combustion air quantity.

Fig. 42 is a diagram summing up chlorobenzenes and chlorophenols in terms of $O_2$ concentration.

Fig. 43 is a conceptual diagram showing a conventional incinerator.


BEST MODE OF CARRYING OUT THE INVENTION

Referring now to the drawings, preferred embodiments of the present invention are described in detail below.


Embodiment 1

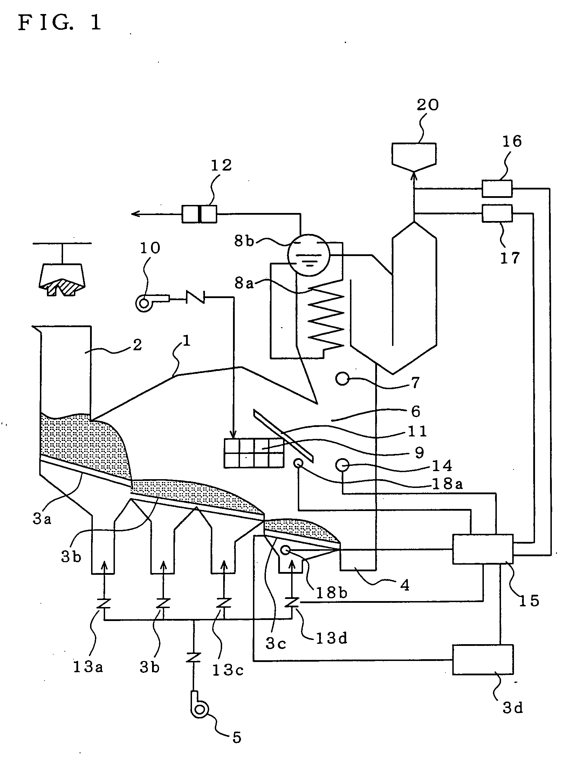

Fig. 1 is a conceptual diagram of a refuse incinerator and its control system. Reference numeral 1 is an incinerator, and refuse charged from a refuse inlet 2 is sent in the sequence of a precombustion grate 3a, a combustion grate 3b, and a post-incineration grate 3c, and is burned into ashes and discharged from a chute 4. Each grate is driven by an individual grate drive device, and sends forward the refuse at a prescribed speed. For the sake of convenience, herein, only a grate drive device 3d for the post-incineration grate 3c is shown.

Beneath each grate, primary air for drying or combustion supplied from a primary air fan 5 is sent in. On the precombustion grate 3a, the refuse is mainly dried, on the combustion grate 3b, the refuse is burned, and on the pre-incineration grate 3c, it is completely burned to be ash. The ash drops from the chute 4, and is discharged from the furnace. The primary air is distributed in an air damper 13 a beneath the precombustion grate for adjusting the air quantity of precombustion grate, an air damper 13b beneath the compression grate for adjusting the air quantity before the combustion grate, an air damper 13c beneath the combustion grate for adjusting the air quantity after the combustion grate, and an air damper 13d beneath the post-incineration grate for adjusting the air quantity of the post-incineration grate.

On the other hand, above the combustion zone, secondary air supplied from a secondary air fan 10 is blown in from a suction port 9, and unburnt components are oxidized, and overheating of furnace is prevented. In order that the secondary air may be mixed well with the combustion gas without escaping directly from the furnace exit, an inclined partition wall 11 is provided above the suction port 9. The forward passage of the partition wall 11 is a subsidiary flue, and the backward passage is a principal flue. The combustion gas passing through both flues is mixed again in a mixing chamber 6 above the partition wall 11.

The gas leaving the mixing chamber 6 passes through a heat exchanger 8a installed at the furnace exit, and is exhausted after energy is recovered. Reference numeral 7 is a furnace exit thermometer, 8b is a boiler, 12 is a flowmeter for measuring the steam amount, 14 is a principal flue thermometer, 16 is an exhaust gas $O_2$ densitometer, 17 is an exhaust gas CO densitometer, 18a is a furnace internal pressure gauge, and 18b is a pressure gauge beneath the post-incineration grate.

Reference numeral 15 is a control device, which receives signals from the principal flue thermometer 14, exhaust gas $O_2$ densitometer 16, exhaust gas CO densitometer 17, furnace internal pressure gauge 18a, and pressure gauge 18b beneath the post-incineration grate, and issues control value signals to the air damper 13d beneath the post-incineration grate and the grate drive device 3d. In the control device 15, for example, a computer is used.

On the basis of the input signal in the control device 15, the control value is calculated periodically. The move of refuse on the grate is slow, and it takes scores of minutes to pass through the post-incineration grate, and hence it is appropriate to calculate in a period of scores of seconds to several minutes. The control value is calculated as follows.

First, control of the post-incineration air quantity is explained.

When controlling the post-incineration air quantity on the basis of the main flue temperature, supposing the reference temperature of the principal flue to be $T_{set}$ and the present measurement to be T, the control value $F_n$ of the post-incineration is calculated in formula (1).

$$F_n = F_{n-1} + k_T (T - T_{set}) \tag{1}$$

where $F_{n-1}$ is a previous control value, and KT is a control parameter about main flue temperature, which is positive.

When controlling the post-incineration air quantity on the basis of the main flue temperature and $O_2$ concentration in exhaust gas, supposing the reference of $O_2$ concentration in exhaust gas to be $[O_2]_{set}$ and the present measurement to be $[O_2]$, the control value $F_n$ of the post-incineration air quantity is calculated in formula (2).

$$F_n = F_{n-1} + k_T (T - T_{set}) + k_{O_2} ([O_2] - [O_2]_{set}) \tag{2}$$

where $k_{o_2}$ is a control parameter about $O_2$ concentration in exhaust gas, which is negative when the measurement T of main flue temperature is smaller than reference temperature $T_{set}$ and the measurement $[O_2]$ of $O_2$ concentration in exhaust gas is larger than the reference $[O_2]_{set}$, or when the measurement T of the main flue temperature is larger than the reference temperature value $T_{set}$ and the measurement $[O_2]$ of the $O_2$ concentration in exhaust gas is smaller than the reference $[O_2]_{set}$, and is zero otherwise.

When controlling the post-incineration air quantity on the basis of the main flue temperature and CO concentration in exhaust gas, supposing the reference value of the CO concentration in exhaust gas to be $[CO]_{set}$ and the present measurement to be $[CO]_{set}$, the control value $F_n$ of the post-incineration air quantity is calculated in formula (3).

$$F_n = F_{n-1} + k_T (T - T_{set}) + k_{CO} ([CO] - [CO]_{set}) \tag{3}$$

where $k_{co}$ is a control parameter about CO concentration in exhaust gas, which is negative when the measurement T of main flue temperature is smaller than reference temperature $T_{set}$ and the measurement $[CO]$ of CO concentration in exhaust gas is larger than the reference $[CO]_{set}$, positive when the measurement T of the main flue temperature is larger than the reference temperature value $T_{set}$ and the measurement $[CO]$ of the CO concentration in exhaust gas is larger than the reference $[CO]_{set}$, and is zero otherwise.

Next is explained a case of controlling the post-incineration grate speed together with the post-incineration air quantity.

When controlling the post-incineration air quantity on the basis of the main flue temperature, and controlling the post-incineration grate speed on the basis of the pressure difference, the control value $F_n$ of the post-incineration air quantity is determined in formula (1), and the control value $G_n$ of the post-incineration grate speed is calculated in formula (3), supposing the pressure difference to be $\Delta P$ and reference difference to be $\Delta P_{set}$.

$$G_n = G_{n-1} + h_p (\Delta P - \Delta P_{set}) \tag{4}$$

where $G_{n-1}$ is a previous control value, and $h_p$ is a control parameter about pressure difference, which is negative.

When controlling the post-incineration air quantity on the basis of the main flue temperature and $O_2$ concentration in exhaust gas, and controlling the post-incineration grate speed on the basis of the pressure difference, the control value $F_n$ of the post-incineration air quantity is determined in formula (2), and the control value $G_n$ of the post-incineration grate speed is calculated in formula (4).

When controlling the post-incineration air quantity on the basis of the main flue temperature and CO concentration in exhaust gas, and controlling the post-incineration grate speed on the basis of the pressure difference, the control value $F_n$ of the post-incineration air quantity is determined in formula (3), and the control value $G_n$ of the post-incineration grate speed is calculated in formula (4).

It is also possible to control the post-incineration air quantity by measuring the main flue temperature or the main flue temperature and the concentration of components in exhaust gas, without determining the pressure difference, and also to control the post-incineration grate speed. For example, a case of controlling on the basis of the main flue temperature and CO concentration in exhaust gas is explained below.

The control value $F_n$ of post-incineration air quantity is determined in formula (3), and the control value $G_n$ of post-incineration grate speed is determined in formula (5).

$$G_n = G_{n-1} + h_T (T - T_{set}) + h_{CO} ([CO] - [CO]_{set}) \tag{5}$$

where $h_T$ is a control parameter about the main flue temperature, which is negative, and $h_{co}$ is a parameter about CO concentration in exhaust gas, which is positive when the measurement T of main flue temperature is smaller than reference $T_{set}$ and the measurement [CO] of CO concentration in exhaust gas is larger than the reference $[CO]_{set}$, negative when the measurement T of the main flue temperature is larger than the reference temperature $T_{set}$ and the measurement [CO] of the CO concentration in exhaust gas is larger than the reference $[CO]_{set}$, and is zero otherwise.

In the above calculations, if there is a margin in reference values of main flue temperature, $O_2$ concentration in exhaust gas, CO concentration in exhaust gas, pressure difference and others, the upper limit or lower limit may be used as the reference value, and when the measured value is in the limit range, the difference between the measured value and reference value may be calculated as zero.

Aside from the above calculations, in addition to the measurement of main flue temperature, and $O_2$ concentration or CO concentration in exhaust gas, the $O_2$ concentration in exhaust gas may be measured simultaneously with the CO concentration, and these items may be added in calculation.

As for measured values, by measuring the secondary air quantity or primary air quantity beneath each grate, fluctuations of these air quantity may be detected, and the $O_2$ concentration and CO concentration may be corrected and applied.

Further, it may be also combined with other control method, and for example, the control method of the present invention may be combined with a method of measuring the furnace exit temperature or generated steam amount and controlling the secondary air quantity in order to keep them constant.

Below is shown the result of investigating the CO concentration in the exhaust gas by measuring the main flue temperature and controlling the post-incineration air quantity in the control system shown in Fig. 1.

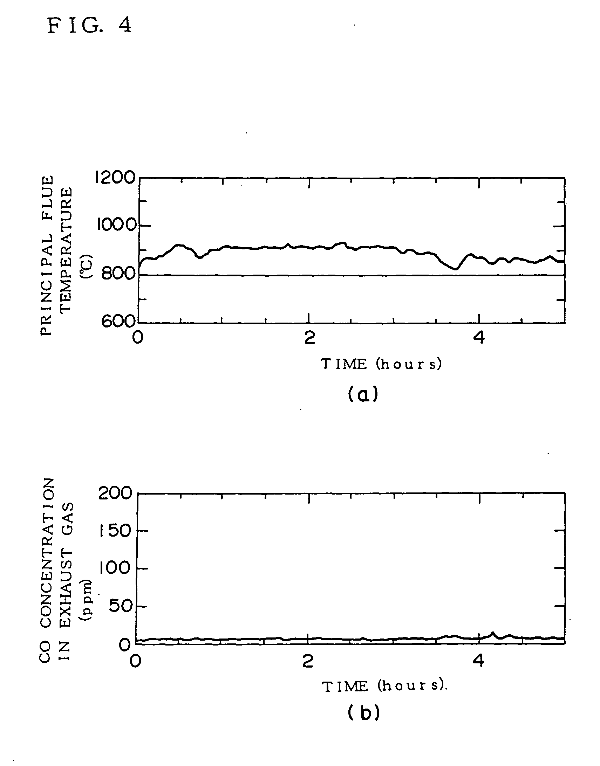

The reference value $T_{set}$ of the main flue temperature was 850°C, and the operating period of control value was 1 minute. The result is shown in Fig. 4 together with the measured values of the main flue temperature. In Fig. 4, (a) shows changes of main flue temperature, and (b) records the CO concentration in exhaust gas measured at the same time.

The measurement lasted for 5 hours, but, on the post-incineration grate, since the combustion was controlled by control of post-incineration air quantity, the main flue temperature was controlled in a range of 820°C to 930°C, and the CO concentration in exhaust gas was suppressed under 20 ppm.

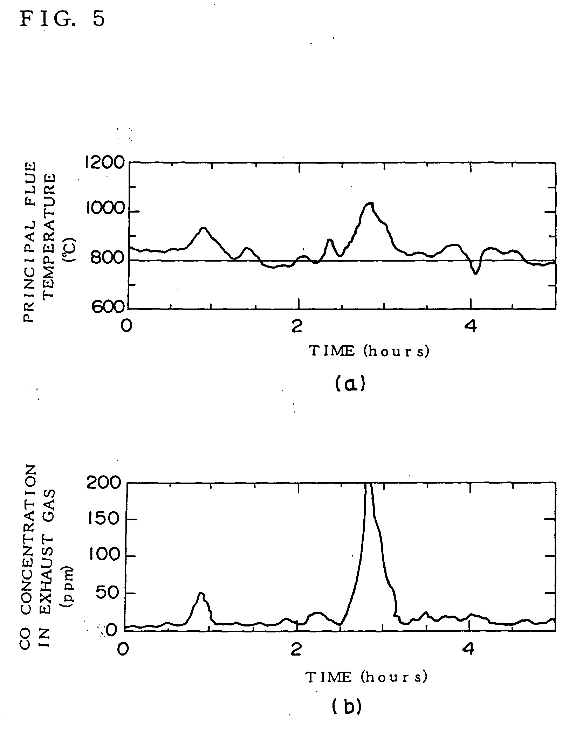

This result is compared with the result of complete combustion control mainly by adjustment of secondary air quantity. Fig. 5 shows the conventional result corresponding to Fig. 4. According to the comparison, in the conventional control method, the main flue temperature varies in a range of 750°C to 1050°C, and when the main flue temperature is high, the CO concentration in the exhaust gas is over 200 ppm.

Incidentally, when a state of air insufficiency occurs in the post-incineration grate, generation of unburnt gas is also notable in the preceding grate. This unburnt gas is guided into the mixing chamber through the subsidiary flue, and at the same time the post-incineration air added according to the present invention is simultaneously guided from the principal flue into the mixing chamber in high temperature state, and herein it contributes to combustion of unburnt components contained in the subsidiary flue gas. Hence, for combustion of unburnt gas, the increment of the secondary air can be subtracted by the corresponding amount, so that the energy loss due to cooling effect not requiring secondary air blown in at ordinary temperature can be decreased.

Embodiment 2

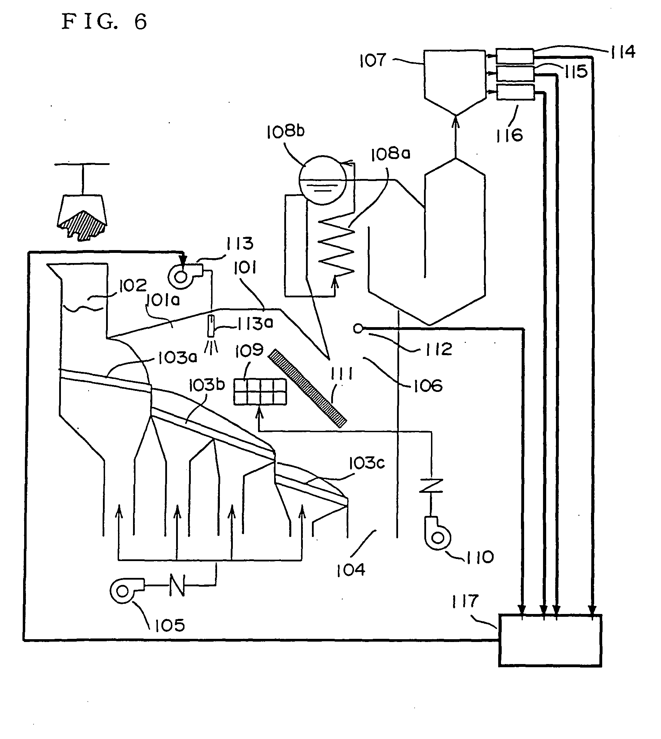

Fig. 6 is a conceptual diagram of a refuse incinerator for controlling NOx and unburnt components in exhaust gas in a refuse incinerator and its control system. Above a refuse incinerator 101, a dust inlet (hopper) 102 is provided, and the refuse charged through the refuse inlet 102 is sent sequentially into a precombustion grate 103a, a combustion grate 103b, and a post-incineration grate 103c installed in a combustion chamber 101a. Beneath the grates 103a, 103b, 103c, primary combustion air for drying or firing supplied from a primary combustion air fan 105 is sent in. On the precombustion grate 103a, the refuse is mainly dried, on the combustion grate 103b, the refuse is burned, and on the pre-incineration grate 103c, it is completely burned to be ash. The ash drops from a chute 104, and is discharged from the furnace.

On the other hand, above the combustion zone (corresponding to 103b and 103c), secondary combustion air supplied from a secondary combustion air fan 110 is blown in from a secondary combustion air blow port 109, and the unburnt components are oxidized and overheating of furnace is prevented. In order to mix the combustion exhaust gas sufficiently with water spray and secondary combustion air, without directly escaping through the furnace exit, an inclined partition wall 111 is provided above the blow port 109. The forward passage of the partition wall 111 is a subsidiary flue, and the backward passage is a principal flue. The combustion exhaust gas passing through both flues is mixed again at the furnace exit 106 above the partition wall 111. Similarly, above the combustion zone, water is blown in through a water spray nozzle 113a supplied from a water spray amount regulator 113. Leaving the furnace exit 106, the combustion exhaust gas is guided into a stack 107 from the furnace exit and is discharged out of the furnace. At this time, the high temperature combustion exhaust gas heats the heat exchanger 108a, and boils water in the boiler 108b, and this steam is used in heat supply, power generation, etc.

This refuse incinerator comprises water spray amount control means 117, and this control means 117 receives signals of a furnace exit thermometer 112, an exhaust gas $O_2$ densitometer 114, an exhaust gas NOx densitometer 115, and an exhaust gas CO densitometer 116, generates control signals by operating specified calculation, and issues to the water spray amount regulator 113. In the control means 117, for example, a computer is used. Control values on the basis of the input signals are calculated periodically in the control means 117. Fluctuations the furnace exit temperature and exhaust gas components due to changes in the water spray amount are in a range of scores of seconds to several minutes, and hence it is appropriate to calculate in a period of scores of seconds to several minutes.

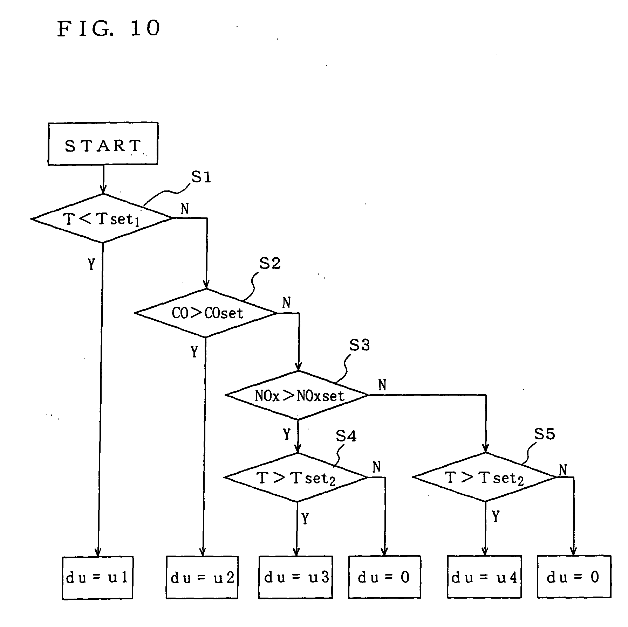

A first method for controlling the water spray amount on the basis of the measured values of furnace exit temperature, CO concentration and NOx concentration for controlling the NOx and unburnt components in the exhaust gas in the refuse incinerator is explained in Table 1 and Fig. 10, relating to a case of increase and decrease control by conditions. Table 1 is a table showing the concept of control method of water spray amount. As shown in Table 1, the water spray amount is calculated in the sequence of conditions (1) to (4), and when the conditions of (1) to (4) are satisfied, the control indicated by arrow (→) is executed. However, if all of conditions of (1) to (4) are not satisfied, the present water spray amount is maintained. A specific value for increasing or decreasing the water spray amount (the increment or decrement per period) can be set individually.

Table 1

| Control method of water spray amount | | |
|---|---|---|
| (1) | When furnace exit temperature is low<br>→ decrease water spray amount by a specific amount. | $(S_1)$ |
| (2) | When CO concentration is high<br>→ decrease water spray amount by a specific amount. | $(S_2)$ |
| (3) | When NOx concentration is high $(S_3)$ and furnace exit temperature is also high<br>→ increase water spray amount by a specific amount. | $(S_4)$ |
| (4) | When furnace exit temperature is high<br>→ increase water spray amount by a specific amount. | $(S_5)$ |

A specific calculating method of control values is described according to a flowchart in Fig. 10 which is a graphic expression of Table 1. Starting control from (start) point, judging if the control condition is satisfied or not, the final value of water spray adjusting amount du is determined. From this water spray adjusting amount du and previous value ($u_{k-1}$) of water spray output value, the present value ($u_k$) of water spray output value is calculated.

$$u_k = u_{k-1} + du \tag{11}$$

In Fig. 10, T denotes the measured value of furnace exit temperature, CO is the measured value of CO concentration, and NOx is the measured value of NOx concentration. Moreover, $T_{set1}$ is an adjustment parameter for judging if the furnace exit temperature is less than a specific value or not, $CO_{set}$ is an adjustment parameter for judging if the CO concentration is over a specific value or not, $NOx_{set}$ is an adjustment parameter for judging if the NOx concentration is over a specific value or not, $T_{set2}$ is an adjustment parameter for judging if the furnace exit temperature is over a specific value or not, and u1 to u4 are adjustment parameters for giving the increment or decrement of water spray amount.

In Fig. 10, first, at step $S_1$, the furnace exit temperature (T) is judged by the control condition ($T < T_{set1}$), and when the control condition ($T < T_{set1}$) is satisfied, the adjustment amount du is set at adjustment parameter $u_1$, and when the control condition ($T < T_{set1}$) is not satisfied, the process advances to step $S_2$. At step $S_2$, the CO concentration (CO) is judged by the control condition ($CO > CO_{set}$), and when the control condition ($CO > CO_{set}$) is satisfied, the adjustment amount du is set at adjustment parameter $u_2$, and when the control condition ($CO > CO_{set}$) is not satisfied, the process advances to step $S_3$. At step S3, the NOx concentration (NOx) is judged by the control condition ($NOx > NOx_{set}$), and when the control condition ($NOx > NOx_{set}$) is satisfied, the process advances to step $S_4$, and when the control condition ($NOx > NOx_{set}$) is not satisfied, the process advances to step $S_5$. At step $S_4$, the furnace exit temperature (T) is judged by the control condition ($T > T_{set2}$), and when the control condition ($T > T_{set2}$) is satisfied, the adjustment amount du is set at adjustment parameter $u_3$, and when the control condition ($T > T_{set2}$) is not satisfied, the adjustment amount du is set at adjustment parameter 0. At step $S_5$, the furnace exit temperature (T) is judged by the control condition ($T > T_{set2}$), and when the control condition ($T > T_{set2}$) is satisfied, the adjustment amount du is set at adjustment parameter $u_4$, and when the control condition ($T > T_{set2}$) is not satisfied, the adjustment amount du is set at adjustment parameter 0.

In this way, the value of the water spray adjustment amount du calculated according to the process in the flowchart in Fig. 10 is put in formula (11), and the water spray amount output value ($u_K$) is calculated, and the opening degree of the flow rate regulating mechanism is adjusted according to the water spray amount output value ($u_K$).

According to a second method, a control method of water spray amount is described below. Herein, in the control means 117 in Fig. 6, this is to explain execution of control of water spray amount on the basis of measured values of furnace exit temperature, CO concentration and NOx concentration by fuzzy control. Table 2 is a table showing fuzzy rules about execution of flow rate control by fuzzy control, and Table 3 summarizes rules (1) to (6) in Table 2.

Table 2

| Fuzzy control method of water spray amount | |
|---|---|
| (1) | When furnace exit temperature is low → decrease water spray amount. |
| (2) | When CO concentration is high → decrease water spray amount. |
| (3) | When furnace exit temperature is adequate → maintain present water spray amount. |
| (4) | When NOx concentration is adequate → maintain present water spray amount. |
| (5) | When furnace exit temperature is high → increase water spray amount. |
| (6) | When furnace exit temperature is high and NOx concentration is also high → increase water spray amount. |

Table 3

| Rule | | Antecedent (input) | | | Consequen t (output) |
|---|---|---|---|---|---|
| No | Goodness of fit | Furnace exit temperature | CO concentration | NOx concentration | ΔWater spray amount |
| (1) | $X_1$ | Low ($a_1$) | | | Decrease ($y_1$) |
| (2) | $X_2$ | | High ($b_2$) | | Decrease ($y_2$) |
| (3) | $X_3$ | Adequate ($a_2$) | | | Maintain present level ($y_3$) |
| (4) | $X_4$ | | | Adequate ($C_1$) | Maintain present level ($y_4$) |
| (5) | $X_5$ | High ($a_3$) | | | Increase (y5) |
| (6) | $X_6$ | High ($a_3$) | | High ($C_2$) | Increase $_{(y6)}$ |

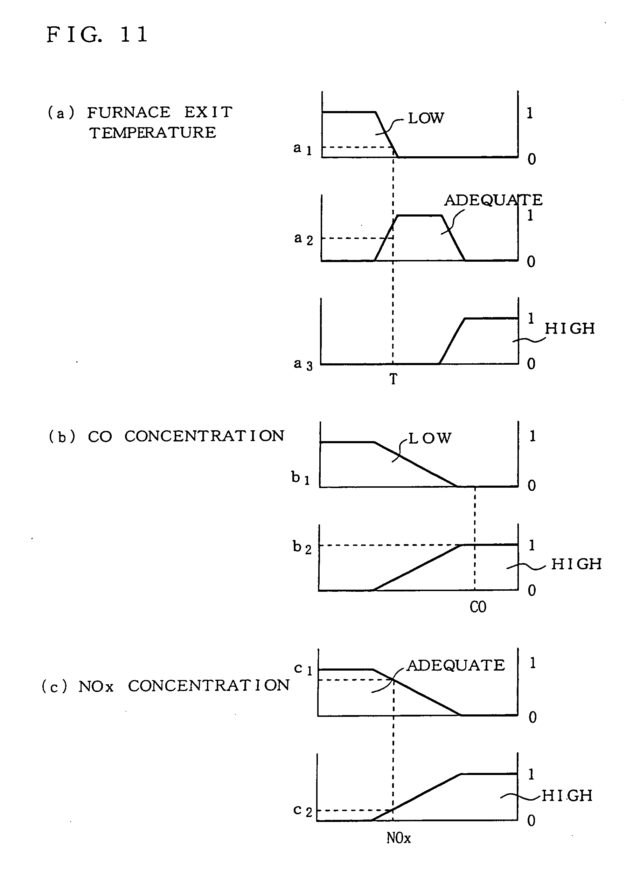

In Table 3, the antecedent (input) is the furnace exit temperature, CO concentration and NOx concentration, and the consequent (output) is the increment or decrement of water spray amount. Operation of each rule is based on the membership function shown in Fig 11. Operation of furnace exit temperature is based on the function shown in Fig. 11 (a), operation of CO concentration in Fig. 11 (b), and operation of NOx concentration in Fig. 11 (c). By the sum of operation results of rules (1) to (6) in Table 2, the increment or decrement of water spray amount is calculated. If the condition is not satisfied, however, its output is calculated as zero.

In the water spray amount control means 117 in Fig. 6, integrating the consequent reasoning results of rules determined in the above operations, the reasoning result of the entire rules is issued. For integration of consequent reasoning results of rules, a general fuzzy operation technique is used, such as mini-max center of gravity method or product-sum center of gravity method. The reasoning result obtained in the water spray amount control means 117 is issued to the flow rate regulating mechanism, and the water spray amount is adjusted.

As a specific fuzzy control application mode, a singleton method small in quantity of calculation and suited to control is explained below by referring to Fig. 11. First, the goodness of fit is calculated by the antecedent membership function. Fig. 11 (a) shows the antecedent membership function of the furnace exit temperature, and when the measured value of furnace exit temperature is T, the goodness of fit for the condition of "furnace exit temperature is low" is $a_1$. For the condition of "furnace exit temperature is adequate," the goodness of fit is $a_2$. For the condition of "furnace exit temperature is high," the goodness of fit is $a_3$.

Fig. 11 (b) shows the antecedent membership function of CO concentration, and when the measured value of CO is CO, the goodness of fit for the condition of "CO concentration is low" is $b_1$. For the condition of "CO concentration is high," the goodness of fit is $b_2$.

Fig. 11 (c) shows the antecedent membership function of NOx concentration, and when the measured value of NOx is NOx, the goodness of fit for the condition of "NOx concentration is adequate" is $c_1$. For the condition of "NOx concentration is high," the goodness of fit is $c_2$.

From these antecedent membership functions, the goodness of fit $X_1$ for rule (1) in Table 3 is calculated in formula (12). Rule (1) is "furnace exit temperature is low," and hence it is the goodness of fit $X_1$ ($= a_1$). Similarly, the goodness of fit $X_2$ ($= b_2$) of rule (2) is formula (13), the goodness of fit $X_3$ ($= a_2$) of rule (3) is formula (14), the goodness of fit $X_4$ ($= c_1$) of rule (4) is formula (15), and the goodness of fit $X_5$ ($= a_3$) of rule (5) is formula (16). Since the goodness of fit $X_6$ of rule (6) is "furnace exit temperature is high and NOx concentration is also high," it is $a_3 \times c_2$ as shown in formula (17).

$$\text{Goodness of fit of rule (1)} \qquad X_1 = a_1 \qquad\qquad (12)$$

$$\text{Goodness of fit of rule (2)} \qquad X_2 = b_2 \qquad\qquad (13)$$

$$\text{Goodness of fit of rule (3)} \qquad X_3 = a_2 \qquad\qquad (14)$$

$$\text{Goodness of fit of rule (4)} \qquad X_4 = c_1 \qquad\qquad (15)$$

$$\text{Goodness of fit of rule (5)} \qquad X_5 = a_3 \qquad\qquad (16)$$

$$\text{Goodness of fit of rule (6)} \qquad X_6 = a_3 \times c_2 \qquad\qquad (17)$$

Next, for reasoning the consequent, water spray amount changes $y_1$ to $y_6$ are determined. By reasoning according to formula (18), the reasoning result z is obtained.

$$Z = \frac{\sum\limits_{i=1}^{6} X_i \times y_i}{\sum\limits_{i=1}^{6} X_i} \qquad\qquad (18)$$

From the reasoning result z according to formula (18) and the preceding value ($u_{k-1}$) of the water spray amount output value, the present value ($u_k$) of water spray amount output is obtained.

$$U_k = u_{k-1} + z \qquad\qquad (19)$$

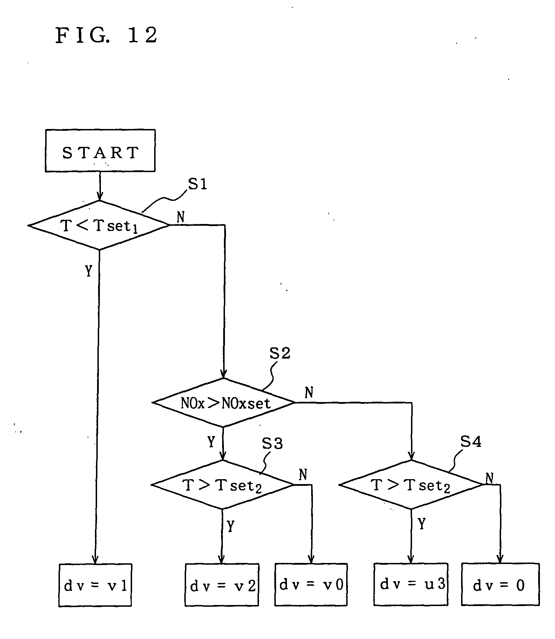

Next, according to a third method, a control method of water spray amount is described. Herein, in the spray amount control means 117 in Fig. 6, a control method of water spray amount on the basis of the measured values of furnace exit temperature and NOx concentration is explained in the case of increment and decrement control by condition by condition by referring to Table 4 and Fig. 12. In this method, in relation to the first method, rule (2) in Table 1 is omitted.

Table 4 is a table showing the concept of control method of water spray amount. As shown in Table 4, the water spray amount is calculated in the sequence of conditions (1) to (3), and when the conditions of (1) to (3) are satisfied, the control indicated by arrow ($\rightarrow$) is executed. However, if all of conditions of (1) to (3) are not satisfied, the present water spray amount is maintained. A specific value for increasing or decreasing the water spray amount (the increment or decrement per period) can be set individually.

Table 4

| | Control method of water spray amount |
|---|---|
| (1) | When furnace exit temperature is low ($S_1$)<br>→ decrease water spray amount by a specific amount. |
| (2) | When NOx concentration is high ($S_2$) and furnace exit temperature is also high ($S_3$)<br>→ increase water spray amount by a specific amount. |
| (3) | When furnace exit temperature is high ($S_4$)<br>→ increase water spray amount by a specific amount. |

A specific calculating method of control values is described according to a flowchart in Fig. 12 which is a graphic expression of Table 4. Starting control from (start) point, judging if the control condition is satisfied or not, the final value of water spray adjusting amount dv is determined. From this water spray adjusting amount dv and previous value ($v_{k-1}$) of water spray output value, the present value ($v_k$) of water spray output value is calculated.

$$v_k = v_{k-1} + dv \qquad (20)$$

In Fig. 12, T denotes the measured value of furnace exit temperature, and NOx is the measured value of NOx concentration. Moreover, $T_{set1}$ in Fig. 12 is an adjustment parameter for judging if the furnace exit temperature is less than a specific value or not, $CO_{set}$ is an adjustment parameter for judging if the CO concentration is over a specific value or not, $NOx_{set}$ is an adjustment parameter for judging if the NOx concentration is over a specific value or not, $T_{set2}$ is an adjustment parameter for judging if the furnace exit temperature is over a specific value or not, and v1 to v3 are adjustment parameters for giving the increment or decrement of water spray amount.

In Fig. 12, first, at step $S_1$, the furnace exit temperature (T) is judged by the control condition ($T < T_{set1}$), and when the control condition ($T < T_{set1}$) is satisfied, the adjustment amount dv is set at adjustment parameter $v_1$, and when the control condition ($T < T_{set1}$) is not satisfied, the process advances to step $S_2$. At step $S_2$, the NOx concentration (NOx) is judged by the control condition (NOx > $NOx_{set}$), and when the control condition (NOx > $NOx_{set}$) is satisfied, the process advances to step S3, and when the control condition (NOx > $NOx_{set}$) is not satisfied, the process advances to step $S_4$. At step $S_3$, the furnace exit temperature (T) is judged by the control condition ($T > T_{set2}$), and when the control condition ($T > T_{set2}$) is satisfied, the adjustment amount dv is set at adjustment parameter $v_2$, and when the control condition ($T > T_{set2}$) is not satisfied, the adjustment amount dv is set at adjustment parameter 0. At step $S_4$, the furnace exit temperature (T) is judged by the control condition ($T > T_{set2}$), and when the control condition ($T > T_{set2}$) is satisfied, the adjustment amount dv is set at adjustment parameter $v_3$, and when the control condition ($T > T_{set2}$) is not satisfied, the adjustment amount dv is set at adjustment parameter 0.

In this way, the value of the water spray adjustment amount dv calculated according to the process in the flowchart in Fig. 12 is put in formula (20), and the water spray amount output value ($v_k$) is calculated, and the opening degree of the flow rate regulating mechanism is adjusted according to the water spray amount output value ($v_k$).

According to a fourth method, a control method of water spray amount is described below. Herein, in the control means 117 in Fig. 6, this is to explain execution of control of water spray amount on the basis of measured values of furnace exit temperature and NOx concentration by fuzzy control. Herein, in relation to the second method, rule (2) in Table 2 is omitted.

Table 5 is a table showing fuzzy rules about execution of flow rate control by fuzzy control, and Table 6 summarizes rules (1) to (5) in Table 5.

Table 5

| | Fuzzy control method of water spray amount |
|---|---|
| (1) | When furnace exit temperature is low<br>→ decrease water spray amount. |
| (2) | When furnace exit temperature is adequate<br>→ maintain present water spray amount. |
| (3) | When NOx concentration is adequate<br>→ maintain present water spray amount. |

Table 5   (continued)

| Fuzzy control method of water spray amount | |
|---|---|
| (4) | When furnace exit temperature is high → increase water spray amount. |
| (5) | When furnace exit temperature is high and NOx concentration is also high → increase water spray amount. |

Table 6

| | Rule | Antecedent (input) | | Consequent (output) |
|---|---|---|---|---|
| No | Goodness of fit | Furnace exit temperature | NOx concentration | ΔWater spray amount |
| (1) | $X_1$ | Low ($a_1$) | | Decrease ($y_1$) |
| (2) | $X_2$ | Adequate ($a_2$) | | Maintain present level ($y_2$) |
| (3) | $X_3$ | | Adequate ($b_1$) | Maintain present level ($y_3$) |
| (4) | $X_4$ | High ($a_3$) | | Increase ($y_4$) |
| (5) | $X_5$ | High ($a_3$) | High ($b_2$) | Increase ($y_5$) |

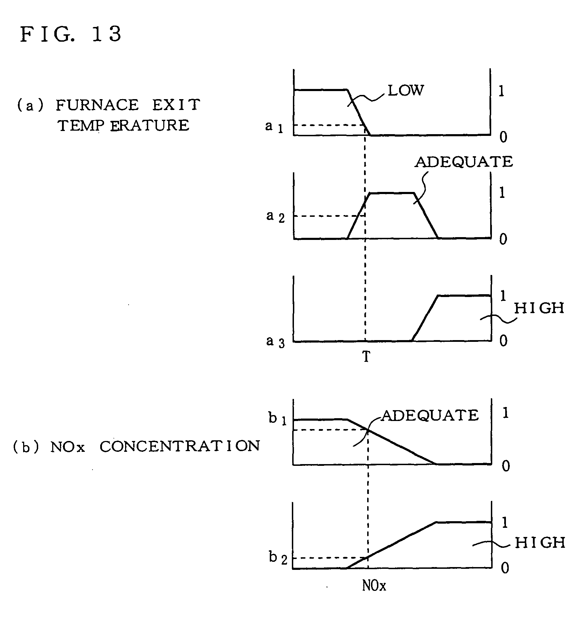

In Table 6, the antecedent (input) is the furnace exit temperature and NOx concentration, and the consequent (output) is the increment or decrement of water spray amount. Operation of each rule is based on the membership function shown in Fig 13. Operation of furnace exit temperature is based on the function shown in Fig. 13 (a), and operation of NOx concentration in Fig. 13 (b). By the sum of operation results of rules (1) to (5) in Table 5, the increment or decrement of water spray amount is calculated. If the condition is not satisfied, however, its output is calculated as zero.

In the water spray amount control means 117 in Fig. 6, integrating the consequent reasoning results of rules determined in the above operations, the reasoning result of the entire rules is issued. For integration of consequent reasoning results of rules, same as in the second method, a general fuzzy operation technique is used, such as mini-max center of gravity method or product-sum center of gravity method. The reasoning result obtained in the water spray amount control means 117 is issued to the flow rate regulating mechanism, and the water spray amount is adjusted.

As a specific fuzzy control application mode, a singleton method small in quantity of calculation and suited to control is explained below by referring to Fig. 13. First, the goodness of fit is calculated by the antecedent membership function. Fig. 13 (a) shows the antecedent membership function of the furnace exit temperature, and when the measured value of furnace exit temperature is T, the goodness of fit for the condition of "furnace exit temperature is low" is $a_1$. For the condition of "furnace exit temperature is adequate," the goodness of fit is $a_2$. For the condition of "furnace exit temperature is high," the goodness of fit is $a_3$. Fig. 13 (b) shows the antecedent membership function of NOx concentration, and when the measured value of NOx is NOx, the goodness of fit for the condition of "NOx concentration is adequate" is $b_1$. For the condition of "NOx concentration is high," the goodness of fit is $b_2$. From these antecedent membership functions, the goodness of fit $X_1$ for rule (1) in Table 6 is calculated in formula (21 ). Rule (1) is "furnace exit temperature is low," and hence it is the goodness of fit $X_1$ (= $a_1$). Similarly, the goodness of fit $X_2$ (= $a_2$) of rule (2) is formula (22), the goodness of fit $X_3$ (= $b_1$) of rule (3) is formula (23), and the goodness of fit $X_4$ (= $a_3$) of rule (4) is formula (24). Since the goodness of fit $X_5$ of rule (5) is "furnace exit temperature is high and NOx concentration is also high," it is $a_3 \times b_2$ as shown in formula (25).

$$\text{Goodness of fit of rule (1)} \qquad X_1 = a_1 \qquad\qquad (21)$$

$$\text{Goodness of fit of rule (2)} \qquad X_2 = a_2 \qquad\qquad (22)$$

$$\text{Goodness of fit of rule (3)} \qquad X_3 = b_1 \qquad\qquad (23)$$

$$\text{Goodness of fit of rule (4)} \qquad X_4 = a_3 \qquad\qquad (24)$$

$$\text{Goodness of fit of rule (5)} \qquad X_5 = a_3 \times b_2 \qquad\qquad (25)$$

Next, for reasoning the consequent, water spray amount changes $y_1$ to $y_5$ are determined. By reasoning according to formula (26), the reasoning result z is obtained.

$$Z = \frac{\sum\limits_{i=1}^{5} Xi \times yi}{\sum\limits_{i=1}^{5} Xi} \qquad\qquad (26)$$

From the reasoning result z according to formula (26) and the preceding value ($v_{k-1}$) of the water spray amount output value, the present value ($v_k$) of water spray amount output is obtained.

$$v_k = v_{k-1} + z \qquad\qquad (27)$$

Next, according to a fifth method, a control method of water spray amount is described. Herein, in the water spray amount control means 117 in Fig. 6, a control method of water spray amount on the basis of the measured values of $O_2$ concentration, CO concentration and NOx concentration is explained in the case of increment and decrement control by condition by referring to Table 7 and Fig. 16. Table 7 is a table showing the concept of control method of water spray amount. As shown in Table 7, the water spray amount is calculated in the sequence of conditions (1) to (4), and when the conditions of (1) to (4) are satisfied, the control indicated by arrow ($\rightarrow$) is executed. However, if all of conditions of (1) to (4) are not satisfied, the present water spray amount is maintained. A specific value for increasing or decreasing the water spray amount (the increment or decrement per period) can be set individually.

Table 7

| Control method of water spray amount | |
|---|---|
| (1) | When $O_2$ concentration is high ($S_1$) <br> $\rightarrow$ decrease water spray amount by a specific amount. |
| (2) | When CO concentration is high ($S_2$) <br> $\rightarrow$ decrease water spray amount by a specific amount. |
| (3) | When NOx concentration is high ($S_3$) and $O_2$ concentration is also low ($S_4$) <br> $\rightarrow$ increase water spray amount by a specific amount. |
| (4) | When $O_2$ concentration is low ($S_5$) $\rightarrow$ increase water spray amount by a specific amount. |

A specific calculating method of control values is described according to a flowchart in Fig. 16 which is a graphic expression of Table 7. Starting control from (start) point, judging if the control condition is satisfied or not, the final value of water spray adjusting amount dw is determined. From this water spray adjusting amount dw and previous value ($w_{k-1}$) of water spray output value, the present value ($w_k$) of water spray output value is calculated.

$$w_k = w_{k-1} + dw \qquad\qquad (28)$$

In Fig. 16, $O_2$ denotes the measured value of $O_2$ concentration, CO is the measured value of CO concentration, and NOx is the measured value of NOx concentration. Moreover, $O_{2set1}$ is an adjustment parameter for judging if the $O_2$ concentration is over a specific value or not, $CO_{set}$ is an adjustment parameter for judging if the CO concentration is over a specific value or not, $NOx_{set}$ is an adjustment parameter for judging if the NOx concentration is over a specific value or not, $O_{2set2}$ is an adjustment parameter for judging if the $O_2$ concentration is less than a specific value or not, and w1 to w4 are adjustment parameters for giving the increment or decrement of water spray amount.
In Fig. 16, first, at step $S_1$, the $O_2$ concentration ($O_2$) is judged by the control condition ($O_2 > O_{2set1}$), and

when the control condition ($O_2 > O_{2set1}$) is satisfied, the adjustment amount dw is set at adjustment parameter $w_1$, and when the control condition ($O_2 > O_{2set1}$) is not satisfied, the process advances to step $S_2$. At step $S_2$, the CO concentration (CO) is judged by the control condition (CO > $CO_{set}$), and when the control condition (CO > $CO_{set}$) is satisfied, the adjustment amount dw is set at adjustment parameter w2, and when the control condition (CO > $CO_{set}$) is not satisfied, the process advances to step $S_3$. At step $S_3$, the NOx concentration (NOx) is judged by the control condition (NOx > $NOx_{set}$), and when the control condition (NOx > $NOx_{set}$) is satisfied, the process advances to step $S_4$, and when the control condition (NOx > $NOx_{set}$) is not satisfied, the process advances to step $S_5$. At step $S_4$, the $O_2$ concentration ($O_2$) is judged by the control condition ($O_2 < O_{2set2}$), and when the control condition ($O_2 < O_{2set2}$) is satisfied, the adjustment amount dw is set at adjustment parameter w3, and when the control condition ($O_2 < O_{2set2}$) is not satisfied, the adjustment amount dw is set at adjustment parameter 0. At step $S_5$, the $O_2$ concentration ($O_2$) is judged by the control condition ($O_2 < O_{2set2}$), and when the control condition ($O_2 < O_{2set2}$) is satisfied, the adjustment amount dw is set at adjustment parameter w4, and when the control condition ($O_2 < O_{2set2}$) is not satisfied, the adjustment amount dw is set at adjustment parameter 0.

In this way, the value of the water spray adjustment amount dw calculated according to the process in the flowchart in Fig. 16 is put in formula (28), and the water spray amount output value ($w_k$) is calculated, and the opening degree of the flow rate regulating mechanism is adjusted according to the water spray amount output value ($w_k$).

According to a sixth method, a control method of water spray amount is described below. Herein, in the control means 117 in Fig. 6, this is to explain execution of control of water spray amount on the basis of measured values of $O_2$ concentration, CO concentration and NOx concentration by fuzzy control. Table 8 is a table showing fuzzy rules about execution of flow rate control by fuzzy control, and Table 9 summarizes rules (1) to (6) in Table 8.

Table 8

| Fuzzy control method of water spray amount | |
|---|---|
| (1) | When $O_2$ concentration is high → decrease water spray amount. |
| (2) | When CO concentration is high → decrease water spray amount. |
| (3) | When $O_2$ concentration is adequate → maintain present water spray amount. |
| (4) | When NOx concentration is adequate → maintain present water spray amount. |
| (5) | When $O_2$ concentration is low → increase water spray amount. |
| (6) | When $O_2$ concentration is low and NOx concentration is also high → increase water spray amount. |

Table 9

| | Rule | | Antecedent (input) | | | Consequent (output) |
|---|---|---|---|---|---|---|
| No | Goodness of fit | $O_2$ concentration | CO concentration | NOx concentration | | $\Delta$Water spray amount |
| (1) | $X_1$ | High ($a_3$) | | | | Decrease ($y_1$) |
| (2) | $X_2$ | | High ($b_2$) | | | Decrease ($y_2$) |
| (3) | $X_3$ | Adequate ($a_2$) | | | | Maintain present level ($Y_3$) |
| (4) | $X_4$ | | | Adequate ($C_1$) | | Maintain present level ($y_4$) |
| (5) | $X_5$ | Low ($a_1$) | | | | Increase ($y_5$) |
| (6) | $X_6$ | Low ($a_1$) | | High($C_2$) | | Increase ($y_6$) |

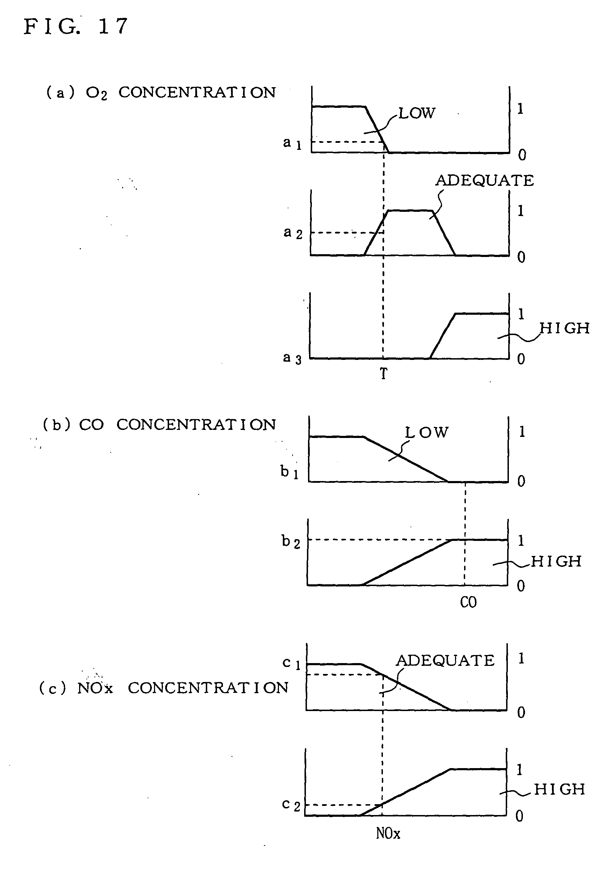

In Table 9, the antecedent (input) is the $O_2$ concentration, CO concentration and NOx concentration, and the consequent (output) is the increment or decrement of water spray amount. Operation of each rule is based on the membership function shown in Fig 17. Operation of $O_2$ concentration is based on the function shown in Fig. 17 (a), operation of CO concentration in Fig. 17 (b), and operation of NOx concentration in Fig. 17 (c). By the sum of operation results of rules (1) to (6) in Table 8, the increment or decrement of water spray amount is calculated. If the condition is not satisfied, however, its output is calculated as zero.

In the water spray amount control means 117, integrating the consequent reasoning results of rules determined in the above operations, the reasoning result of the entire rules is issued. For integration of consequent reasoning results of rules, a general fuzzy operation technique is used, such as mini-max center of gravity method or product-sum center of gravity method. The reasoning result obtained in the water spray amount control means 117 is issued to the flow rate regulating mechanism, and the water spray amount is adjusted.

As a specific fuzzy control application mode, a singleton method small in quantity of calculation and suited to control is explained below by referring to Fig. 17. First, the goodness of fit is calculated by the antecedent membership function. Fig. 17 (a) shows the antecedent membership function of the $O_2$ concentration, and when the measured value of $O_2$ concentration is $O_2$, the goodness of fit for the condition of "$O_2$ concentration is low" is $a_1$. For the condition of "$O_2$ concentration is adequate," the goodness of fit is $a_2$. For the condition of "$O_2$ concentration is high," the goodness of fit is $a_3$.

Fig. 17 (b) shows the antecedent membership function of CO concentration, and when the measured value of CO is CO, the goodness of fit for the condition of "CO concentration is low" is $b_1$. For the condition of "CO concentration is high," the goodness of fit is $b_2$.

Fig. 17 (c) shows the antecedent membership function of NOx concentration, and when the measured value of NOx is NOx, the goodness of fit for the condition of "NOx concentration is adequate" is $c_1$. For the condition of "NOx concentration is high," the goodness of fit is $c_2$.

From these antecedent membership functions, the goodness of fit $X_1$ for rule (1) in Table 9 is calculated in formula (30). Rule (1) is "$O_2$ is high," and hence it is the goodness of fit $X_1$ ($= a_3$). Similarly, the goodness of fit $X_2$ ($= b_2$) of rule (2) is formula (31), the goodness of fit $X_3$ ($= a_2$) of rule (3) is formula (32), the goodness of fit $X_4$ ($= c_1$) of rule (4) is formula (33), and the goodness of fit $X_5$ ($= a_1$) of rule (5) is formula (34). Since the goodness of fit $X_6$ of rule (6) is "$O_2$ concentration is low and NOx concentration is also high," it is $a_1 \times c_2$ as shown in formula (35).

$$\text{Goodness of fit of rule (1)} \quad X_1 = a_3 \tag{30}$$

$$\text{Goodness of fit of rule (2)} \quad X_2 = b_2 \tag{31}$$

$$\text{Goodness of fit of rule (3)} \quad X_3 = a_2 \tag{32}$$

$$\text{Goodness of fit of rule (4)} \quad X_4 = c_1 \tag{33}$$

$$\text{Goodness of fit of rule (5)} \quad X_5 = a_1 \tag{34}$$

$$\text{Goodness of fit of rule (6)} \quad X_6 = a_1 \times C_2 \tag{35}$$

Next, for reasoning the consequent, water spray amount changes $y_1$ to $y_6$ are determined. By reasoning according to formula (36), the reasoning result z is obtained.

$$Z = \frac{\sum_{i=1}^{6} Xi \times yi}{\sum_{i=1}^{6} Xi} \tag{36}$$

From the reasoning result z according to formula (36) and the preceding value ($u_{k-1}$) of the water spray amount output value, the present value ($u_k$) of water spray amount output is obtained.

$$u_k = u_{k-1} + z \qquad (37)$$

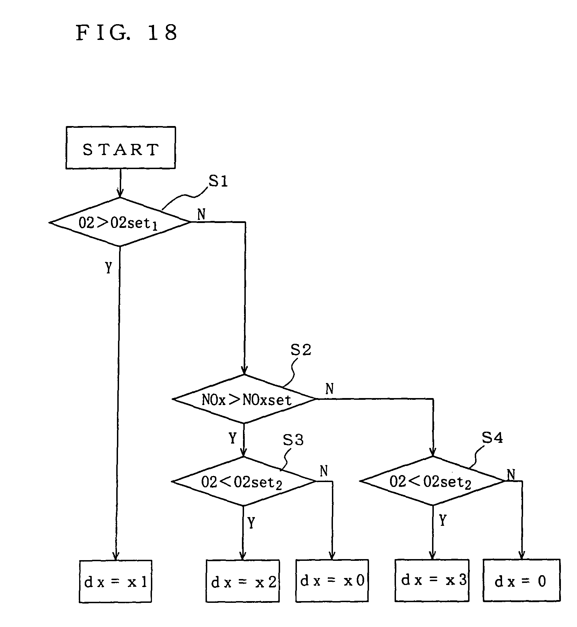

Next, according to a seventh method, a control method of water spray amount is described. Herein, in the spray amount control means, a control method of water spray amount on the basis of the measured values of $O_2$ concentration and NOx concentration is explained in the case of increment and decrement control by condition by referring to Table 10 and Fig. 18. In this method, in relation to the fifth method, rule (2) in Table 7 is omitted.

Table 10 is a table showing the concept of control method of water spray amount. As shown in Table 10, the water spray amount is calculated in the sequence of conditions (1) to (3), and when the conditions of (1) to (3) are satisfied, the control indicated by arrow ($\rightarrow$) is executed. However, if all of conditions of (1) to (3) are not satisfied, the present water spray amount is maintained. A specific value for increasing or decreasing the water spray amount (the increment or decrement per period) can be set individually.

Table 10

| Control method of water spray amount | |
|---|---|
| (1) | When $O_2$ concentration is high ($S_1$) <br> $\rightarrow$ decrease water spray amount by a specific amount. |
| (2) | When NOx concentration is high ($S_2$) and $O_2$ concentration is also low ($S_3$) <br> $\rightarrow$ increase water spray amount by a specific amount. |
| (3) | When $O_2$ concentration is low ($S_4$) <br> $\rightarrow$ increase water spray amount by a specific amount. |

A specific calculating method of control values is described according to a flowchart in Fig. 18 which is a graphic expression of Table 10. Starting control from (start) point, judging if the control condition is satisfied or not, the final value of water spray adjusting amount dx is determined. From this water spray adjusting amount dx and previous value ($x_{k-1}$) of water spray output value, the present value ($x_k$) of water spray output value is calculated.

$$x_k = x_{k-1} + dx \qquad (38)$$

In Fig. 18, $O_2$ denotes the measured value of $O_2$ concentration, and NOx is the measured value of NOx concentration. Moreover, $O_{2set1}$ is an adjustment parameter for judging if the $O_2$ concentration is over a specific value or not, $NOx_{set}$ is an adjustment parameter for judging if the NOx concentration is over a specific value or not, $O_{2Set2}$ is an adjustment parameter for judging if the $O_2$ concentration is less than a specific value or not, and x1 to x3 are adjustment parameters for giving the increment or decrement of water spray amount.

In Fig. 18, first, at step $S_1$, the $O_2$ concentration ($O_2$) is judged by the control condition ($O_2 > O_{2set1}$), and when the control condition ($O_2 > O_{2set1}$) is satisfied, the adjustment amount dx is set at adjustment parameter $x_1$, and when the control condition ($O_2 > O_{2set1}$) is not satisfied, the process advances to step $S_2$. At step $S_2$, the NOx concentration (NOx) is judged by the control condition ($NOx > NOx_{set}$), and when the control condition ($NOx > NOx_{set}$) is satisfied, the process advances to step $S_3$, and when the control condition ($NOx > NOx_{set}$) is not satisfied, the process advances to step $S_4$. At step $S_3$, the $O_2$ concentration ($O_2$) is judged by the control condition ($O_2 < O_{2set2}$), and when the control condition ($O_2 < O_{2set2}$) is satisfied, the adjustment amount dx is set at adjustment parameter $x_2$, and when the control condition ($O_2 < O_{2set2}$) is not satisfied, the adjustment amount dx is set at adjustment parameter 0. At step $S_4$, the $O_2$ concentration ($O_2$) is judged by the control condition ($O_2 < O_{2set2}$), and when the control condition ($O_2 < O_{2set2}$) is satisfied, the adjustment amount dx is set at adjustment parameter $x_3$, and when the control condition ($O_2 < O_{2set2}$) is not satisfied, the adjustment amount dx is set at adjustment parameter 0.

In this way, the value of the water spray adjustment amount dx calculated according to the process in the flowchart in Fig. 18 is put in formula (38), and the water spray amount output value ($x_k$) is calculated, and the opening degree of the flow rate regulating mechanism is adjusted according to the water spray amount output value ($x_k$).

According to an eighth method, a control method of water spray amount is described below. Herein, in the control means 117, this is to explain execution of control of water spray amount on the basis of measured values of $O_2$ concentration and NOx concentration by fuzzy control. Herein, in relation to the sixth method, rule (2) in Table 8 is omitted.

Table 11 is a table showing fuzzy rules about execution of flow rate control by fuzzy control, and Table 12 summarizes rules (1) to (5) in Table 11.

Table 11

| Fuzzy control method of water spray amount | |
|---|---|
| (1) | When $O_2$ concentration is high<br>→ decrease water spray amount. |
| (2) | When $O_2$ concentration is adequate<br>→ maintain present water spray amount. |
| (3) | When NOx concentration is adequate<br>→ maintain present water spray amount. |
| (4) | When $O_2$ concentration is low<br>→ increase water spray amount. |
| (5) | When $O_2$ concentration is low and NOx concentration is also high<br>→ increase water spray amount. |

Table 12

| Rule | | Antecedent (input) | | Consequent (output) |
|---|---|---|---|---|
| No | Goodness of fit | $O_2$ concentration | NOx concentration | ΔWater spray amount |
| (1) | $X_1$ | High ($a_3$) | | Decrease ($y_1$) |
| (2) | $X_2$ | Adequate ($a_2$) | | Maintain present level ($y_2$) |
| (3) | $X_3$ | | Adequate ($b_1$) | Maintain present level ($y_3$) |
| (4) | $X_4$ | Low ($a_1$) | | Increase ($y_4$) |
| (5) | $X_5$ | Low ($a_1$) | Adequate ($b_2$) | Increase ($y_5$) |

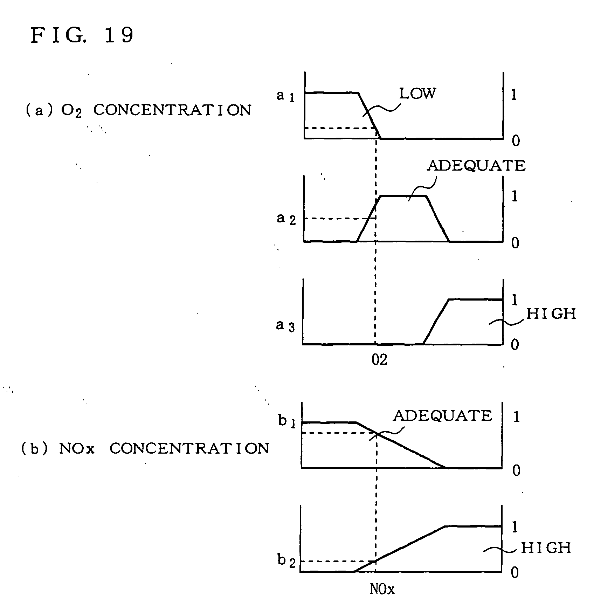

In Table 12, the antecedent (input) is the $O_2$ concentration and NOx concentration, and the consequent (output) is the increment or decrement of water spray amount. Operation of each rule is based on the membership function shown in Fig 19. Operation of $O_2$ concentration is based on the function shown in Fig. 19 (a), and operation of NOx concentration in Fig. 19 (b). By the sum of operation results of rules (1) to (5) in Table 11, the increment or decrement of water spray amount is calculated. If the condition is not satisfied, however, its output is calculated as zero.

In the water spray amount control means 117, integrating the consequent reasoning results of rules determined in the above operations, the reasoning result of the entire rules is issued. For integration of consequent reasoning results of rules, same as in the sixth method, a general fuzzy operation technique is used, such as mini-max center of gravity method or product-sum center of gravity method. The reasoning result obtained in the water spray amount control means 117 is issued to the flow rate regulating mechanism, and the water spray amount is adjusted.

As a specific fuzzy control application mode, a singleton method small in quantity of calculation and suited to control is explained below by referring to Fig. 19. First, the goodness of fit is calculated by the antecedent membership function. Fig. 19 (a) shows the antecedent membership function of the $O_2$ concentration, and when the measured value of $O_2$ concentration is $O_2$, the goodness of fit for the condition of "$O_2$ concentration is low" is $a_1$. For the condition of "$O_2$ concentration is adequate," the goodness of fit is $a_2$. For the condition of "$O_2$ concentration is high," the goodness of fit is $a_3$.

Fig. 19 (b) shows the antecedent membership function of NOx concentration, and when the measured value of NOx is NOx, the goodness of fit for the condition of "NOx concentration is adequate" is $b_1$. For the condition of "NOx concentration is high," the goodness of fit is $b_2$. From these antecedent membership functions, the goodness of fit $X_1$ for rule (1) in Table 12 is calculated in formula (40). Rule (1) is "$O_2$ concentration is high," and hence it is the goodness of fit $X_1$ (= $a_3$). Similarly, the goodness of fit $X_2$ (= $a_2$) of rule (2) is formula (41), the goodness of fit $X_3$ (= $b_1$) of rule (3) is formula (42), and the goodness of fit $X_4$ (= $a_1$) of rule (4) is formula (43). Since the goodness of fit $X_5$ of rule (5) is "$O_2$ concentration is low and NOx concentration is also high," it is $a_1 \times b_2$ as shown in formula (44).

$$\text{Goodness of fit of rule (1)} \qquad X_1 = a_3 \qquad\qquad (40)$$

$$\text{Goodness of fit of rule (2)} \qquad X_2 = a_2 \qquad\qquad (41)$$

$$\text{Goodness of fit of rule (3)} \quad X_3 = b_1 \tag{42}$$

$$\text{Goodness of fit of rule (4)} \quad X_4 = a_1 \tag{43}$$

$$\text{Goodness of fit of rule (5)} \quad X_5 = a_1 \times b_2 \tag{44}$$

Next, for reasoning the consequent, water spray amount changes $y_1$ to $y_5$ are determined. By reasoning according to formula (45), the reasoning result z is obtained.

$$Z = \frac{\sum\limits_{i=1}^{5} Xi \times yi}{\sum\limits_{i=1}^{5} Xi} \tag{45}$$

From the reasoning result z according to formula (45) and the preceding value ($v_{k-1}$) of the water spray amount output value, the present value ($v_k$) of water spray amount output is obtained.

$$v_k = v_{k-1} + z \tag{46}$$

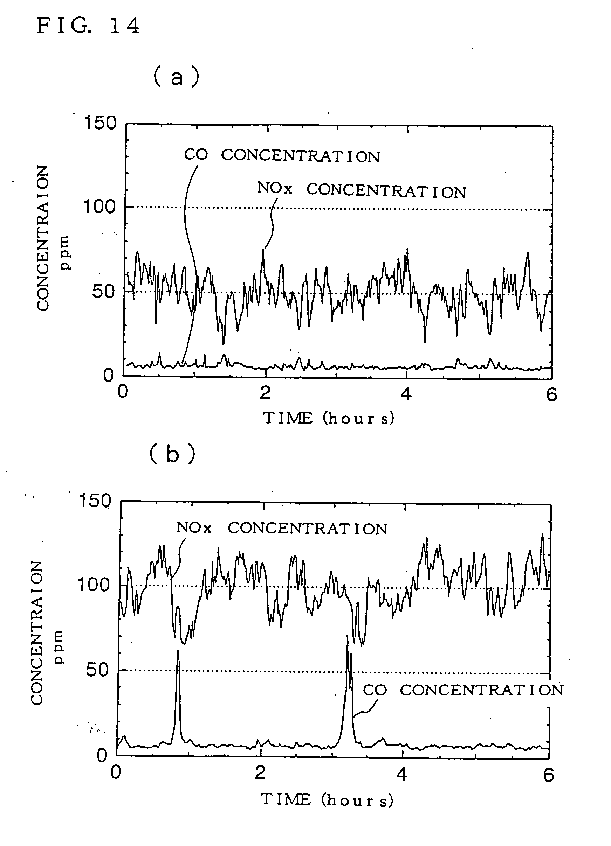

By the water spray amount control means 117, by measuring the furnace exit temperature and NOx concentration and controlling the water spray amount, the CO concentration and NOx concentration were investigated. Fig. 14 is a characteristic diagram showing results of measurements in the present invention and a prior art, and Fig. 14 (a) is a characteristic diagram showing results of 6-hour measurement of CO concentration and NOx concentration in the present invention, and Fig. 14 (b) is a characteristic diagram showing results of 6-hour measurement of CO concentration and NOx concentration in the prior art. As shown in Fig. 14 (b), in the prior art, the CO concentration exceeded 50 ppm twice during 6-hour measurement, and the average of NOx concentration was 100 ppm. In the present invention shown in Fig. 14 (a), by contrast, the CO concentration was always around 10 ppm, and the average of the NOx concentration was suppressed about 50 ppm.

Embodiment 3

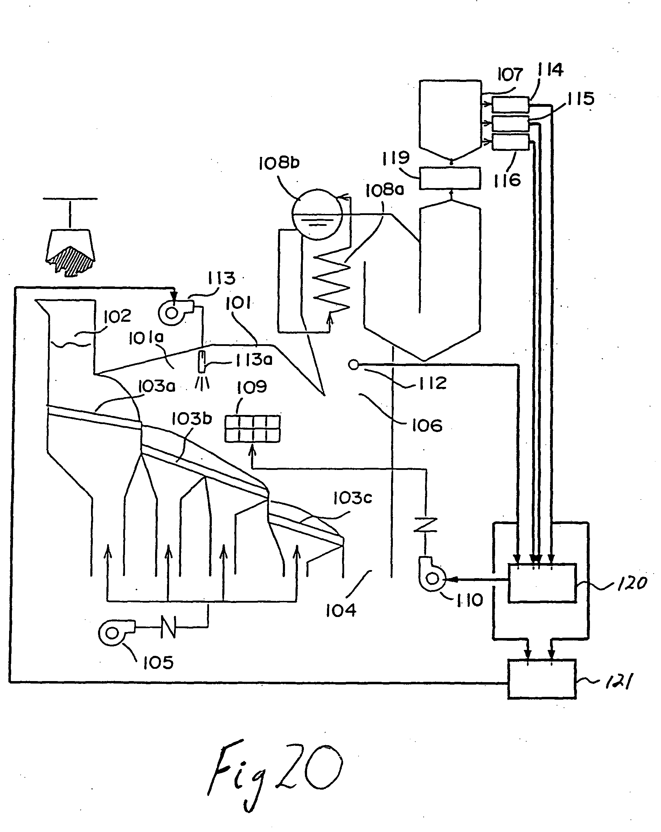

Fig. 20 is a conceptual diagram of a refuse incinerator partly modifying the constitution in Fig. 6 and its control system, and same reference numerals as in Fig. 6 denote the same components.

This refuse incinerator comprises secondary combustion air control means 120 and water spray control means 121, and this secondary combustion air control means 120 receives signals from a furnace exit thermometer 112, an exhaust gas NOx densitometer 114, an exhaust gas CO densitometer 115, and an exhaust gas $O_2$ densitometer 116, operates and processes them as specified to generate control signals, and sends to a secondary combustion air fan 110. The water spray control means 121 receives signals from the furnace exit thermometer 112 and exhaust gas NOx densitometer 114, operates and processes them as specified to generate control signals, and sends to a water spay regulator 113. In these control means 120, 121, for example, a computer is used. On the basis of the input signals in the control means 120, 121, control values are calculated periodically. Since fluctuations of furnace exit temperature and exhaust gas components occur in scores of seconds to several minutes, it is appropriate to calculate in every period of scores of seconds to several minutes.

In the water spray control means 121 in Fig. 20, execution of fuzzy control of water spray amount control on the basis of measured values of furnace exit temperature and NOx concentration is explained according to Table 13 and Table 14. Table 13 is a table showing fuzzy rules to be executed by fuzzy control, and Table 14 is a table summing up rules (1) to (5) in Table 13.

Table 13

| Fuzzy control method of water spray amount | |
|---|---|
| (1) | When furnace exit temperature is low<br>→ decrease water spray amount. |
| (2) | When furnace exit temperature is adequate<br>→ maintain present water spray amount. |
| (3) | When NOx concentration is adequate<br>→ maintain present water spray amount. |
| (4) | When furnace exit temperature is high<br>→ increase water spray amount. |
| (5) | When furnace exit temperature is high and NOx concentration is also high<br>→ increase water spray amount. |

Table 14

| Rule | | Antecedent (input) | | Consequent (output) |
|---|---|---|---|---|
| No | Goodness of fit | Furnace exit temperature | NOx concentration | ΔWater spray amount |
| (1) | $X_1$ | Low ($a_1$) | | Decrease ($y_1$) |
| (2) | $X_2$ | Adequate ($a_2$) | | Maintain present level ($y_2$) |
| (3) | $X_3$ | | Adequate ($b_1$) | Maintain present level ($y_3$) |
| (4) | $X_4$ | High ($a_3$) | | Increase ($y_4$) |
| (5) | $X_5$ | High ($a_3$) | High ($b_2$) | Increase ($y_5$) |

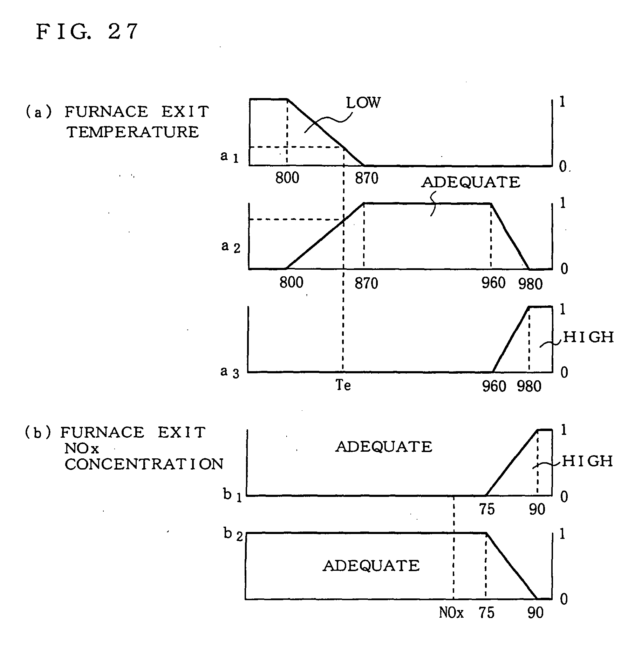

In Table 14, the antecedent (input) is the furnace exit temperature and NOx concentration, and the consequent (output) is the increment or decrement of water spray amount. Operation of each rule is based on the membership function shown in Fig 27. Operation of furnace exit temperature is based on the function shown in Fig. 27 (a), and operation of NOx concentration in Fig. 27 (b). By the sum of operation results of rules (1) to (5) in Table 13, the increment or decrement of water spray amount is calculated. If the condition is not satisfied, however, its output is calculated as zero.

In the water spray amount control means 121 in Fig. 20, integrating the consequent reasoning results of the determined rules, the reasoning result of the entire rules is issued. For integration of consequent reasoning results of rules, a general fuzzy operation technique is used, such as mini-max center of gravity method or product-sum center of gravity method. The reasoning result obtained in the water spray amount control means 121 is issued to the water spray regulator 113, and the water spray amount is adjusted.

As a specific fuzzy control application mode, a singleton method small in quantity of calculation and suited to control is explained below by referring to Fig. 27.

First, the goodness of fit is calculated by the antecedent membership function. Fig. 27 (a) shows the antecedent membership function of the furnace exit temperature, and when the measured value of furnace exit temperature is Te, the goodness of fit for the condition of "furnace exit temperature is low" is $a_1$. For the condition of "furnace exit temperature is adequate," the goodness of fit is $a_2$. For the condition of "furnace exit temperature is high," the goodness of fit is $a_3$.

Fig. 27 (b) shows the antecedent membership function of NOx concentration, and when the measured value of NOx is NOx, the goodness of fit for the condition of "NOx concentration is adequate" is $b_1$. For the condition of "NOx concentration is high," the goodness of fit is $b_2$.

From these antecedent membership functions, the goodness of fit $X_1$ for rule (1) in Table 14 is calculated in formula (51). Rule (1) is "furnace exit temperature is low," and hence it is the goodness of fit $X_1$ ($= a_1$). Similarly, the goodness of fit $X_2$ ($= a_2$) of rule (2) is formula (52), the goodness of fit $X_3$ ($= b_1$) of rule (3) is formula (53), and the goodness of fit $X_4$ ($= a_3$) of rule (4) is formula (54). Since the goodness of fit $X_5$ of rule (5) is "furnace exit temperature is high and NOx concentration is also high," it is $a_3 \times b_2$ as shown in formula (55).

$$\text{Goodness of fit of rule (1)} \qquad X_1 = a_1 \qquad\qquad (51)$$

$$\text{Goodness of fit of rule (2)} \qquad X_2 = a_2 \qquad\qquad\qquad (52)$$

$$\text{Goodness of fit of rule (3)} \qquad X_3 = b_1 \qquad\qquad\qquad (53)$$

$$\text{Goodness of fit of rule (4)} \qquad X_4 = a_3 \qquad\qquad\qquad (54)$$

$$\text{Goodness of fit of rule (5)} \qquad X_5 = a_3 \times b_2 \qquad\qquad\qquad (55)$$

Next, for reasoning the consequent, water spray amount changes $y_1$ to $y_5$ are determined. By reasoning according to formula (56), the reasoning result z is obtained.

$$Z = \frac{\sum\limits_{i=1}^{5} Xi \times yi}{\sum\limits_{i=1}^{5} Xi} \qquad\qquad\qquad (56)$$

From the reasoning result z according to formula (56) and the preceding value ($v_{k-1}$) of the water spray amount output value, the present value ($v_k$) of water spray amount output is obtained.

$$v_k = v_{k-1} + z \qquad\qquad\qquad (57)$$

Next, in the secondary combustion air control means 210, execution of fuzzy control of secondary combustion air control on the basis of measured values of furnace exit temperature, secondary combustion air quantity, CO concentration, NOx concentration and $O_2$ concentration is explained. Table 15 is a table showing fuzzy rules to be executed by fuzzy control, and Table 16 is a table summing up rules (1) to (12) in Table 15.

Table 15

| | Fuzzy control method of secondary combustion air quantity |
|---|---|
| (1) | When furnace exit temperature is low and secondary combustion air quantity is large → decrease secondary combustion air quantity. |
| (2) | When furnace exit temperature is high and secondary combustion air quantity is large → increase secondary combustion air quantity. |
| (3) | When furnace exit temperature is low and secondary combustion air quantity is small → increase secondary combustion air quantity. |
| (4) | When furnace exit temperature is high and secondary combustion air quantity is small → decrease secondary combustion air quantity. |
| (5) | When furnace exit temperature is high, secondary combustion air quantity is medium, and $O_2$ concentration is high → decrease secondary combustion air quantity. |
| (6) | When furnace exit temperature is high, secondary combustion air quantity is medium, and $O_2$ concentration is adequate → increase secondary combustion air quantity. |
| (7) | When furnace exit temperature is low and secondary combustion air quantity is medium → maintain the present level of secondary combustion air quantity. |
| (8) | When NOx concentration is high → decrease secondary combustion air quantity. |

Table 15   (continued)

| Fuzzy control method of secondary combustion air quantity | | |
|---|---|---|
| (9) | When secondary combustion air quantity is small and CO concentration is high | |
| | $\rightarrow$ increase secondary combustion air quantity. | |
| (10) | When $O_2$ concentration is low | |
| | $\rightarrow$ largely increase secondary combustion air quantity. | |
| (11) | When furnace exit temperature is high and CO concentration is high | |
| | $\rightarrow$ increase secondary combustion air quantity. | |
| (12) | When CO concentration is adequate and also NOx is adequate | |
| | $\rightarrow$ maintain the present level of secondary combustion air quantity. | |

Table 16

| No | Goodness of fit | Furnace exit temperature | Secondary combustion air quantity | CO concentration | NOx concentration | $O_2$ concentration | ΔSecondary combustion air quantity |
|---|---|---|---|---|---|---|---|
| | Rule | | | Antecedent (input) | | | Consequent (output) |
| (1) | $X_1$ | Low ($a_1$) | Large ($c_3$) | | | | Decrease ($Y_1$) |
| (2) | $X_2$ | High ($a_3$) | Large ($c_3$) | | | | Increase ($Y_2$) |
| (3) | $X_3$ | Low ($a_1$) | Small ($c_1$) | | | | Increase ($Y_3$) |
| (4) | $X_4$ | High ($a_3$) | Small ($c_1$) | | | | Decrease ($Y_4$) |
| (5) | $X_5$ | High ($a_3$) | Medium ($c_2$) | | | High ($b_1$) | Decrease ($Y_5$) |
| (6) | $X_6$ | High ($a_3$) | Medium ($c_2$) | | | Adequate ($b_2$) | Increase ($Y_6$) |
| (7) | $X_7$ | Low ($a_1$) | Medium ($c_2$) | | | | Maintain present level ($Y_7$) |
| (8) | $X_8$ | | | | High ($d_1$) | | Decrease ($Y_8$) |
| (9) | $X_9$ | | Small ($c_1$) | High ($e_1$) | | | Increase ($Y_9$) |
| (10) | $X_{10}$ | | | | | Low ($b_3$) | Largely increase ($Y_{10}$) |

EP 1 382 906 A2

EP 1 382 906 A2

| | | | | | | | |
|---|---|---|---|---|---|---|---|
| (11) | $X_{11}$ | High ($a_3$) | | High ($e_1$) | | | Increase ($Y_{11}$) |
| (12) | $X_{12}$ | | | Adequate ($e_2$) | Adequate ($d_2$) | | Maintain present level ($Y_{12}$) |

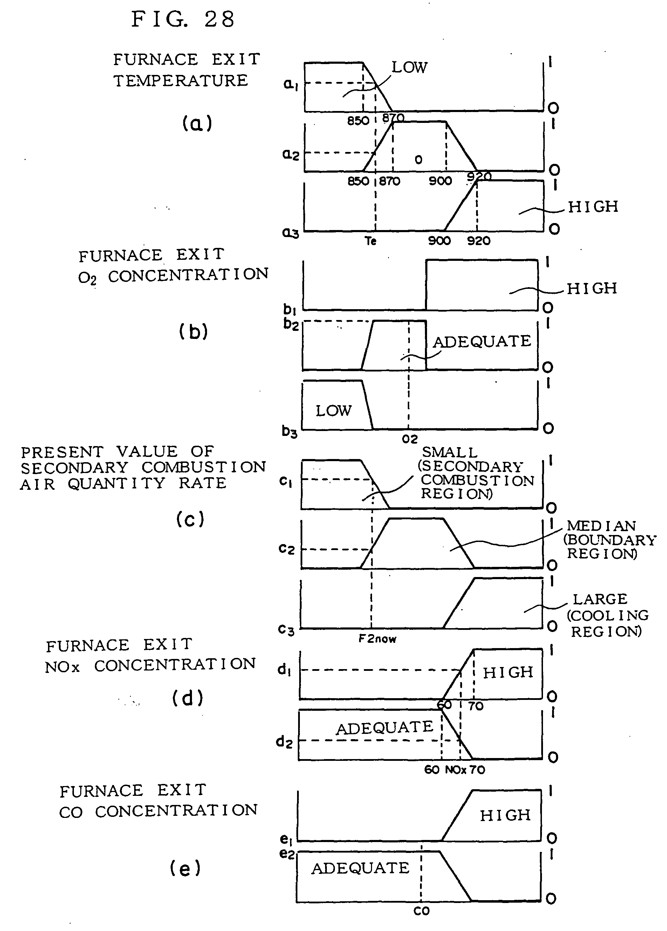

When a practical fuzzy control is applied, an operating method of control unit of secondary combustion air is explained by referring to Fig. 28. First, the antecedent goodness of fit is calculated. In Fig. 28 (a), the measured value of furnace exit temperature is Te, the goodness of fit for the condition of "furnace exit temperature is low" is $a_1$. Similarly, it is $a_2$ for "zero" and $a_3$ for "high." Likewise, as for the furnace exit $O_2$ concentration, in Fig. 28 (b), the measured value is $O_2$, and it is $b_1$ for "high," $b_2$ for "adequate" and b3 for "low." Concerning the present value of secondary combustion air quantity, in Fig. 28 (c), the measured value is $F_2$now, and it is $c_1$ for "small," $c_2$ for "medium" and $c_3$ for "large." The furnace exit NOx concentration is shown in Fig. 28 (d), in which the measured value is NOx, and it is $d_1$ for "high" and $d_2$ for "adequate." The furnace exit CO concentration is shown in Fig. 28 (e), in which the measured value is CO, and it is $e_1$ for "high" and $e_2$ for "adequate."

From these results, the goodness of fit $X_1$ for rule (1) in Table 16 is calculated in formula (58). Rule (1) is "furnace exit temperature is low and present value of secondary combustion air quantity is large," and hence it is both $a_1$ and c3. Similarly, the goodness of fit $X_2$ to $X_{12}$ corresponding to rules (2) to (12) are calculated in formulas (59) to (69).

$$\text{Goodness of fit of rule (1)} \qquad X_1 = a_1 \times c_3 \qquad\qquad (58)$$

$$\text{Goodness of fit of rule (2)} \qquad X_2 = a_3 \times c_3 \qquad\qquad (59)$$

$$\text{Goodness of fit of rule (3)} \qquad X_3 = a_1 \times c_1 \qquad\qquad (60)$$

$$\text{Goodness of fit of rule (4)} \qquad X_4 = a_3 \times c_1 \qquad\qquad (61)$$

$$\text{Goodness of fit of rule (5)} \qquad X_5 = a_3 \times c_2 \times b_1 \qquad\qquad (62)$$

$$\text{Goodness of fit of rule (6)} \qquad X_6 = a_3 \times c_2 \times b_2 \qquad\qquad (62)$$

$$\text{Goodness of fit of rule (7)} \qquad X_7 = a_1 \times c_2 \qquad\qquad (64)$$

$$\text{Goodness of fit of rule (8)} \qquad X_8 = d_1 \qquad\qquad (65)$$

$$\text{Goodness of fit of rule (9)} \qquad X_9 = c_1 \times e_1 \qquad\qquad (66)$$

$$\text{Goodness of fit of rule (10)} \qquad X_{10} = b_3 \qquad\qquad (67)$$

$$\text{Goodness of fit of rule (11)} \qquad X_{11} = a_3 \times e_1 \qquad\qquad (68)$$

$$\text{Goodness of fit of rule (12)} \qquad X_{12} = e_2 \times d_2 \qquad\qquad (69)$$

Next, for reasoning the consequent, changes of secondary combustion air quantity $Y_1$ to $Y_{12}$ are determined. By reasoning according to formula (70), the reasoning result z is obtained.

$$Z = \frac{\sum\limits_{i=1}^{12} Xi \times Yi}{\sum\limits_{i=1}^{12} Xi} \qquad\qquad (70)$$

Finally, from the reasoning result z and the preceding value ($u_{k-1}$) of the secondary combustion air quantity output value, the present value ($u_k$) of secondary combustion air quantity output is obtained.

$$u_k = u_{k-1} + z \qquad\qquad (71)$$

Herein, reviewing the relation of the furnace exit average temperature with the exit TEQ concentration and NOx concentration of bag filter 119, as shown in the characteristic diagram in Fig. 30, the higher the average of furnace exit temperature, the lower becomes the dioxin concentration because unburnt components are decomposed, but since the combustion temperature of exhaust gas becomes higher, the NOx concentration is elevated. To the contrary, the lower the average of furnace exit temperature, the higher is the dioxin concentration and the lower is the NOx concentration. In this embodiment, accordingly, the target lower limit average is set at about 900°C, and the target upper limit average, at about 950°C. By thus setting, the dioxin concentration and NOx concentration in exhaust gas can be effectively suppressed at the same time.

Further reviewing the relation between the secondary combustion air quantity by the secondary combustion air control means 210 and the water spray amount by the water spray control means 211, the measurement input of the secondary combustion air control means 210 and the measurement input of the water spray control means 211, that is, parameters for setting the antecedent condition for fuzzy reasoning are different (Table 14, Table 16), and the shapes of the antecedent membership functions are also different (Fig. 27, Fig. 28), and therefore these controls will not interfere with each other. In this embodiment, usually, by adjusting the secondary combustion air quantity, NOx and unburnt components are suppressed, and when the furnace exit temperature becomes a large value exceeding the specified reference value, the water spray amount is also adjusted in addition to the secondary combustion air quantity, thereby suppressing NOx and unburnt components.

By thus limiting the adjustment (increase) of water spray amount, troubles occurring when water is sprayed can be avoided as far as possible. That is, if a large amount of water is blown in so as to cool in the furnace, all is not transformed to steam to cool in the furnace, but part of water deposits on the refuse. When the refuse containing water is fired, the combustion state is impaired, and CO is generated. It is understood from the characteristic diagram in Fig. 23, in which as the furnace exit temperature is raised, when water spray is maintained at 2.5 KL/H for about 30 minutes, a high CO concentration exceeding 100 ppm is observed. In the characteristic diagram in Fig. 24 (an embodiment of the present invention), on the other hand, since the furnace exit temperature varies in a range of 870°C to 960°C (see Fig. 27 (a)), the water spray amount is maintained at the present level, and hence no change is observed.

Fig. 31 is a characteristic diagram showing the relation of standard deviation of water spray amount above and the boiler exit dioxin concentration. As clear from this characteristic diagram, the larger the fluctuation of the water spray amount, the higher is the dioxin concentration, and by thus limiting the adjustment (increase) of water spay amount, it is understood that elevation of boiler exit dioxin concentration is avoided.

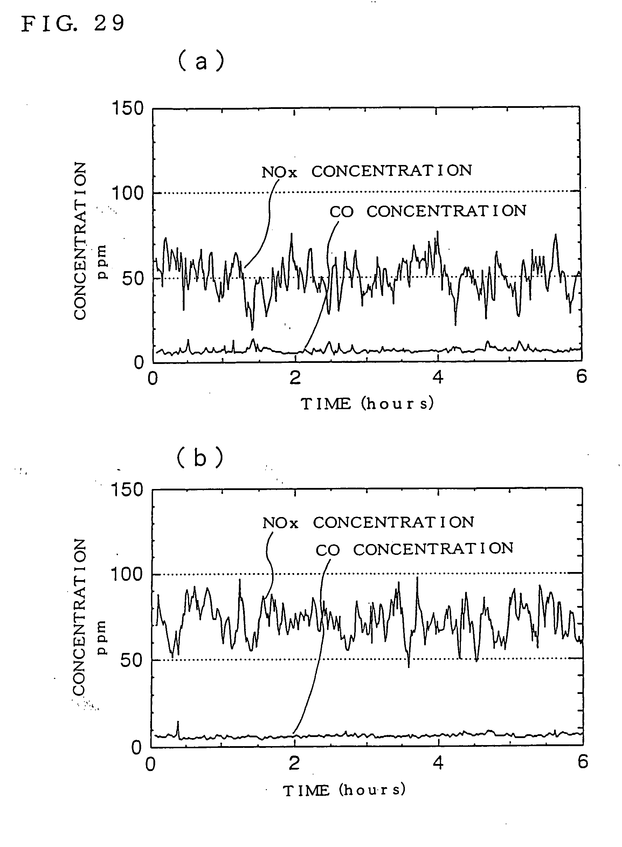

Changes of CO concentration and NOx concentration were investigated by controlling the secondary combustion air quantity and water spray amount by the control means 210, 211 shown in Fig. 20. Fig. 29 is a characteristic diagram showing results of investigation of the embodiment of the present invention and an example of controlling the secondary combustion air quantity only. Fig. 29 (a) shows the result of 6-hour measurement of CO concentration and NOx concentration in the embodiment of the present invention. Fig. 29 (b) shows the result of 6-hour measurement of CO concentration and NOx concentration in the case of controlling the secondary combustion air quantity only. In either Fig. 29 (a) or (b), high CO concentration of spike profile is not generated. However, the NOx concentration is an average of 70 ppm in Fig. 29 (b), while it is suppressed under the average of 50 ppm in Fig. 29 (a).

Embodiment 4

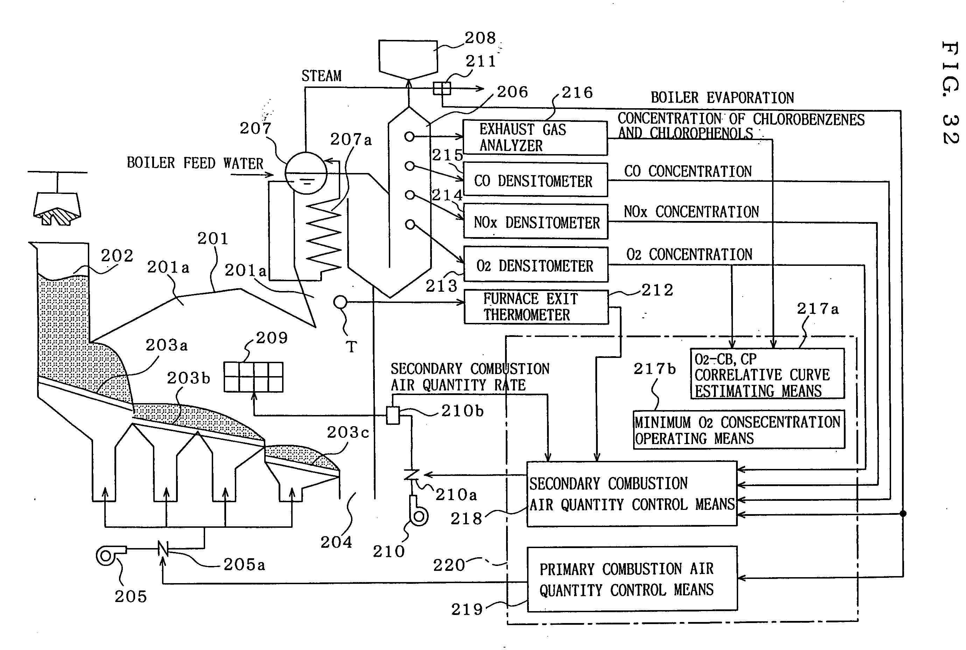

Fig. 32 is a schematic diagram explaining other control method of the present invention and its apparatus. In the diagram, a refuse incinerator 201 is an incinerator of fire grate type, comprising a principal combustion chamber 201a, a secondary combustion chamber 201b, and a precombustion grate 203a, a combustion grate 203b, and a post-incineration grate 203c for sequentially oscillating and firing crude refuse charged from a refuse inlet 202, and a boiler 207 and its heat exchanger 207a are disposed above the secondary combustion chamber 201b. Reference numeral 204 is a chute for discharging the ash out of the furnace. A furnace exit 206 of refuse incinerator is connected to a stack 208 through a quenching reaction tower and dust collector. A primary combustion air fan 205 is provided for feeding primary combustion air into the principal combustion chamber 201 a from beneath the precombustion grate 203a, combustion grate 203b and post-incineration grate 203c, and a primary combustion air quantity regulator 205a is provided for adjusting its flow rate, and the constitution further includes a secondary combustion air fan 210 for feeding secondary combustion air from a secondary combustion air blow port 209 into the principal combustion chamber 201 a, and a secondary combustion air quantity regulator 210a for adjusting its flow rate.

A furnace exit temperature sensor T is installed in the secondary combustion chamber 201 b right above the principal combustion chamber 201 a or its vicinity, and its output is entered into a furnace exit thermometer 212. The furnace exit 206 further includes an $O_2$ densitometer 213 for detecting the $O_2$ concentration in exhaust gas by sampling the exhaust gas, a NOx detector 214 for detecting the NOx concentration, and a CO densitometer 215 for detecting the CO concentration, and it further includes an exhaust gas analyzer 216 for detecting the concentration of chlorobenzenes (CBs) and chlorophenols (CPs) which are precursors of dioxins, by sampling the exhaust gas at the furnace exit 6. By a steam flowmeter 211 provided in the piping for feeding steam from the boiler 217, the steam flow rate is measured, and the secondary combustion air quantity is measured by a secondary combustion air quantitymeter 210b provided in the piping for feeding air from the secondary combustion air fan 210. These measured values, that is, control parameters of furnace exit temperature, $O_2$ concentration, NOx concentration, CO concentration, and concentration of CBs and CPs in exhaust gas, steam flow rate, and secondary combustion air quantity are entered in a control device 220.

The control device 220 is, for example, a computer including a central processing unit and a memory device composed of a control unit and an operation unit, and principal functions include correlative curve estimating means 217a of $O_2$-CBs/CPs, minimum $O_2$ concentration operating means 217b for estimating the $O_2$ concentration for minimizing the summed concentration of chlorobenzenes and chlorophenols, secondary combustion air control means 218, and primary combustion air control means 219.

The primary combustion air control means 219 manipulates the primary combustion air quantity regulator 205a, and adjusts the primary combustion air quantity to supply into the principal combustion chamber 201 a from beneath the grates 203a to 203c. In the secondary combustion air control means 218, manipulating the secondary combustion air quantity regulator 210a, the secondary combustion air quantity from the secondary combustion air quantitymeter 210b is fed back and adjusted to an optimum value, and the secondary combustion air is blown into the principal combustion chamber 201 a from the secondary combustion air fan 210 through the secondary combustion air blow port 209.

In the correlative curve estimating means 217a, the summed concentration of chlorobenzenes and chlorophenols in the exhaust gas corresponding to the $O_2$ concentration in exhaust gas is put into the memory device at specified period, and a correlative curve of $O_2$ concentration and summed concentration of CBs and CPs is plotted. The minimum $O_2$ concentration calculating means 217b calculates the $O_2$ concentration for minimizing the concentration summing up CBs and CPs from this correlative curve, and using this minimum $O_2$ concentration value as the control parameter, it is periodically fed into the secondary combustion air control means 218 to operate and process, and the secondary combustion air quantity is determined. The minimum $O_2$ concentration operating means 217b is realized by the method of successive least squares, expansion into continued fraction, spline approximation, Taylor series approximation, Lagrange interpolation or other methods.

Further explaining this combustion control, in control of secondary combustion air quantity by the secondary combustion air control means 218, the boiler steam amount, secondary combustion air quantity, furnace exit temperature, and CO concentration, $O_2$ concentration and NOx concentration in exhaust gas are measured periodically, and the secondary combustion air quantity is controlled on the basis of the measured values. The exhaust gas at the furnace exit 206 is sampled by an exhaust gas analyzer 216 by continuous or semicontinuous analyzer, for example, in every 5 seconds, and the concentration of CBs and CPs in exhaust gas is measured, and the sum of the concentration of CBs and CPs is calculated and stored in the memory device in time series. Also sampling the exhaust gas, the $O_2$ concentration in the exhaust gas is detected by an $O_2$ densitometer 213, and the measured values are stored in time series.

In succession, reading out the data written in the memory device, the moving average of the sum of the concentration of CBs and CPs is read out at every specific time, and similarly the moving average of the $O_2$ concentration is calculated. To calculate the moving average, for example, the average of the latest 5 minutes is calculated and stored in every 2 minutes. By the correlative curve estimating means 217a, a correlative curve (approximate curve) is compiled as the sum concentration of CBs and CPs corresponding to $O_2$ concentration. From the correlative curve, by the minimum $O_2$ concentration calculating means 217b, the $O_2$ concentration for minimizing the summed concentration of CBs and CPs is calculated. In the secondary combustion air control means 218, measured values of boiler steam generation amount, secondary combustion air quantity, furnace exit temperature, and $O_2$ concentration, NOx concentration and CO concentration in exhaust gas are entered together with the optimum $O_2$ concentration calculated by the minimum $O_2$ concentration operating means 217b as control parameters, and the control of the secondary combustion air quantity is executed periodically. The secondary combustion air control signal from the secondary combustion air control means 218 is fed into the secondary combustion air regulator 210b, and hence a corrected secondary combustion air quantity is supplied into the principal combustion chamber 201 a. As a result, the concentration of chlorobenzenes and chlorophenols in exhaust gas can be decreased, and the NOx concentration in exhaust gas is proportional to the $O_2$ concentration, so that it is controlled to avoid oxygen excessive state.

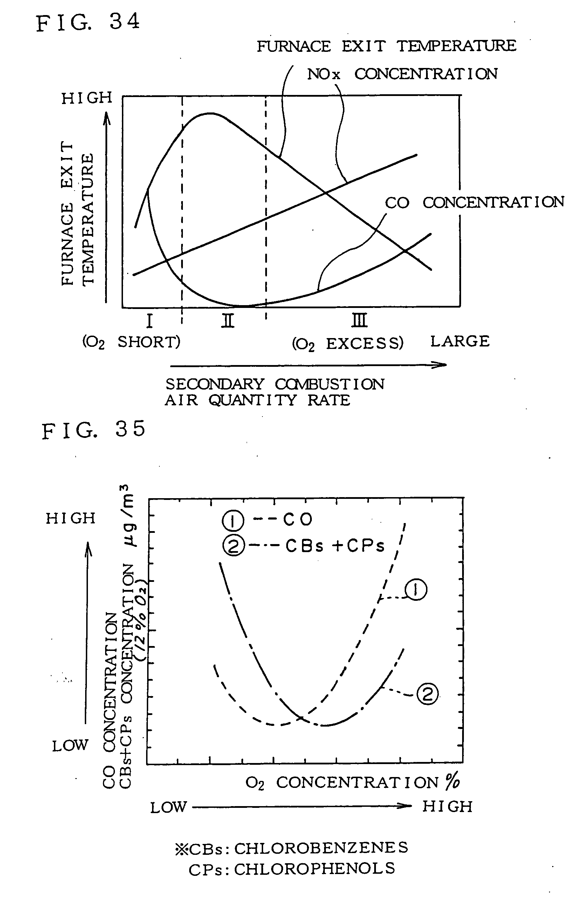

In this combustion control, control of secondary combustion air quantity is based on the analysis result of measured data shown in Fig. 34 and Fig. 35. According to Fig. 34, the NOx concentration has a positive correlation with the secondary combustion air quantity. By contrast, if the secondary combustion air quantity is insufficient, the CO concentration becomes high as the oxygen in the furnace tends to be in shortage as shown in region (1). To the contrary, as shown in region (III), if the secondary combustion air quantity is excessive, the excessive oxygen has a cooling action, and the furnace exit temperature is lowered, and the CO concentration becomes higher. In a region of an appropriate secondary combustion air quantity, the combustion is complete, and the furnace exit temperature is high, and the CO concentration is low. Hence, to suppress CO and NOx simultaneously, it is controlled to keep the secondary combustion air quantity appropriately in region (II) and promote complete combustion. Incidentally, there is a positive correlation between the $O_2$ concentration and secondary combustion air quantity.

In every specific period, the concentration of chlorophenols and chlorobenzenes in exhaust gas and the $O_2$ concentration in exhaust gas are measured, and the data are accumulated in the memory device. On the basis of the average of the sum of the concentration of chlorophenols and chlorobenzenes and the average of $O_2$ concentration measured in every specific period, the mutual relation of $O_2$-CBs, CPs is estimated successively. As shown in Fig. 35, the correlative curve (a) of concentration of chlorophenols and chlorobenzenes as precursors of dioxins and $O_2$ concentration is a convex quadratic curve same as the correlative curve (b) in the case of CO concentration. By this correlative curve (b), the $O_2$ concentration for minimizing the concentration of chlorophenols and chlorobenzenes can be estimated. This minimum $O_2$ concentration is calculated by the minimum $O_2$ concentration operating means 217b, and by reference to this $O_2$ concentration, the control parameter is set, and by controlling the secondary combustion air quantity by the secondary combustion air control means 218, dioxins can be decreased strictly.

According to this method, when controlling the secondary combustion air quantity, by measuring the furnace exit temperature and the $O_2$, CO and NOx concentrations in exhaust gas, the secondary combustion air quantity is controlled more finely depending on the characteristics of furnace exit temperature and concentration of $O_2$, CO and NOx in exhaust gas with respect to the secondary combustion air quantity, and the furnace temperature is stabilized, and also by $_{set}$ting the $O_2$ concentration in exhaust gas within a specified range, elevation of $O_2$ concentration due to shortage of $O_2$, and elevation of NOx and CO concentration due to excess of $O_2$ can be prevented, and moreover generation of precursors of dioxins can be suppressed.

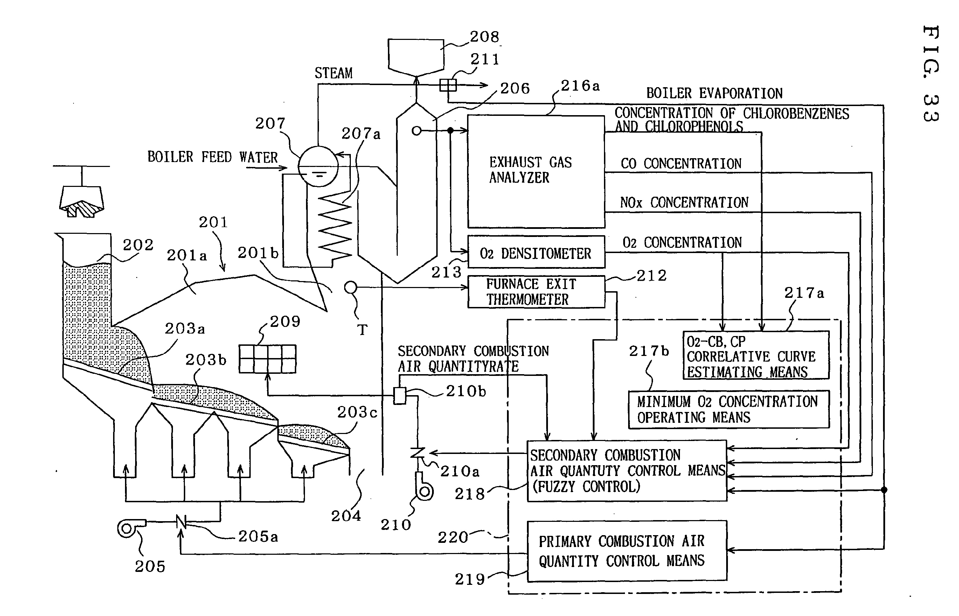

Next is described an example in Fig. 33, which is partially modified from the constitution in Fig. 32. What differs from Fig. 32 lies in the exhaust gas analyzing means, and chlorobenzenes, chlorophenols, CO concentration and NOx concentration are measured and detected by exhaust gas analyzer 216a. Of course, they may be measured by individual devices as in Fig. 32. Therefore, the control of the primary combustion air quantity is same as in Fig. 32.

In control of secondary combustion air quantity in this case, the mutual relation of the $O_2$ concentration and sum of concentration of chlorobenzenes and chlorophenols is determined by the correlative curve estimating means 217a, and from the correlative curve expressed by its quadratic function, the function approximating technique by the minimum $O_2$ concentration operating means 217b, for example, the method of successive least squares is applied, and the $O_2$ concentration for minimizing the summed concentration of CBs and CPs in exhaust gas is calculated, and this control parameter is entered in the secondary combustion air control means 218. The secondary combustion air control means 218 calculates the secondary combustion air quantity by applying a nonlinear control.

The relation obtained by the measured data of the $O_2$ concentration by $O_2$ densitometer 213 and sum of concentration of chlorobenzenes and chlorophenols by the exhaust gas analyzer 216 is as shown in Fig. 35. The formula for calculating the correlative curve may be expressed in a quadratic function shown in formula (101), supposing the $O_2$ concentration to be X and the sum of concentration of chlorobenzenes and chlorophenols to be Y.

$$Y = A_1 X^2 + A_2 X + A_3 \qquad (101)$$

where $A_1$, $A_2$, $A_3$ are correlative curve coefficients.

In formula (101), the correlative curve coefficients $A_1$, $A_2$, $A_3$ for minimizing the function Y are obtained from the formula (102) by the method of successive least squares.

$$\min_{\substack{a \in R^3 \\ i=n-k+1}} \left( \sum_{i=n-k+1}^{n} (\overline{Yi} - a^T \overline{Xi})^2 \right) \tag{102}$$

$$a = (A_1 \ A_2 \ A_3)^T$$

$$\overline{Xi} = (\overline{Xi}^2 \ \overline{Xi}^1)^T$$

where $\overline{Yi}$ : i-th average of sum of concentration of chlorobenzenes and chlorophenols, and $\overline{Xi}$ : i-th average of $O_2$ concentration.

Formula (102) can operate and process for determining the correlative curve coefficients $A_1$, $A_2$, $A_3$ for minimizing the function Y, but the closest k pieces of data, when there are n pieces of averaged data of the $O_2$ concentration and sum of concentration of chlorobenzenes and chlorophenols. From this approximation curve, supposing the optimum $O_2$ concentration for minimizing the sum of concentration of chlorobenzenes and chlorophenols to be $X_{o2}$, the optimum $O_2$ concentration $X_{o2}$ is determined in formula (103).

$$X_{o2} = -A_2 / 2A_1 \tag{103}$$

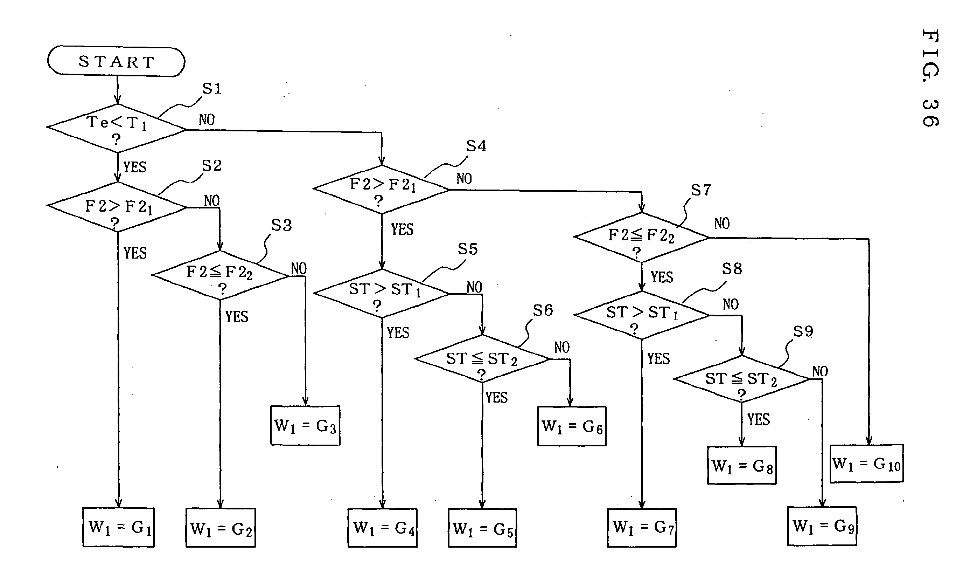

The optimum $O_2$ concentration $X_{o2}$ is entered in the secondary combustion air control means 218 as target value of $O_2$ concentration. In this way, the target of the $O_2$ concentration for minimizing the sum of the concentration of chlorobenzenes and chlorophenols can be calculated from the correlative curve estimating means 217a and minimum $O_2$ concentration operating means 217b. In the secondary combustion air control means 218, nonlinear control means is applied. A specific technique of secondary combustion air control is explained by referring to Table 17 and flowchart in Fig. 36.

Table 17

| Control method of secondary combustion air quantity | |
|---|---|
| (1) | When furnace exit temperature is low and secondary combustion air quantity is large → decrease secondary combustion air quantity. |
| (2) | When furnace exit temperature is low and secondary combustion air quantity is small → increase secondary combustion air quantity. |
| (3) | When furnace exit temperature is low and secondary combustion air quantity is adequate → maintain secondary combustion air quantity. |
| (4) | When furnace exit temperature is not low, secondary combustion air quantity is large, and boiler evaporation is large → increase secondary combustion air quantity. |
| (5) | When furnace exit temperature is not low, secondary combustion air quantity is large, and boiler evaporation is small → decrease secondary combustion air quantity. |
| (6) | When furnace exit temperature is not low, secondary combustion air quantity is large, and boiler evaporation is adequate → maintain secondary combustion air quantity. |
| (7) | When furnace exit temperature is not low, secondary combustion air quantity is small, and boiler evaporation is large → decrease secondary combustion air quantity. |
| (8) | When furnace exit temperature is not low, secondary combustion air quantity is small, and boiler evaporation is small → increase secondary combustion air quantity. |
| (9) | When furnace exit temperature is not low, secondary combustion air quantity is small, and boiler evaporation is adequate → maintain secondary combustion air quantity. |
| (10) | When furnace exit temperature is not low and secondary combustion air quantity is adequate → maintain secondary combustion air quantity. |

Table 17   (continued)

| Control method of secondary combustion air quantity | | |
|---|---|---|
| (11) | When CO concentration is high and secondary combustion air quantity is large → decrease secondary combustion air quantity. | |
| (12) | When CO concentration is high and secondary combustion air quantity is small → increase secondary combustion air quantity. | |
| (13) | When $O_2$ concentration is high → decrease secondary combustion air quantity. | |
| (14) | When $O_2$ concentration is low → increase secondary combustion air quantity. | |
| (15) | When NOx concentration is high → decrease secondary combustion air quantity. | |

First, from the measured values, it is sequentially judged if the present combustion state is fitted to the conditions (1) to (15) shown in Table 17. When these conditions are satisfied, the control indicated by arrow (→) is executed. In this execution of control, according to the increment or decrement present for each condition, the secondary combustion air regulator 210a is adjusted by the secondary combustion air control means 218.

A specific operating method of combustion control is explained according to the flowchart shown in Fig. 36 to Fig. 39. Fig. 36 to Fig. 39 are flowcharts expressing the conditions in Table 1.

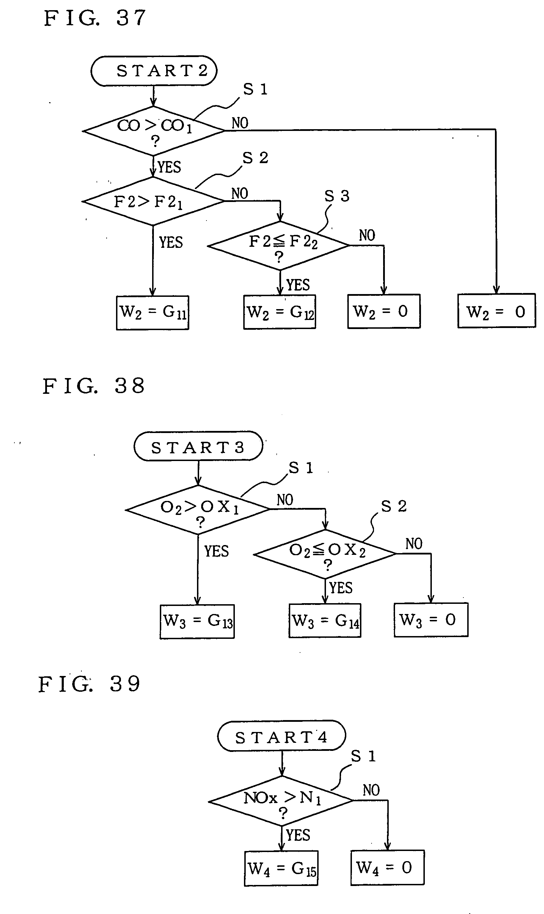

According to the flowchart from START1 in Fig. 36, START2 in Fig. 37, START3 in Fig. 38, and START4 in Fig. 39, it is judged if each condition is satisfied or not in a specific period, and finally values $W_1$ to $W_4$ are determined. From $W_1$ to $W_4$ and previous value $U_{k-1}$ of secondary combustion air quantity, the present value Uk of secondary combustion air quantity is obtained.

In Fig. 36 to Fig. 39, Te is furnace exit temperature, F2 is secondary combustion air quantity, ST is boiler evaporation, $O_2$ is oxygen concentration, NOx is NOx concentration, and CO is CO concentration. Moreover, $T_1$ is an adjustment parameter for judging the lower limit criterion of furnace exit temperature, $F2_1$, $F2_2$ are adjustment parameters for judging the upper limit and lower limit criteria of secondary combustion air quantity, respectively, $ST_1$, $ST_2$ are adjustment parameters for judging the upper limit and lower limit criteria of boiler evaporation, respectively, $OX_1$, $OX_2$ are adjustment parameters for judging the upper limit and lower limit criteria of $O_2$ concentration, respectively, $N_1$ is an adjustment parameter for judging the upper limit criterion of NOx concentration, $CO_1$ is an adjustment parameter for judging the upper limit criterion of CO concentration, and $G_1$ to $G_{15}$ are adjustment parameters for giving increment and decrement of secondary combustion air quantity. Explanation of Fig. 36

At step S1, Te (furnace exit temperature) < $T_1$ (furnace exit temperature lower limit) is judged, and if this condition is satisfied, the process advances to step S2. At step S2, F2 (secondary combustion air quantity) > $F2_1$ (secondary combustion air upper limit) is judged, and if this condition is satisfied, $W_1$ is set at $G_1$. At step S2, if F2 > $F2_1$ is not satisfied, the process advances to step S3, and if F2 ≤ $F2_2$ (secondary combustion air lower limit) is satisfied, $W_1$ is set at $G_2$. At step S3, if F2 ≤ $F2_2$ is not satisfied, $W_1$ is set at $G_3$.

At step S1, if Te < $T_1$ is not satisfied, advancing to step S4 to judge the condition of F2 > $F2_1$, and if satisfied, the process advances to step S5, and if the condition of ST (boiler steam amount) > $ST_1$ (boiler steam amount upper limit) is satisfied, $W_1$ is set at $G_4$. At step S5, if this condition is not satisfied, advancing to step S6 to judge the condition of ST ≤ $ST_2$ (boiler steam amount lower limit), and if satisfied, $W_1$ is set at $G_5$, and if not satisfied, $W_1$ is set at $G_6$.

At step S4, if the condition of F2 > $F2_1$ is not satisfied, advancing to step S7, the condition of F2 ≤ $F2_2$ is judged. If this condition is satisfied, advancing to step S8, if the condition of ST > $St_1$ is satisfied, $W_1$ is set at $G_7$.

At step S8, if the condition of ST > $ST_1$ is not satisfied, advancing to step S9 to judge the condition of ST ≤ $ST_2$, and if satisfied, $W_1$ is set at $G_8$, and if the condition is not satisfied at step S9, $W_1$ is set at $G_9$. If the condition at step S7 is not satisfied, $W_1$ is set at $G_{10}$.

Explanation of Fig. 37

At step S1, the condition of CO (CO concentration) > $CO_1$ is judged, and if this condition is satisfied, advancing to step S2, the condition of F2 > $F2_1$ is judged, and if this condition is satisfied, $W_2 = G_{11}$ is set, and if this condition is not satisfied, the process advances to step S3. At step S3, if the condition of F2 ≤ $F2_2$ is satisfied, $W_2 = G_{12}$ is set, and if not satisfied, $W_2 = 0$ is set. At step S1, if the condition of CO > $CO_1$ is not satisfied, $W_2 = 0$ is set.

Explanation of Fig. 38

At step S1, if the condition of $O_2$ ($O_2$ concentration) > $OX_1$ is satisfied, $W_3 = G_{13}$ is set. If the condition is not satisfied at step S1, the process advances to step $S_2$, and if $O_2$ ≤ $OX_2$ is satisfied, $W_3 = G_{14}$ is set, and if not satisfied at step S2, $W_3 = 0$ is set.

Explanation of Fig. 39

At step S1, if the condition of NOx > $N_1$ is satisfied, $W_4 = G_{15}$ is set, and if this condition is not satisfied, $W_4$ = 0 is set.

Thus, according to the flowcharts in Fig. 36 to Fig. 39, values of $W_1$ to $W_4$ are set, and the present secondary combustion air quantity ($U_k$) is determined in the following formula (104) on the basis of the values of $W_1$ to $W_4$ and the previous secondary combustion air quantity ($U_{k-1}$).

$$U_k = U_{k-1} + W_1 + W_2 + W_3 + W_4 \qquad (104)$$

Meanwhile, $OX_1$ and $OX_2$ are successively determined in formulas (105) and (106) according to the optimum $O_2$ concentration $X_{o2}$ calculated by the correlative curve estimating means 217. Other adjustment parameters are set by manual input. Of course, they may be also entered automatically.

$$OX_1 = X_{o2} + \alpha 1 \qquad (105)$$

$$OX_2 = X_{o2} - \alpha 2 \qquad (106)$$

where $\alpha 1$, $\alpha 2$: adjustment parameters.

Thus, by periodically measuring the boiler evaporation, secondary combustion air quantity, furnace exit temperature, and CO concentration, $O_2$ concentration and NOx concentration by exhaust gas analyzers, a system is incorporated for controlling the secondary combustion air quantity by nonlinear control means on the basis of these measured values. Furthermore, by exhaust gas analyzers of continuous or semicontinuous analyzers of chlorobenzenes and chlorophenols in exhaust gas, on the basis of the sum of the measured values and the measured value by $O_2$ densitometer, there is also a function of calculating the evaluation formula of mutual relation periodically by the method of successive least squares, and successively correcting the control parameter of $O_2$ concentration in the nonlinear control means on the basis thereof. As a result, generation of NOx and unburnt components, especially dioxins, in the exhaust gas in the refuse incinerator can be suppressed.

The process of the refuse incinerator is a multi-variable interference system accompanied by nonlinear characteristic, and it is very difficult to apply the modern control theory based on linear control, but an extremely favorable control is possible by using the nonlinear control technique mentioned above.

A further different control method is explained while referring to Fig. 33. Herein, the mutual relation of the $O_2$ concentration and sum of concentration of CBs and CPs is calculated by the correlative curve estimating means (approximate curve calculating means) 217a by a function approximation technique. In the least $O_2$ concentration operating means 217b, a method of weighted successive least squares for weighting depending on the time by measuring periodically is applied, and fuzzy control means is applied in the secondary combustion air control means 218 as explained below.

The relation obtained from the measured data of $O_2$ concentration in exhaust gas and sum of concentration of chlorobenzenes and chlorophenols is expressed in formula (101).

The corrective curve coefficients $A_1$, $A_2$, $A_3$ for minimizing the sum Y of CBs and CPs is obtained by the method of successive least squares shown in formula (107).

$$\min_{a \in R^3} \left( \sum_{i=n-k+1}^{n} (\lambda^{n-1} (\overline{Yi} - a^T \overline{Xi})^2) \right) \qquad (107)$$

$$a = (A_1\ A_2\ A_3)^T$$

$$\overline{Xi} = (\overline{Xi}^2\ \overline{Xi}^1)^T$$

where $Yi$ : i-th average of sum of concentration of chlorobenzenes and chlorophenols, $\overline{Xi}$ : i-th average of $O_2$ concentration, $\lambda$: negligent factor ($0 < \lambda \leq 1$).

Formula (107) suggests that, if there are n pieces of averaged data of $O_2$ concentration and sum of concentration of chlorobenzenes and chlorophenols, it is possible to operate to determine the correlative curve coefficient by k pieces of data in the close vicinity. Moreover, by using the negligent factor $\lambda$, fresh data is weighted heavily and old data is weighted lightly. As the negligent factor $\lambda$, usually, a value in a range of 0.90 to 0.95 is used. When the negligent factor $\lambda$ is 1, formula (107) is same as the conventional method of successive least squares. As a result, depending on the recent tendency, the optimum $O_2$ can be obtained from the mutual relation. From the obtained approximation curve, the optimum $O_2$ concentration $X_{o2}$ for minimizing the sum of concentration of chlorobenzenes and chlorophenols can be determined in formula (108).

$$X_{o2} = -A_2/2A_1 \qquad\qquad (108)$$

The optimum $O_2$ concentration $X_{o2}$ is transferred to the secondary combustion air control means 218 as the target value of $O_2$ concentration.

Next, applying a fuzzy control, a specific technique of secondary combustion air control is described below. Table 18 shows fuzzy rules for execution of secondary combustion air control by fuzzy control, and Table 19 sums up fuzzy rules (1) to (18) in Table 18.

Table 18

| | Fuzzy control method of secondary combustion air quantity |
|---|---|
| (1) | When furnace exit temperature is low<br>$\rightarrow$ decrease secondary combustion air quantity. |
| (2) | When furnace exit temperature is slightly low and secondary combustion air quantity deviation is low<br>$\rightarrow$ increase secondary combustion air quantity. |
| (3) | When furnace exit temperature is slightly low and secondary combustion air quantity deviation is high<br>$\rightarrow$ decrease secondary combustion air quantity. |
| (4) | When furnace exit temperature is slightly low and secondary combustion air quantity deviation is adequate<br>$\rightarrow$ maintain secondary combustion air quantity. |
| (5) | When furnace exit temperature is adequate, steam deviation is high, and secondary combustion air quantity deviation is low<br>$\rightarrow$ decrease secondary combustion air quantity. |
| (6) | When furnace exit temperature is adequate, steam deviation is low, and secondary combustion air quantity deviation is low<br>$\rightarrow$ increase secondary combustion air quantity. |
| (7) | When furnace exit temperature is adequate, steam deviation is high, and secondary combustion air quantity deviation is high<br>$\rightarrow$ increase secondary combustion air quantity. |
| (8) | When furnace exit temperature is adequate, steam deviation is low, and secondary combustion air quantity deviation is high<br>$\rightarrow$ decrease secondary combustion air quantity. |
| (9) | When furnace exit temperature is adequate, steam deviation is high, secondary combustion air quantity deviation is adequate, and $O_2$ concentration is high<br>$\rightarrow$ decrease secondary combustion air quantity. |
| (10) | When furnace exit temperature is adequate, steam deviation is high, secondary combustion air quantity deviation is adequate, and $O_2$ concentration is adequate<br>$\rightarrow$ increase secondary combustion air quantity. |
| (11) | When steam deviation is low and secondary combustion air quantity deviation is adequate<br>$\rightarrow$ maintain secondary combustion air quantity. |
| (12) | When NOx concentration is high<br>$\rightarrow$ decrease secondary combustion air quantity. |
| (13) | When furnace exit temperature is adequate and CO concentration is high<br>$\rightarrow$ increase secondary combustion air quantity. |
| (14) | When furnace exit temperature is slightly low and CO concentration is high<br>$\rightarrow$ increase secondary combustion air quantity. |

Table 18   (continued)

| Fuzzy control method of secondary combustion air quantity | | |
|---|---|---|
| (15) | When $O_2$ concentration is low | |
| | $\rightarrow$ increase secondary combustion air quantity. | |
| (16) | When $O_2$ concentration is very high | |
| | $\rightarrow$ decrease secondary combustion air quantity. | |
| (17) | When CO concentration is adequate and NOx concentration is adequate | |
| | $\rightarrow$ maintain secondary combustion air quantity. | |
| (18) | When $O_2$ concentration is slightly low | |
| | $\rightarrow$ increase secondary combustion air quantity. | |

Table 19

| Rule | | Antecedent | | | | | | Consequent |
|---|---|---|---|---|---|---|---|---|
| No | Goodness of fit | Furnace exit temperature | Steam deviation | $F_2$ deviation | CO concentration | NOx concentration | $O_2$ concentration | $F_2$ correction |
| (1) | $Z_1$ | Low ($a_1$) | | | | | | Decrease 1 ($V_1$) |
| (2) | $Z_2$ | Slightly low ($a_2$) | | Low ($c_1$) | | | | Increase 1 ($V_2$) |
| (3) | $Z_3$ | Slightly low ($a_2$) | | High ($c_3$) | | | | Decrease 2 ($V_3$) |
| (4) | $Z_4$ | Slightly low ($a_2$) | | Median ($c_2$) | | | | Maintain 1 ($V_4$) |
| (5) | $Z_5$ | Adequate ($a_3$) | High ($b_2$) | Low ($c_1$) | | | | Decrease 3 ($V_5$) |
| (6) | $Z_6$ | Adequate ($a_3$) | Low ($b_1$) | Low ($c_1$) | | | | Increase 2 ($V_6$) |
| (7) | $Z_7$ | Adequate ($a_3$) | High ($b_2$) | High ($c_3$) | | | | Increase 3 ($V_7$) |
| (8) | $Z_8$ | Adequate ($a_3$) | Low ($b_1$) | High ($c_3$) | | | | Decrease 4 ($V_8$) |
| (9) | $Z_9$ | Adequate ($a_3$) | High ($b_2$) | Median ($c_2$) | | | High ($f_4$) | Decrease 5 ($V_9$) |

EP 1 382 906 A2

| | | | | | | | | |
|---|---|---|---|---|---|---|---|---|
| (10) | $Z_{10}$ | Adequate ($a_3$) | High ($b_2$) | Median ($c_2$) | | | Adequate ($f_3$) | Increase 4 ($V_{10}$) |
| (11) | $Z_{11}$ | | Low ($b_1$) | Median ($c_2$) | | | | Maintain 2 ($V_{11}$) |
| (12) | $Z_{12}$ | | | | | High ($e_2$) | | Decrease 6 ($V_{12}$) |
| (13) | $Z_{13}$ | Adequate ($a_3$) | | | High ($d_2$) | | | Increase 5 ($V_{13}$) |
| (14) | $Z_{14}$ | Slightly low ($a_2$) | | | High ($d_2$) | | | Increase 6 ($V_{14}$) |
| (15) | $Z_{15}$ | | | | | | Low ($f_1$) | Increase 7 ($V_{15}$) |
| (16) | $Z_{16}$ | | | | | | Very high ($f_5$) | Decrease 7 ($V_{16}$) |
| (17) | $Z_{17}$ | | | | Adequate ($d_1$) | Adequate ($e_1$) | | Maintain 3 ($V_{17}$) |
| (18) | $Z_{18}$ | | | | | | Slightly low ($f_2$) | Increase 8 ($V_{18}$) |

EP 1 382 906 A2

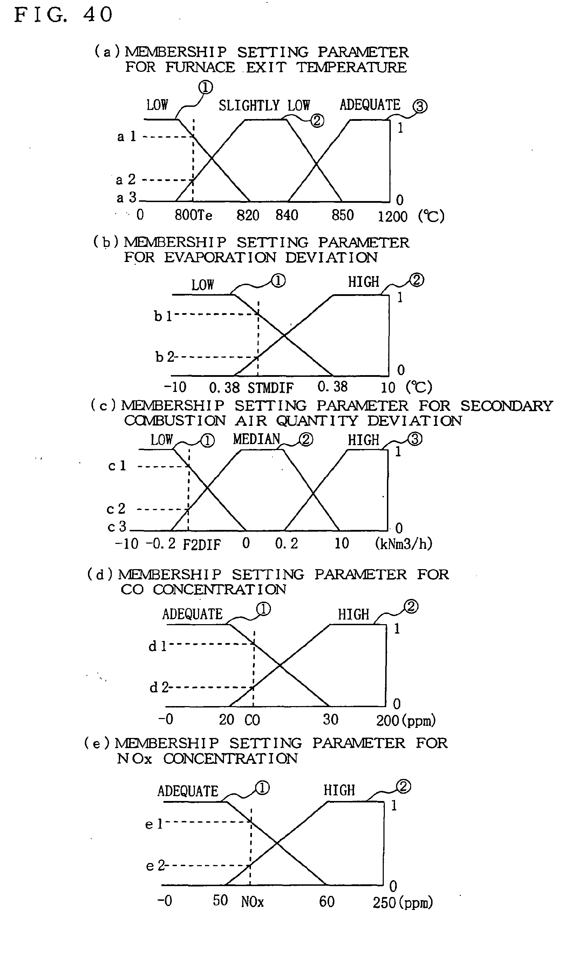

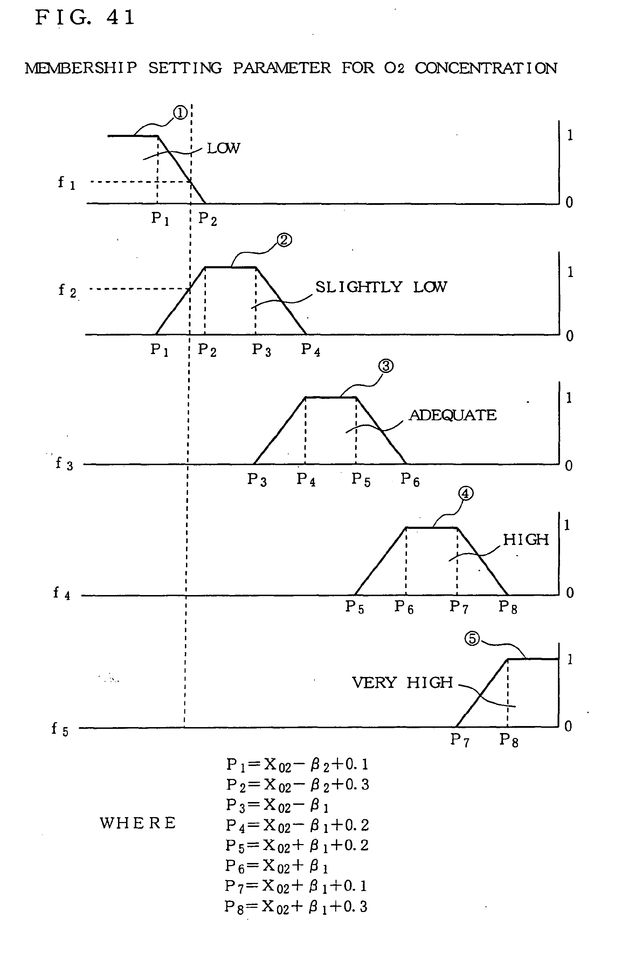

As shown in Table 19, the antecedent (input) includes the furnace exit temperature, evaporation deviation, secondary combustion air quantity deviation, exhaust gas NOx concentration, and exhaust gas $O_2$ concentration, and the consequent (output) is the increment or decrement of secondary combustion air quantity. In operation of each rule, each input item is calculated according to the membership function shown in Fig. 40 and Fig. 41. By the sum of operation results of rules (1) to (18), the increment or decrement of secondary combustion air quantity is calculated. Unless the conditions are satisfied, the output is calculated as zero.

In the secondary combustion air quantity control means 218 in Fig. 32, by the above operation, integrating the determined results of consequent reasoning of each rule, the reasoning result of the entire rules is issued. For integration of reasoning results of the consequent of each rule, a general technique of fuzzy control, such as mini-max center of gravity method or product-sum center of gravity method. The reasoning result obtained in the secondary combustion air quantity control means (fuzzy control means) 218 is issued to the secondary combustion air quantity regulator 210a, and the secondary combustion air quantity is corrected.

An example of application of a singleton method small in quantity of calculation and suited to control system in fuzzy operation is explained below. First, the goodness of fit is calculated by the antecedent membership function. Supposing the furnace exit temperature is Te, in Fig. 40 (a), the goodness of fit for the condition of "furnace exit temperature is low" (1) is $a_1$, and for the condition of "furnace exit temperature is slightly low" (2), the goodness of fit is $a_2$. For the condition of "furnace exit temperature is adequate" (3), the goodness of fit is $a_3$ (0). These membership function parameters are preset.

When the boiler evaporation deviation is STMDIF, in Fig. 40 (b), the goodness of fit for the condition of "evaporation deviation is low" (1) is $b_1$, and for the condition of "evaporation deviation is high" (2), the goodness of fit is $b_2$. These membership function parameters are preset.

When the secondary combustion air quantity deviation is F2DIF, in Fig. 40 (c), the goodness of fit for the condition of "secondary combustion air quantity deviation is low" (1) is $c_1$, and for the condition of "secondary combustion air quantity deviation is adequate" (2), the goodness of fit is $c_2$. For the condition of "secondary combustion air quantity deviation is high" (3), the goodness of fit is $c_3$ (0). These membership function parameter are preset.

When the CO concentration is CO, in Fig. 40 (d), the goodness of fit for the condition of "CO concentration is adequate" (1) is $d_1$, and for the condition of "CO concentration is high" (2), the goodness of fit is $d_2$. These membership function parameters are preset.

When the NOx concentration is NOx, in Fig. 40 (e), the goodness of fit for the condition of "NOx concentration is adequate" (1) is $e_1$, and for the condition of "NOx concentration is high" (2), the goodness of fit is $e_2$. These membership function parameters are preset.

When the $O_2$ concentration is $O_2$, in Fig. 41, the goodness of fit for the condition of "$O_2$ concentration is low" (1) is $f_1$, and for the condition of "$O_2$ concentration is slightly low" (2), the goodness of fit is $f_2$. For the condition of "$O_2$ concentration is adequate" (3), the goodness of fit is $f_3$ (0), for the condition of "$O_2$ concentration is high" (4), the goodness of fit is $f_4$, and for the condition of "$O_2$ concentration is very high" (5), the goodness of fit is $f_5$ (0). These membership function parameters are set on the basis of the optimum $O_2$ concentration $X_{o2}$ calculated by the correlative curve estimating means 217a and minimum $O_2$ concentration operating means 217b. More specifically, in order to suppress the difference between maximum and minimum of fluctuations of $O_2$ concentration within about 1 %, the region of the condition of "$O_2$ concentration is adequate" (3) is set at $X_{o2} \pm \beta_1$%. The region of the condition of "$O_2$ concentration is very high" (5) and condition of "$O_2$ concentration is low" (1) is set about $X_{o2} \pm \beta_2$%. Herein, $\beta_1$ and $\beta_2$ are adjustment parameters, which are set to satisfy the condition of $\beta_1 < \beta_2$.

From these membership functions, the goodness of fit for the rules in Table 19 is calculated sequentially. Since the condition of rule (1) is "furnace exit temperature is low," the goodness of fit $Z_1$ is $a_1$ as shown in formula (109). Similarly, goodness of fit $Z_2$ to $Z_{18}$ to rules (2) to (18) in Table 18 are calculated in the following formulas.

$$Z_1 = a_1 \tag{109}$$

$$Z_2 = a_2 \times c_1 \tag{110}$$

$$Z_3 = a_2 \times c_3 \tag{111}$$

$$Z_4 = a_2 \times c_2 \tag{112}$$

$$Z_5 = a_3 \times b_2 \times c_1 \tag{113}$$

$$Z_6 = a_3 \times b_1 \times c_1 \tag{114}$$

$$Z_7 = a_3 \times b_2 \times C_3 \tag{115}$$

$$Z_8 = a_3 \times b_1 \times c_3 \tag{116}$$

$$Z_9 = a_3 \times b_2 \times c_2 \times f_4 \tag{117}$$

$$Z_{10} = a_3 \times b_2 \times c_2 \times f_3 \tag{118}$$

$$Z_{11} = b_1 \times c_2 \tag{119}$$

$$Z_{12} = e_2 \tag{120}$$

$$Z_{13} = a_3 \times d_2 \tag{121}$$

$$Z_{14} = a_2 \times d_2 \tag{122}$$

$$Z_{15} = f_1 \tag{123}$$

$$Z_{16} = f_5 \tag{124}$$

$$Z_{17} = d_1 \times e_1 \tag{125}$$

$$Z_{18} = f_2 \tag{126}$$

Next, for reasoning the consequent, changes of secondary combustion air quantity $V_1$ to $V_{18}$ are determined. By reasoning according to formula (127), the reasoning result W is obtained.

$$W = \frac{\sum\limits_{i=1}^{18} Z_i \times V_i}{\sum\limits_{i=1}^{18} Z_i} \tag{127}$$

Finally, from the reasoning result W and the preceding value ($U_{k-1}$) of the secondary combustion air quantity output value, the present value ($U_k$) of secondary combustion air quantity output is obtained.

$$U_k = U_{k-1} + W \qquad (128)$$

Thus, by the secondary combustion air quantity $U_k$ issued from the secondary combustion air control means 218, the secondary combustion air regulator 210a is manipulated, and NOx and unburnt components in exhaust gas are suppressed, and generation of dioxins is suppressed.

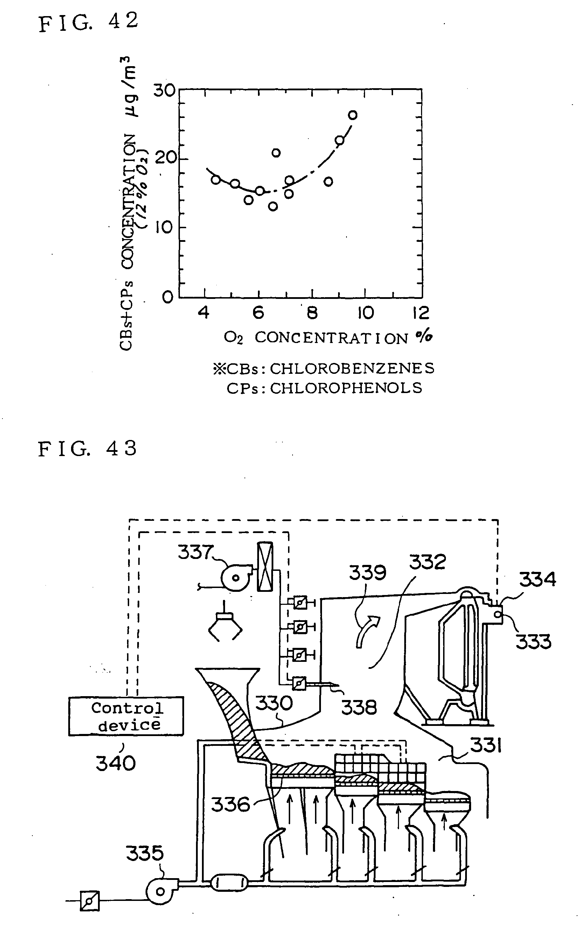

When the relation of the measured $O_2$ concentration and the sum of concentration of chlorobenzenes and chlorophenols is applied in the second control method using the apparatus in Fig. 33, by solving the optimum $O_2$ concentration by the method of successive least squares, the correlative curve is indicated by a single dot chain line in Fig. 42. Supposing the $O_2$ concentration to be X and the sum of concentration of chlorobenzenes and chlorophenols to be Y, the approximation is expressed in formula (129).

$$Y = 0.8193X^2 - 9.9907X + 45.525 \qquad (129)$$

At this time, from formula (129), the optimum $O_2$ concentration $X_{o2}$ for minimizing Y is understood to be about 6.1 %. In the fuzzy control of secondary combustion air quantity, the antecedent membership function of $O_2$ concentration is composed on the basis of $X_{o2}$. To suppress the difference between maximum and minimum of fluctuations of $O_2$ concentration around 1%, when adjustment parameters $b_1$ and $b_2$ in the embodiment are determined respectively at 0.5 and 0.8, the region of condition of "$O_2$ concentration is adequate" is 6.1±0.5%. The region of condition of "$O_2$ concentration is very high" and condition of "$O_2$ concentration is low" is 6.1±0.8%. On the basis of these results, the secondary combustion air quantity is controlled.

Thus, in this example, the secondary combustion air quantity is controlled by fuzzy control on the basis of periodic measurements of boiler evaporation, secondary combustion air quantity, furnace exit temperature, and CO concentration, $O_2$ concentration and NOx concentration detected by exhaust gas analyzers. Moreover, on the basis of the sum of measured values of chlorobenzenes and chlorophenols in exhaust gas by continuous or semicontinuous analyzer and measured value of $O_2$ concentration, the evaluation formula of mutual relation of $O_2$-CB, CP is periodically calculated by the method of successive least squares, and the control parameter of $O_2$ concentration in the fuzzy control is corrected successively. As a result, generation of NOx and unburnt components, in particular, dioxins in exhaust gas is suppressed.

In the present invention, if the sum of concentration of chlorobenzenes and chlorophenols which are precursors of dioxins contained in the exhaust gas in the refuse incinerator is in a low concentration region, its correlative relation with $O_2$ concentration is recognized, and therefore in order to suppress dioxins strictly, the combustion is controlled by entering the measured values of concentration of chlorobenzenes and chlorophenols by on-line or on-site measurement directly into the control device. In such combustion control of refuse incinerator, it is a multiple-variable interference system accompanied by nonlinear characteristic, and by applying the fuzzy control, the control rules can be verbally described, adjustment of parameters is easy, and the secondary combustion control amount can be controlled finely.

When estimating the mutual relation by approximate curve, the mutual characteristic shown in Fig. 35 shows that the approximate curve formula can be sufficiently realized by quadratic function. Examples of calculating method of approximate curve include the method of successive least squares (including the time-dependent weighting type), expansion into continued fraction, spline approximation, Taylor series approximation, Lagrange interpolation and others. By these techniques, by estimating the $O_2$ concentration for minimizing the concentration of chlorophenols and chlorobenzenes from the obtained curves, generation of dioxins can be controlled at high precision.

**Claims**

**1.** A combustion control method of a refuse incinerator (201) for burning refuse by utilising primary combustion air blown in from fire grates (203a,203b,203c) and secondary combustion air blown in above said fire grates, wherein a quantity of said secondary combustion air is controlled by control parameters such as a steam generation amount generated from a boiler (207) installed in said refuse incinerator, the secondary combustion air quantity, a temperature at an exit of the incinerator, and CO concentration, $O_2$ concentration and NOx concentration in exhaust gas, so as to suppress generation of NOx in the exhaust gas, and said quantity of secondary combustion air is adjusted in accordance with the $O_2$ concentration for minimising the concentration of precursors of dioxins estimated from the mutual relation of the concentration of said precursors of dioxins and $O_2$ concentration in said exhaust gas, so as to suppress generation of dioxins in said exhaust gas.

2. A combustion control method of a refuse incinerator according to claim 1, wherein said precursors of dioxins are chlorobenzenes and chlorophenols in said exhaust gas, and from the mutual relation between the sum of the concentration of these and $O_2$ concentration in said exhaust gas, the $O_2$ concentration for minimising the sum of the concentration of said chlorobenzenes and said chlorophenols is estimated.

3. A combustion control method of a refuse incinerator according to claim 1, wherein said quantity of secondary combustion air is calculated by non-linear control to suppress generation of NOx in said exhaust gas, the concentration of said precursors of dioxins, that is, chlorobenzenes and chlorophenols is measured by a continuous or semi-continuous exhaust gas analyser (216) of a mutual relation between the sum of the concentration of these and $O_2$ concentration is periodically calculated by a function approximating method, the $O_2$ concentration for minimising the concentration of said chlorobenzenes and said chlorophenols is calculated, the control parameter of $O_2$ concentration is sequentially corrected, and non-linear control is executed to adjust said quantity of secondary combustion air.

4. A combustion control method of a refuse incinerator according to claim 3 wherein said non-linear control is fuzzy control.

5. A combustion control apparatus of a refuse incinerator (201) comprising primary combustion control means (205) for feeding primary combustion air into the refuse incinerator to burn combustibles in the incinerator, and controlling an amount of steam generated in a boiler (207) to be stabilised, and secondary combustion air control means (210) for feeding secondary combustion air into the refuse incinerator for afterburning of unburnt components, further comprising: $O_2$ concentration measuring means (213) for detecting $O_2$ concentration in exhaust gas, exhaust gas analysing means (216) for measuring concentration of precursors of dioxins in exhaust gas, correlative curve estimating means (217a) for calculating a mutual relation between the concentration of precursors of dioxins detected by said exhaust gas analysing means and the $O_2$ concentration detected by said $O_2$ concentration measuring means, and operating means (217b) for calculating the $O_2$ concentration for minimising the sum of the concentration of precursors of dioxins from a mutual relation determined by said correlative curve estimating means, wherein a quantity of the secondary combustion air is calculated by said secondary combustion control means by making use of control parameters on the basis of the $O_2$ concentration calculated by said operating means, and said quantity is supplied into the incinerator to suppress generation of dioxins in exhaust gas.

6. A combustion control apparatus of a refuse incinerator according to claim 5, wherein said precursors of dioxins are chlorobenzenes and chlorophenols.

7. A combustion control apparatus of a refuse incinerator according to claim 5, wherein said secondary combustion air control means is to measure periodically the generated boiler steam amount, the quantity of secondary combustion air, a temperature at an exit (206) of the incinerator, and CO concentration, $O_2$ concentration and NOx concentration in exhaust gas, and control the quantity of secondary combustion air on the basis of each measurement, said exhaust gas analysing means is a continuous or semi-continuous analyser for measuring chlorobenzenes and chlorophenols in exhaust gas, said correlative curve estimating means is to determine the mutual relation on the basis of the sum of the measured chlorobenzenes and chlorophenols and measure $O_2$ concentration, said operating means is to calculating the $O_2$ concentration for minimising the sum of the concentration of chlorobenzenes and chlorophenols in exhaust gas from said mutual relation, and by sequentially correcting the control parameters for calculating the secondary combustion air on the basis of the $O_2$ concentration calculated by said operating means, the quantity of secondary combustion air is calculated by said secondary combustion air control means, and said quantity is supplied into the incinerator to thereby suppress generation of dioxins in exhaust gas.

8. A combustion control apparatus of a refuse incinerator according to any one of claims 5 to 7, wherein said secondary combustion air control means makes use of fuzzy control.

FIG. 1

FIG. 2

(a)

(b)

FIG. 3

(a)

(b)

F I G. 4

(a)

(b)

F I G. 5

(a)

(b)

FIG. 6

FIG. 7

FIG. 8

FIG. 9

FURNACE EXIT TEMPERATURE
CO CONCENTRATION

FIG. 10

# FIG. 11

(a) FURNACE EXIT TEMPERATURE

(b) CO CONCENTRATION

(c) NOx CONCENTRATION

FIG. 12

```
              ┌─────────────┐
              │  START      │
              └──────┬──────┘
                     │                S1
                     ▼
                  ╱─────────╲      N
                 ◁ T < Tset₁ ▷──────────────┐
                  ╲─────────╱               │
                     │ Y                    │
                     │                      ▼        S2
                     │                   ╱──────────╲     N
                     │                  ◁ NOx>NOxset ▷──────────────┐
                     │                   ╲──────────╱               │
                     │                      │ Y     S3              │        S4
                     │                      ▼                       ▼
                     │                   ╱─────────╲  N          ╱─────────╲  N
                     │                  ◁ T > Tset₂ ▷──┐        ◁ T > Tset₂ ▷──┐
                     │                   ╲─────────╱    │        ╲─────────╱    │
                     │                      │ Y         │           │ Y        │
                     ▼                      ▼           ▼           ▼          ▼
              ┌─────────┐          ┌─────────┐  ┌─────────┐  ┌─────────┐  ┌─────────┐
              │ dv = v1 │          │ dv = v2 │  │ dv = v0 │  │ dv = u3 │  │ dv = 0  │
              └─────────┘          └─────────┘  └─────────┘  └─────────┘  └─────────┘
```

FIG. 13

(a) FURNACE EXIT
    TEMPERATURE

LOW

ADEQUATE

HIGH

(b) NOx CONCENTRATION

ADEQUATE

HIGH

EP 1 382 906 A2

FIG. 14

(a)

(b)

FIG. 15

FIG. 16

# FIG. 17

(a) O₂ CONCENTRATION

(b) CO CONCENTRATION

(c) NOx CONCENTRATION

FIG. 18

FIG. 19

(a) $O_2$ CONCENTRATION

(b) NOx CONCENTRATION

Fig 20

FIG. 21

FIG. 22

FIG. 23

FURNACE EXIT TEMPERATURE

NOx CONCENTRATION

CO CONCENTRATION

SECONDARY COMBUSTION AIR QUANTITY RATE

WATER SPRAY AMOUNT

FIG. 24

FURNACE EXIT TEMPERATURE

NOx CONCENTRATION

CO CONCENTRATION

SECONDARY COMBUSTION AIR
QUANTITY RATE

WATER SPRAY AMOUNT

FIG. 25

TIME RATE OF CO CONCENTRATION EXCEEDING 30 ppm
DURING DXN MEASUREMENT %

FIG. 26

MINIMUM VALUE OF FURNACE EXIT TEMPERATURE
DURING DXN MEASUREMENT ℃

# FIG. 27

(a) FURNACE EXIT
TEMPERATURE

(b) FURNACE EXIT
NOx
CONCENTRATION

FIG. 28

FURNACE EXIT
TEMPERATURE

(a)

FURNACE EXIT
O₂ CONCENTRATION

(b)

PRESENT VALUE OF
SECONDARY COMBUSTION
AIR QUANTITY RATE

(c)

FURNACE EXIT
NOx CONCENTRATION

(d)

FURNACE EXIT
CO CONCENTRATION

(e)

75

FIG. 29

(a)

(b)

FIG. 30

FIG. 31

FIG. 32

EP 1 382 906 A2

F I G. 33

FIG. 34

FURNACE EXIT TEMPERATURE

NOx CONCENTRATION

HIGH

FURNACE EXIT TEMPERATURE

CO CONCENTRATION

I II III

(O₂ SHORT) (O₂ EXCESS) LARGE

SECONDARY COMBUSTION
AIR QUANTITY RATE

FIG. 35

HIGH

CO CONCENTRATION
CBs+CPs CONCENTRATION $\mu g/m^3$
(12% O₂)

① -- CO
② -·- CBs + CPs

①

②

LOW

O₂ CONCENTRATION %

LOW ⟶ HIGH

※CBs: CHLOROBENZENES
　CPs: CHLOROPHENOLS

80

FIG. 36

FIG. 37

FIG. 38

FIG. 39

FIG. 40

(a) MEMBERSHIP SETTING PARAMETER
FOR FURNACE EXIT TEMPERATURE

(b) MEMBERSHIP SETTING PARAMETER
FOR EVAPORATION DEVIATION

(c) MEMBERSHIP SETTING PARAMETER FOR SECONDARY
COMBUSTION AIR QUANTITY DEVIATION

(d) MEMBERSHIP SETTING PARAMETER FOR
CO CONCENTRATION

(e) MEMBERSHIP SETTING PARAMETER FOR
NOx CONCENTRATION

# FIG. 41

MEMBERSHIP SETTING PARAMETER FOR O2 CONCENTRATION

$$P_1 = X_{02} - \beta_2 + 0.1$$
$$P_2 = X_{02} - \beta_2 + 0.3$$
$$P_3 = X_{02} - \beta_1$$
WHERE
$$P_4 = X_{02} - \beta_1 + 0.2$$
$$P_5 = X_{02} + \beta_1 + 0.2$$
$$P_6 = X_{02} + \beta_1$$
$$P_7 = X_{02} + \beta_1 + 0.1$$
$$P_8 = X_{02} + \beta_1 + 0.3$$

# FIG. 42

※CBs: CHLOROBENZENES
CPs: CHLOROPHENOLS

# FIG. 43